# EUROPEAN PATENT APPLICATION

(11) **EP 0 892 554 A2**
(43) Date of publication of application: **20.01.1999**
(21) Application number: 98304809.1
(22) Date of filing: 17.06.1998
(51) Int. Cl.: H04N 7/088

(54) **Program information retrieval apparatus, method and system for retrieving and displaying information of broadcast programs**

(30) Priority: 18.06.1997 JP 161226/97; 19.06.1997 JP 162929/97; 01.08.1997 JP 207540/97; 25.11.1997 JP 323505/97; 07.01.1998 JP 1406/98
(71) Applicant: MATSUSHITA ELECTRIC INDUSTRIAL CO., LTD., Kadoma-shi, Osaka-fu, 571 (JP)
(72) Inventor: Sumiya, Kazutoshi, Akashi-shi, Hyogo-ken 673-0878 (JP); Kino, Hisayuki, Ikoma-gun, Nara-ken 636-0941 (JP); Yamanaka, Kiyokazu, Ashiya-shi, Hyogo-ken 659-0083 (JP); Kawahara, Chihiro, Kadoma-shi, Osaka-fu 571-0067 (JP); Sanada, Norio, Kobe-shi, Hyogo-ken 658-0082 (JP)
(74) Representative: Crawford, Andrew Birkby

(57) **Abstract**

A program information retrieval apparatus which receives, from a broadcasting apparatus, broadcast data which includes program information, retrieves program information from the received broadcast data, and displays the retrieved program information on a display apparatus. Each piece of program information includes attributes, a program identifier, and link information. The attributes characterize each broadcast program and are classified into items. The link information links the present piece of program information to other pieces of program information which include the same attributes, linking for each of the same attributes. The program information retrieval apparatus includes: a reception unit for receiving the broadcast data; a program information storage unit for storing the program information; a control unit for displaying the program information in units of broadcast programs on the display apparatus; and an attribute receiving unit for receiving an attribute specified by the user. The control unit retrieves program information which includes the received attribute using the link information and displays the retrieved program information on the display apparatus for each broadcast program.

## Description

### BACKGROUND OF THE INVENTION

### (1) Field of the Invention

This invention relates to a program information retrieval apparatus, method, and system for retrieving and displaying information of broadcast programs in units of broadcast programs, a recording medium storing a program information retrieval program, and a computer-readable recording medium storing program information, more specifically, to a technique for retrieving program information under reduced loads and in consideration of each user's taste.

### (2) Description of the Prior Art

Recently, satellite broadcasts and cable TV broadcasts have become widespread. This has increased the number of TV or radio broadcast programs available for users. However, the methods of searching for desired program information are lagging behind the increase in the number of broadcast programs. In general, users search for programs in concern on TV/radio program columns on the newspapers or information magazines, namely on "paper" media to obtain information such as a broadcast date or a channel number. Alternatively, users may obtain such information through dedicated apparatuses which display program information sent from broadcasting stations. The users can select desired program information from screens displayed on the apparatuses.

Japanese Laid-Open Patent Application No.8-102922 discloses a reception apparatus which displays a program list on its screen so that users can refer to the list to reserve programs and search for programs of their taste using certain items of program information as retrieval keys.

Japanese Laid-Open Patent Application No.7-297796 discloses an apparatus which identifies the type of each piece of program information using words related to the program types, classifies the program information into a plurality of types, and displays program information for each type.

Japanese Laid-Open Patent Application No.7-303216 discloses an apparatus which stores channel information and broadcast time information for each program, and retrieves program information using a keyword specified by the user. This apparatus also automatically reserves programs for video recording.

Japanese Laid-Open Patent Application No.6-276501 discloses an apparatus which transmits latest program information when the program information has changed so that program reservations are updated.

However, users currently feel more and more difficult and troublesome to use such conventional methods as the number of broadcast programs increases. The above conventional apparatuses have the following problems.
(1) Retrieval of program information using a genre or character name as a retrieval key imposes heavy loads on the information retrieval apparatus since the apparatus searches program information of all programs. It also takes a lot of time for the apparatus to retrieve desired information.
(2) The conventional program information retrieval methods are not efficient since the apparatuses search program information of all programs for each search even if the same program information has once been obtained.
(3) The conventional program information retrieval apparatuses cannot retrieve program information of a plurality of programs that relate to each other in accordance with a certain rule.
(4) These apparatuses cannot retrieve program information based on an information retrieval history which shows the keys used in earlier information retrievals or a list of retrieved program information and the related program names.
(5) The keywords used in these apparatuses are determined beforehand and do not reflect the users tastes.
(6) The amount of information displayed on a screen is far less than that of "paper" media.
(7) These apparatuses update the program information only in terms of the broadcast time and cannot update in relation with, for example, changes in cast or program contents.
(8) These apparatuses cannot display a program list reflecting the users tastes.

### SUMMARY OF THE INVENTION

It is therefore an object of the present invention to provide a program information retrieval apparatus, method, and system for retrieving program information under reduced loads and in consideration of each user's taste, a recording medium storing a program information retrieval program, and a computer-readable recording medium storing program information.

More specifically, the present invention provides: (1) a technique for retrieving program information under reduced loads, (2) a technique not requiring to search program information of all programs for each search, (3) a technique capable to retrieve program information of a plurality of programs that relate to each other in accordance with a certain rule, (4) a technique capable to retrieve program information based on an information retrieval history, (5) a technique capable to efficiently retrieve program information reflecting the users tastes, (6) a technique taking into account the little amount of information displayed on a screen, (7) a technique for supporting the user to select a program by updating the program information reflecting changes over time, and (8) a technique for displaying a program list reflecting the users tastes.

The above objects are fulfilled by a program information retrieval apparatus for receiving, from a broadcasting apparatus, broadcast data which includes a plurality of pieces of program information respectively related to a plurality of broadcast programs, retrieving program information from the received broadcast data, and displaying the retrieved program information on a display apparatus, where each piece of program information includes a plurality of attributes, a program identifier, and link information, the program identifier identifying a present piece of program information including the program identifier, the plurality of attributes characterizing a broadcast program and being classified into a plurality of items, the link information links the present piece of program information to other pieces of program information which include same attributes as the present piece of program information, linking for each of the same attributes, the program information retrieval apparatus including: a reception unit for receiving the broadcast data; a program information storage unit for storing program information included in the received broadcast data; a control unit for displaying the program information in units of broadcast programs on the display apparatus; and an attribute receiving unit for receiving an attribute specified by the user, where the control unit retrieves program information which includes the received attribute using the link information and displays the retrieved program information on the display apparatus for each broadcast program.

With the above construction, loads on the program information retrieval process using the attributes as keys are reduced since the program information is retrieved using the link information included in the information.

In the above program information retrieval apparatus, the link information may include one or more attributes and program identifiers of all pieces of program information including the attributes, the attributes being related to the pieces of program information, where the control unit includes: a first display control unit for displaying the program information in units of broadcast programs on the display apparatus; a retrieval unit for retrieving program identifiers related to the attribute received by the attribute receiving unit from the link information and retrieving pieces of program information identified by the retrieved program identifiers; a second display control unit for displaying the retrieved pieces of program information in units of broadcast programs on the display apparatus.

Also, in the above program information retrieval apparatus, the link information may further include external-data identifiers which identify all pieces of external data including the attributes included in the link information, the attributes being related to the pieces of external data, where the retrieval unit retrieves external-data identifiers related to the attribute received by the attribute receiving unit from the link information stored in the program information storage unit, and the second display control unit displays the retrieved external-data identifiers on the display apparatus.

With such constructions, the user can refer to external data such as information obtained from homepages of the Internet as well the program information created by the broadcasting apparatus to determine whether to reserve a program or the like.

The above objects are also achieved by a computer-readable recording medium storing program information, the computer-readable recording medium being used by a program information retrieval apparatus which retrieves the program information from the computer-readable recording medium in units of broadcast programs and displays the retrieved program information, each piece of the program information including: a program identifier which identifies a present piece of program information including the program identifier, the present piece of program information being related to a broadcast program; a plurality of attributes which characterize the broadcast program and being classified into a plurality of items; and link information which links the present piece of program information to other pieces of program information which include same attributes as the present piece of program information for each of the same attributes.

With the above construction, loads on the program information retrieval process using the attributes as keys are reduced since the program information is retrieved using the link information included in the information.

The above objects are also achieved by a program information retrieval apparatus for retrieving program information characterizing programs in units of programs and displaying the retrieved program information in units of programs, where each piece of program information is related to a program, the program information retrieval apparatus including: a program information hold unit for holding the program information; a link information management unit for generating link information by referring to the program information and managing the generated link information, each piece of the link information relating one program to one or more other programs; a display unit for displaying the program information and the link information in units of programs; and a retrieval unit for retrieving program information of a program selected by a user based on the link information displayed on the display unit, and displaying the retrieved program information on the display unit.

With the above construction, the apparatus generates and manages link information which relates one program to one or more other programs before the information is used by the user. The user can select and obtain desired piece of program information referring to the displayed link information, without difficulty. This does not require searching program information of all programs. Accordingly, the retrieval does not take much time and is not imposed heavy loads.

In the above program information retrieval apparatus, the link information management unit may include: a link information generating unit for generating link information by referring to the program information, each piece of the link information relating one program to one or more other programs; a link information hold unit for holding the link information generated by the link information generating unit; and a link information detection unit for detecting certain pieces of link information among the link information held by the link information hold unit, where the display unit displays the program information retrieved by the retrieval unit and displays the certain pieces of link information detected by the link information detection unit.

With the above construction, the apparatus generates and manages link information which relates one program to one or more other programs before the information is used by the user. The apparatus selects certain pieces of link information for use by te user. The user can select and obtain desired piece of program information referring to the displayed link information, without difficulty. This does not require searching program information of all programs. Accordingly, the retrieval does not take much time and is not imposed heavy loads.

In the above program information retrieval apparatus, each piece of the program information held by the program information hold unit may include a plurality of program attribute group which are each composed of a plurality of program attribute values classified into a plurality of program attribute items, where the link information generating unit generates, for each program attribute value, link information each piece of which relates a program attribute group to one or more other program attribute groups in accordance with a predetermined rule.

With the above construction, the apparatus generates, for each program attribute value, link information each piece of which relates a program attribute group to one or more other program attribute groups in accordance with a predetermined rule. The apparatus selects certain pieces of link information in accordance with a selected program attribute value. The user can select and obtain desired piece of program information referring to the displayed link information, without difficulty. Also, it is possible to previously set rules for generating link information. This does not require searching program information of all programs. Accordingly, the retrieval does not take much time and is not imposed heavy loads. It is also possible to retrieve desired pieces of program information in accordance with a program identifier specified by the user.

The above program information retrieval apparatus may further include: a retrieval history hold unit for holding a retrieval history of the retrieval unit; and a retrieval condition selection unit for selecting one or more program attribute values based on the retrieval history held by the retrieval history hold unit, where the link information detection unit detects one or more pieces of link information related to the program attribute values selected by the retrieval condition selection unit.

With the above construction, the retrieval history is used to select program attribute values or select and display the link information related to the selected program attribute values. Accordingly, program information retrieval based on the retrieval history makes it easy to reach desired pieces of program information.

The above objects are also achieved by a program information retrieval apparatus for retrieving program information characterizing programs in units of programs and displaying the retrieved program information in units of programs, where each piece of program information is related to a program, the program information retrieval apparatus including: a display unit for displaying the program information; a program information hold unit for holding a plurality of pieces of program information for a predetermined amount of information of programs; a viewing history hold unit for holding a viewing history of programs; and a display control unit for displaying the plurality of pieces of program information on the display unit in accordance with the viewing history held by the viewing history hold unit.

With the above construction, a program list reflecting the users tastes is generated based on the viewing history and the generated program list is displayed to support the user to select a program. This enables the apparatus to efficiently retrieve program information reflecting the users tastes and enables the user to efficiently select a program.

In the above program information retrieval apparatus, each of the plurality of pieces of program information held by the program information hold unit may be composed of a plurality of program attributes including a program name, where the viewing history hold unit calculates a viewing frequency for each program attribute of programs having been viewed by a user, and holds the calculated viewing frequency for each program attribute.

With such a construction, program attributes reflecting the users tastes are displayed based on the viewing frequency to support the user to select a program. This enables the apparatus to efficiently retrieve program information reflecting the users tastes.

In the program information retrieval apparatus, the display control unit may display, first, program attributes that have one of the highest viewing frequency and one of a certain viewing frequencies following the highest viewing frequency.

With this construction, users tastes are automatically extracted based on the viewing frequency, and program attributes reflecting the users tastes are displayed in the order of viewing frequency to support the user to select a program. This is an arrangement taking into account the little amount of information displayed on a screen. That is, a program list including best program attributes for the user is displayed reflecting the user's taste which is determined based on the priorities assigned to each user. This helps the user to find its favorite programs and enables the apparatus to efficiently retrieve program information reflecting the users tastes.

The above objects are also achieved by a program information retrieval apparatus for continuously acquiring program information characterizing programs in units of programs and supporting a program selection, the program information retrieval apparatus including: a program information acquisition unit for continuously acquiring latest program information; a program information hold unit for holding the program information acquired by the program information acquisition unit and updating the program information with latest program information each time the program information acquisition unit acquires latest program information; a condition reception unit for receiving a selection condition input by a user, the selection condition being used for selecting programs; a condition hold unit for holding the selection condition received by the condition reception unit; a candidate program information extract unit for extracting candidate program information from the program information held by the program information hold unit each time the program information is updated, the candidate program information being an object of judgment with the selection condition; a condition judgment unit for judging whether the candidate program information extracted by the candidate program information extract unit satisfies the selection condition; and an output unit for outputting at least one of: candidate program information judged to satisfy the selection condition by the condition judgment unit; program names corresponding to the candidate program information judged to satisfy the selection condition; and information identifying programs related to the candidate program information judged to satisfy the selection condition.

With the above construction, the program information satisfying a selection condition input by the user is displayed. This supports the user to select a program by updating the program information reflecting changes over time.

The above objects are also achieved by a program information retrieval apparatus for generating personal program information for each user from program information each piece of which includes program identification information, a program broadcast time, and program content information, the program information retrieval apparatus including: a program information hold unit for holding the program information of a plurality of programs; a priority information hold unit for holding priority information for each user, each piece of the priority information being composed of a priority condition reflecting taste of a user and a priority level; a priority level assigning unit for assigning a priority level to each piece of the program information held by the program information hold unit that satisfies a priority condition included in a same piece of the priority information, and relating each piece of the priority-level-assigned program information to its program identification information; and a personal program information generating unit for generating personal program information for each user by extracting program identification information of programs whose broadcast times overlap each other totally or partially, extracting priority levels related to the extracted program identification information, assigning a priority to each piece of the extracted program identification information in accordance with the extracted priority levels, and arranging the program information of the plurality of programs held by the program information hold unit.

With this construction, the program information is generated for each user's tastes and the generated program information is displayed to support the user to select a program.

### BRIEF DESCRIPTION OF THE DRAWINGS

These and other objects, advantages and features of the invention will become apparent from the following description thereof taken in conjunction with the accompanying drawings which illustrate a specific embodiment of the invention. In the drawings:
FIG.1 shows a schematic representation of a program information retrieval system of the present invention;
FIG.2 is a block diagram showing the construction of the program information retrieval system in Embodiment 1;
FIG.3 shows an example of the broadcast data received in Embodiment 1;
FIG.4 shows an example of the program detailed information broadcast as a part of the broadcast data shown in FIG.3;
FIG.5 shows link item information in Embodiment 1;
FIG.6 shows an item identification code list showing correspondence between items and item identification codes in Embodiment 1;
FIGs.7(a) and (b) show an example of resolving a mismatch in Embodiment 1;
FIG.8 is a schematic representation of a remote controller of Embodiment 1;
FIG.9 shows a program list in Embodiment 1;
FIG.10 shows a program detailed information screen before specification of retrieval in Embodiment 1;
FIG.11 a program detailed information screen as a search result in Embodiment 1;
FIG.12 shows four program detailed information screens to be displayed as a search result and their changes in Embodiment 1:
FIG.13 is a flowchart of the broadcast data creation process performed by the broadcasting apparatus in Embodiment 1;
FIG.14 is a flowchart of processing of the broadcast data by the reception apparatus in Embodiment 1;
FIG.15 is a flow chart showing the information retrieval and reservation processes of the reception apparatus in Embodiment 1;
FIG.16 is a block diagram showing the construction of the program information retrieval system in Embodiment 2;
FIG.17 shows link information including external data identification information in Embodiment 2;
FIG.18 shows a program detailed information screen including a measure with which the user can specify displaying of external data in Embodiment 2;
FIG.19 shows an external data specification screen in Embodiment 2;
FIG.20 is a flow chart of the broadcast data creation process performed by the broadcasting apparatus in Embodiment 2;
FIG.21 is a flow chart of the external data display process performed by the reception apparatus in Embodiment 2;
FIG.22 is a block diagram showing the construction of the program information retrieval apparatus in Embodiment 3;
FIG.23 shows a part of program information;
FIGs.24(a)-(b) show link information;
FIGS.25 (a)-(b) show program information;
FIG.26 is a flow chart of the link information generation process;
FIG.27 shows the link information generated in Embodiment 3;
FIG.28 shows the process of generating link information only for the programs broadcast after a selected program using link information item "same character" in Embodiment 3;
FIG.29 is a block diagram showing the construction of the program information retrieval apparatus in Embodiment 4;
FIG.30 is a flow chart of the link information update process in Embodiment 4;
FIG.31 shows program information;
FIGs.32(a)-(g) show link information;
FIG.33 is a block diagram showing the construction of the program information retrieval apparatus in Embodiment 5;
FIG.34 is a flow chart of the extraction and storage of the finished program information;
FIG.35 is a block diagram showing the construction of the program information retrieval apparatus in Embodiment 6;
FIG.36 shows a retrieval history;
FIG.37 shows program information;
FIG.38 is a block diagram showing the construction of the program information retrieval apparatus in Embodiment 7;
FIGS.39(a)-(b) show program attributes for each broadcasting station;
FIG.40 shows a program list generated in Embodiment 7;
FIG.41 shows a viewing history table after the user views "Single Child;"
FIG.42 shows a viewing frequency table after the user views "Single Child;"
FIGs.43(a)-(c) show a part of the contents of program attribute hold unit 3801 after generating link information between programs which include character "Yamazaki Hiromi;"
FIG.44 is a flow chart of the program list display process in Embodiment 7;
FIG.45 is a flow chart of the link information generation process;
FIG.46 shows the viewing history table before the program "Single Child" is viewed;
FIG.47 shows the viewing frequency table before the program "Single Child" is viewed;
FIG.48 shows a part of the contents of program attribute hold unit 3801 after generating link information between programs which include program "Single Child;"
FIG.49 shows a program list generated in Embodiment 7;
FIG.50 shows a program list generated in Embodiment 7;
FIG.51 is a block diagram showing the construction of the program information retrieval apparatus in Embodiment 8;
FIG.52 shows a program list displayed in Embodiment 8;
FIG.53 is a flow chart of the program list display process in Embodiment 8;
FIG.54 is a block diagram showing the construction of the program information retrieval apparatus in Embodiment 9;
FIG.55 shows a program list displayed in Embodiment 9;
FIG.56 shows that the user selects program "Piano Lesson" as the link destination;
FIG.57 shows a program list displayed in Embodiment 8;
FIG.58 is a flow chart of the program list display process in Embodiment 9;
FIG.59 is a block diagram showing the construction of the program information retrieval apparatus in Embodiment 10;
FIG.60 shows an example of the input unit, remote controller 6001;
FIG.61 shows the viewing frequency of users A and B;
FIG.62 is a flow chart of the user switch process in Embodiment 10;
FIG.63 shows a program list displayed in Embodiment 10;
FIG.64 is a block diagram showing the construction of the program information retrieval apparatus in Embodiment 11;
FIGs.65(a) and (b) show the input units;

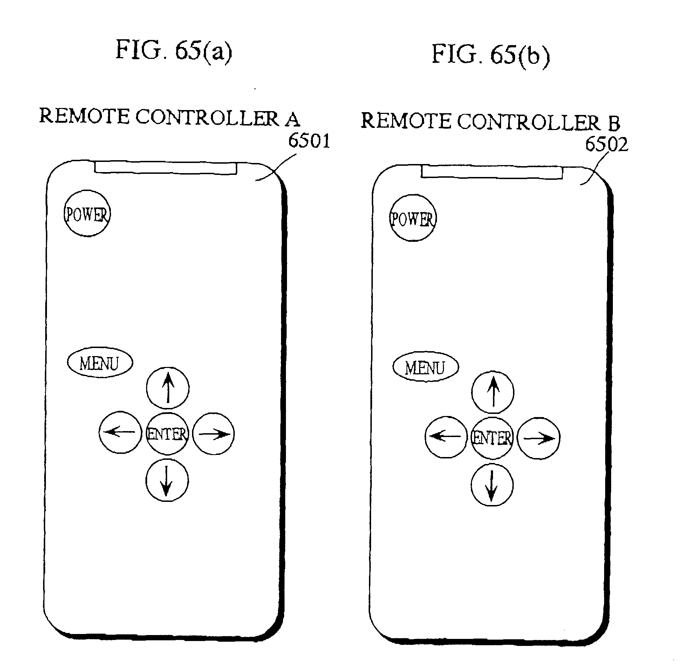

FIG.65(a) shows a remote controller 6501 dedicated to user A;
FIG.65(b) shows a remote controller 6502 dedicated to user B;

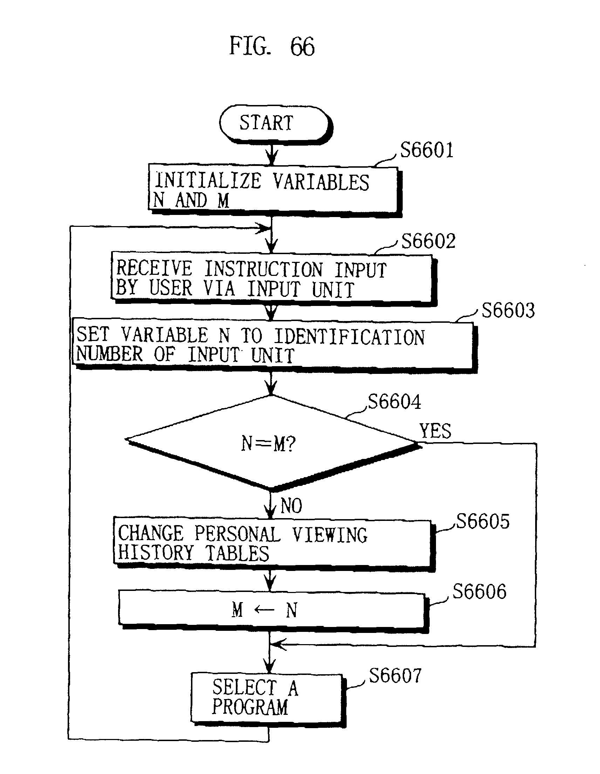

FIG.66 is a flow chart of the user switch process in Embodiment 11;

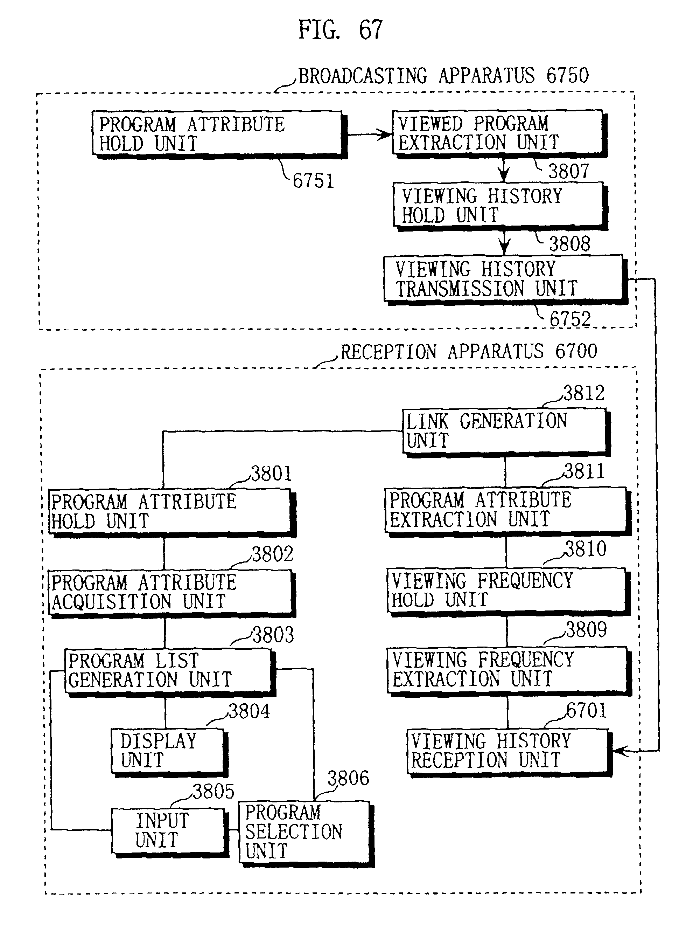

FIG.67 is a block diagram showing the construction of the program information retrieval system in Embodiment 12;

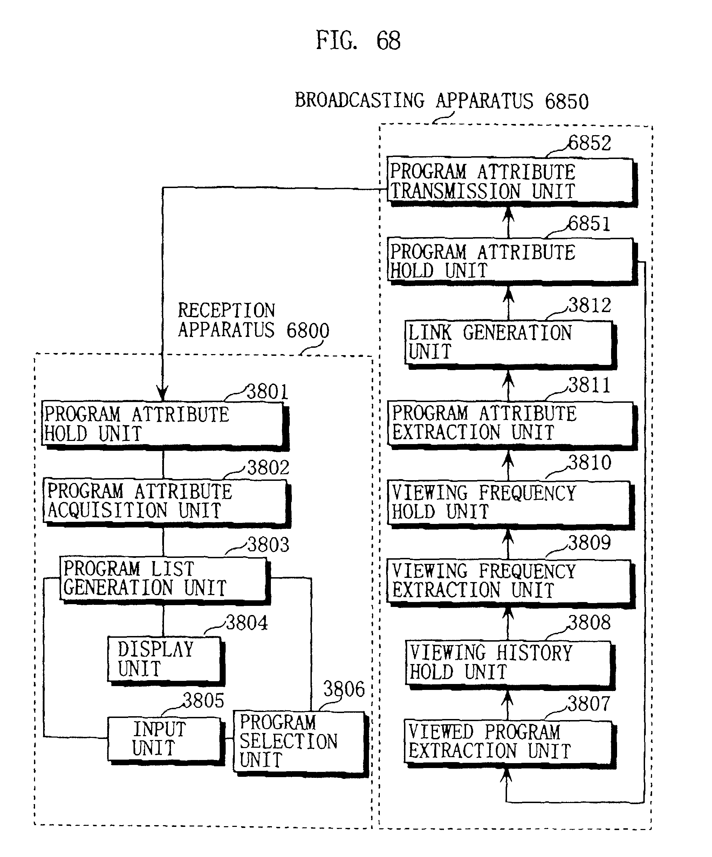

FIG.68 is a block diagram showing the construction of the program information retrieval system in Embodiment 13;

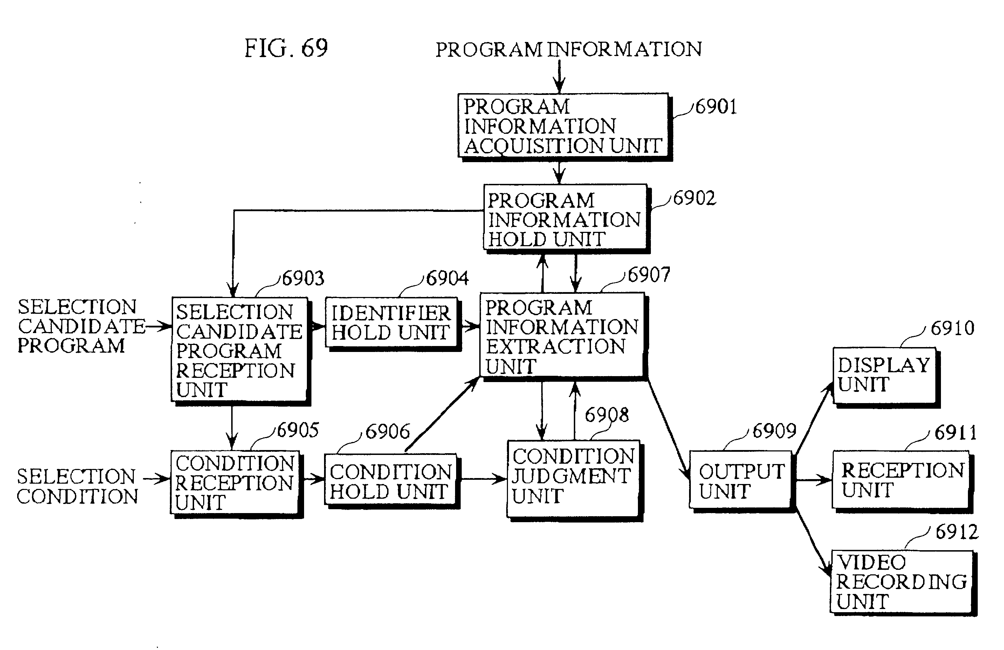

FIG.69 is a block diagram showing the construction of the program information retrieval apparatus of Embodiment 14.

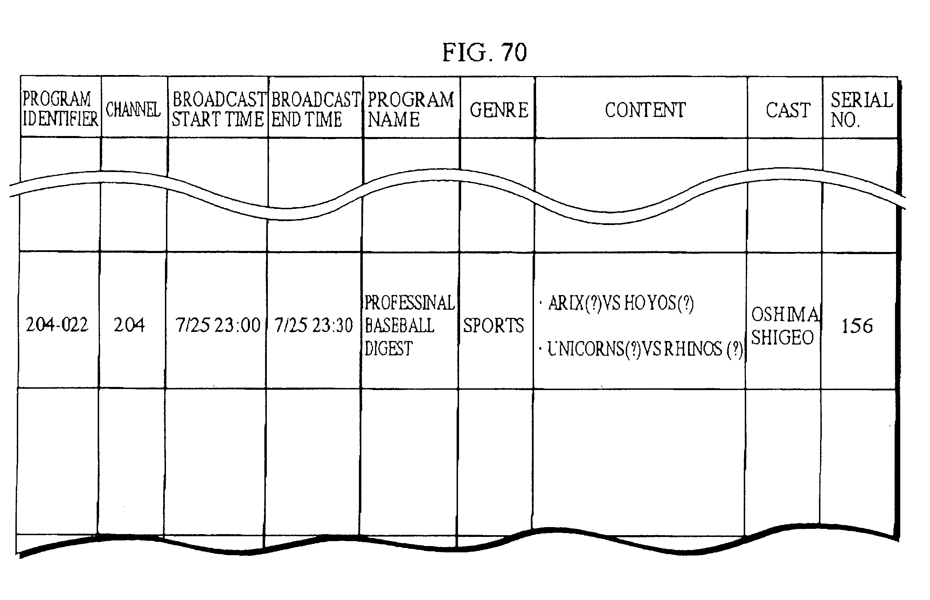

FIG.70 shows a part of the program information acquired by program information acquisition unit 6901;

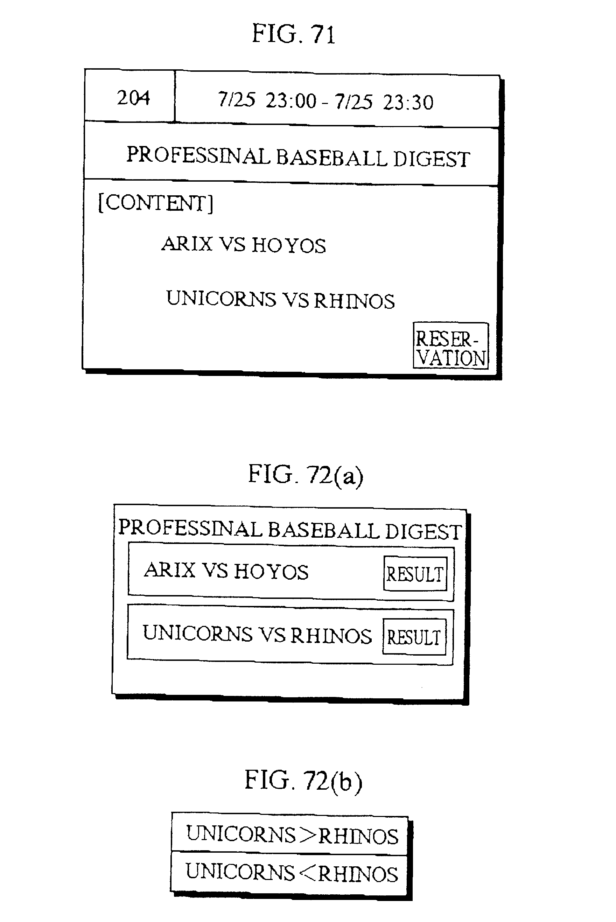

FIG.71 shows a screen generated based on the program information shown in FIG.70;
FIGs.72(a) and 72(b) show selection condition input screens;

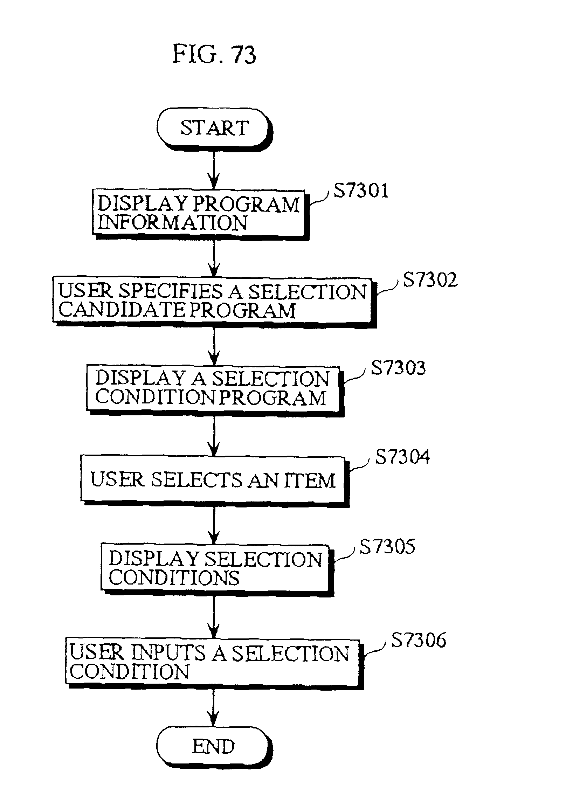

FIG.73 is a flow chart of a process in which the selection candidate program reception unit 6903 and condition reception unit 6905 receives notification of the selection candidate program and selection condition input by the user;

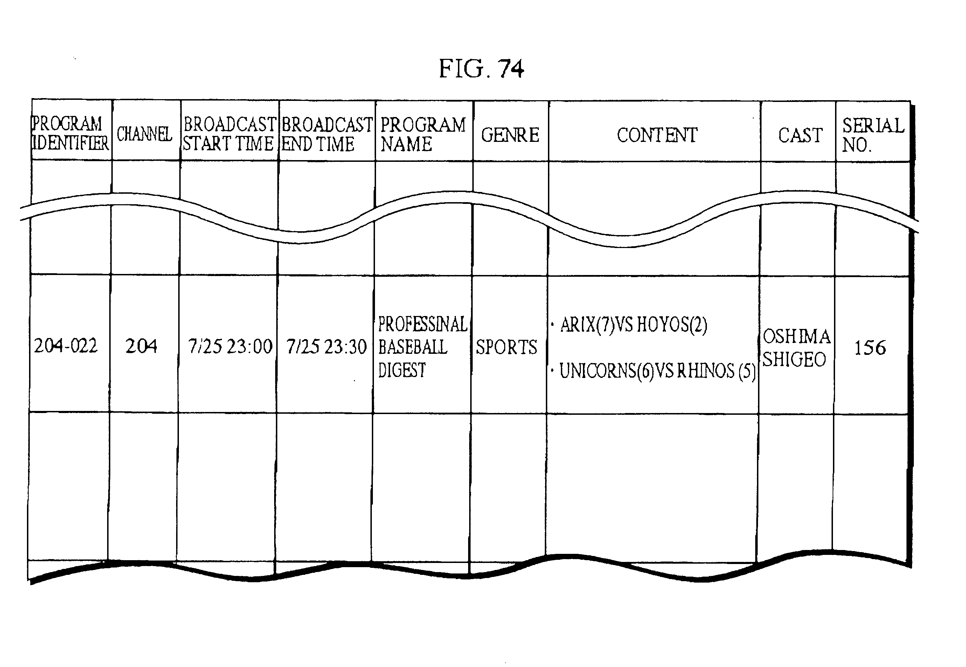

FIG.74 shows a part of the program information acquired by program information acquisition unit 6901;

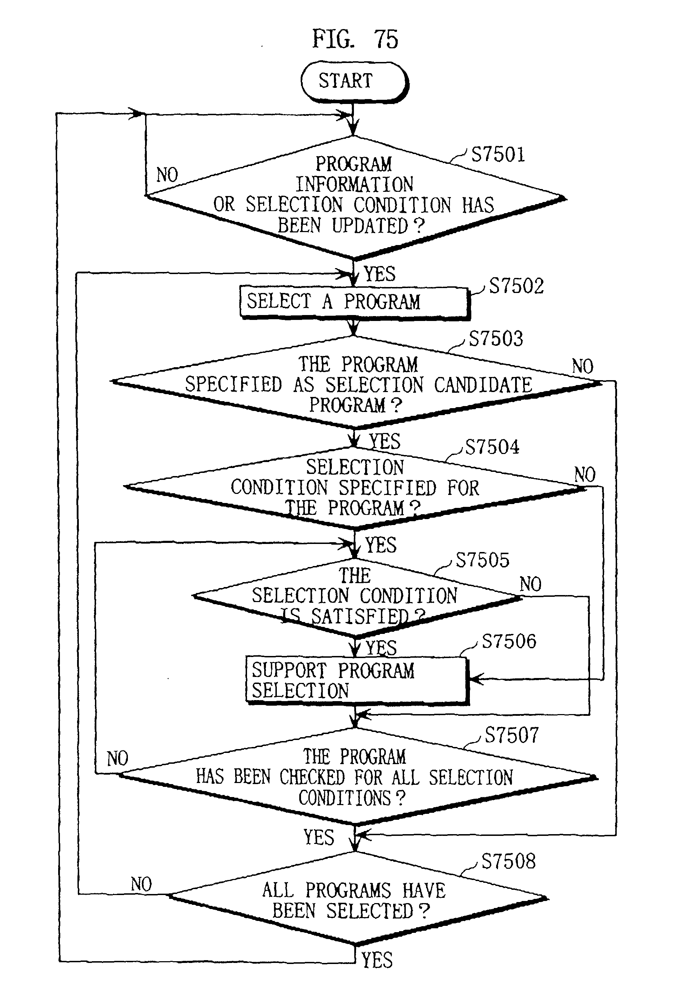

FIG.75 is a flow chart of a process in which the program information extraction unit 6907 extracts program information and the condition judgment unit 6908 makes a judgment concerning the selection condition;

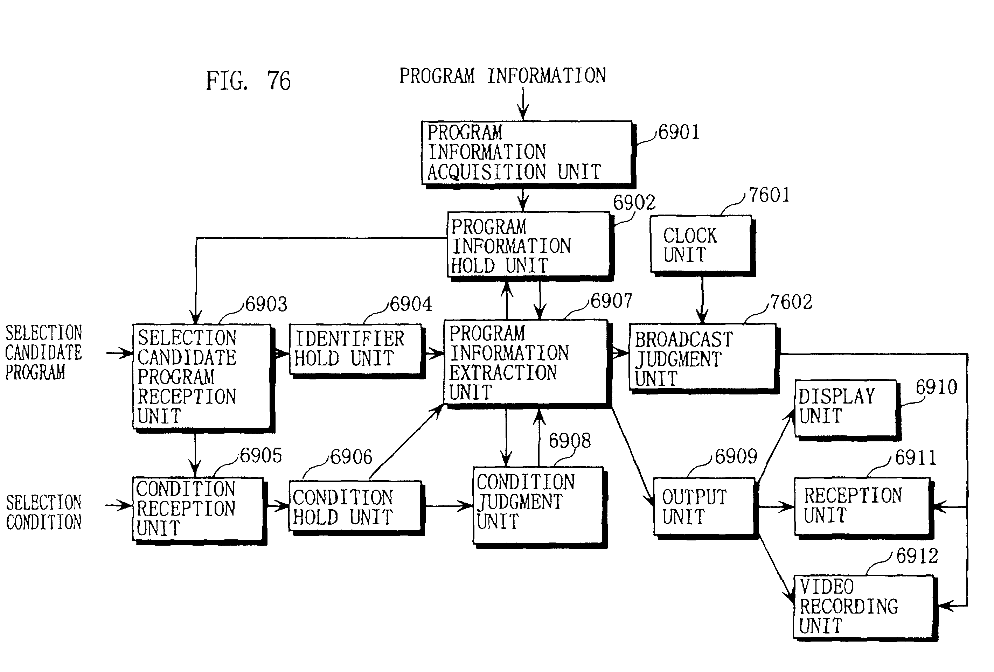

FIG.76 is a block diagram showing the construction of the program information retrieval apparatus of Embodiment 15;

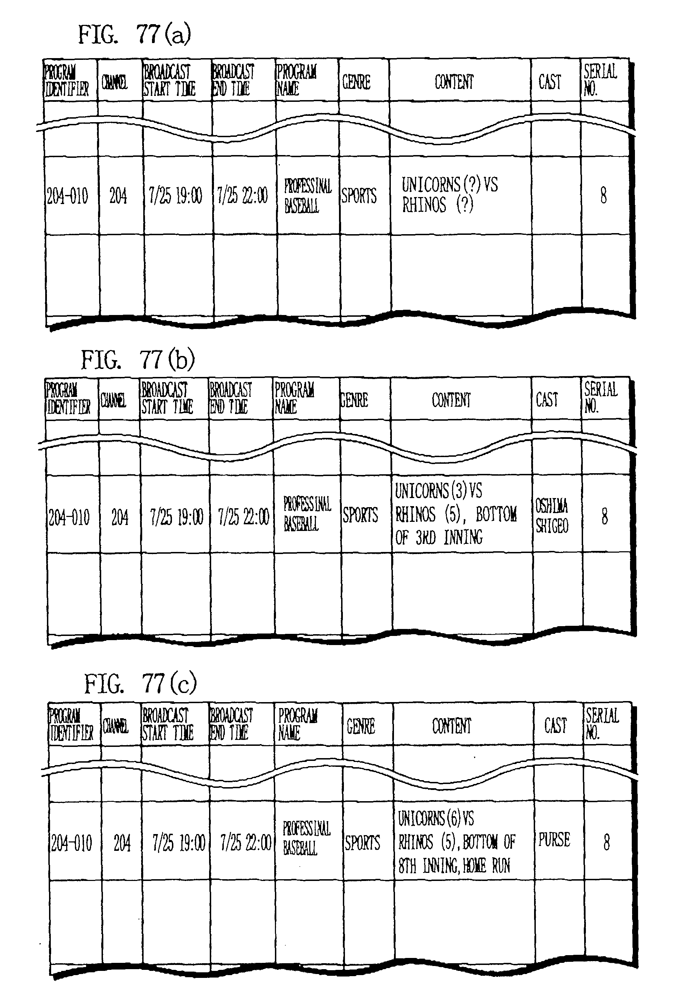

FIG.77(a), FIG.77(b) and FIG.77(c) show a part of the program information acquired by the program information acquisition unit 6901;

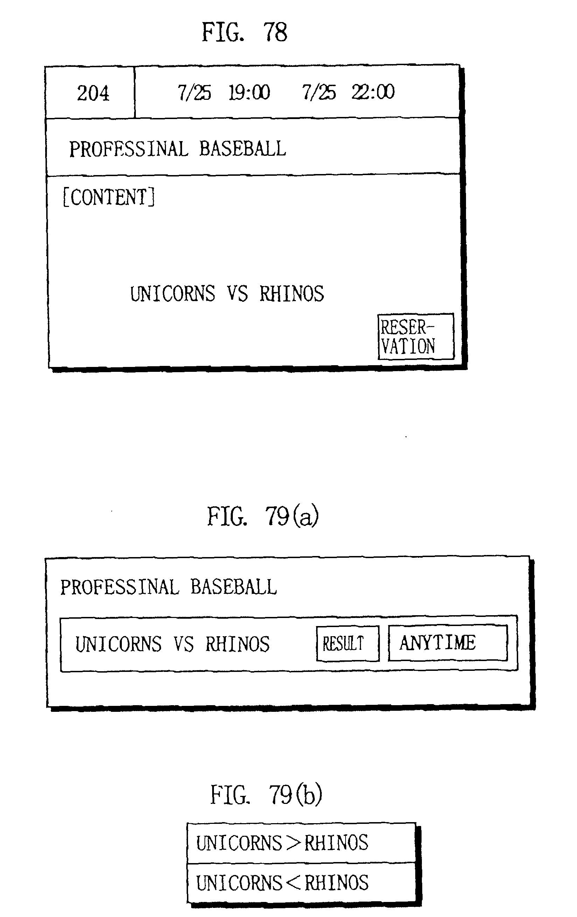

FIG.78 shows a screen generated based on the program information shown in FIG.77(a);
FIGs.79(a) and 79(b) show selection condition input screens;

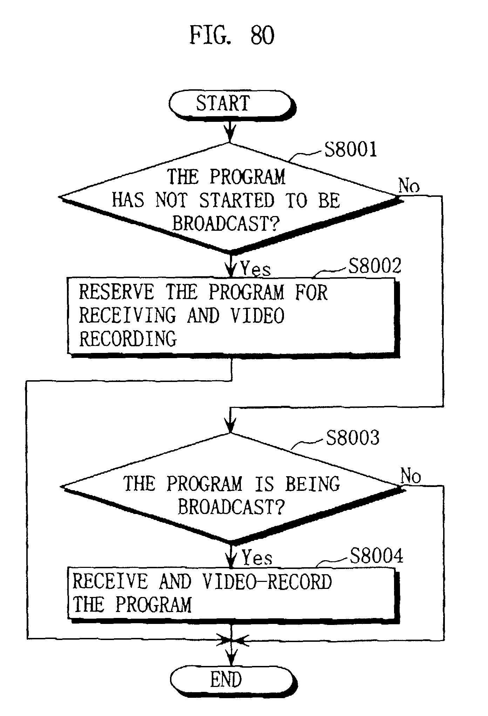

FIG.80 is a flowchart of the processes performed by the reception unit 6911 and video recording unit 6912 in step S7506 shown in FIG.75;

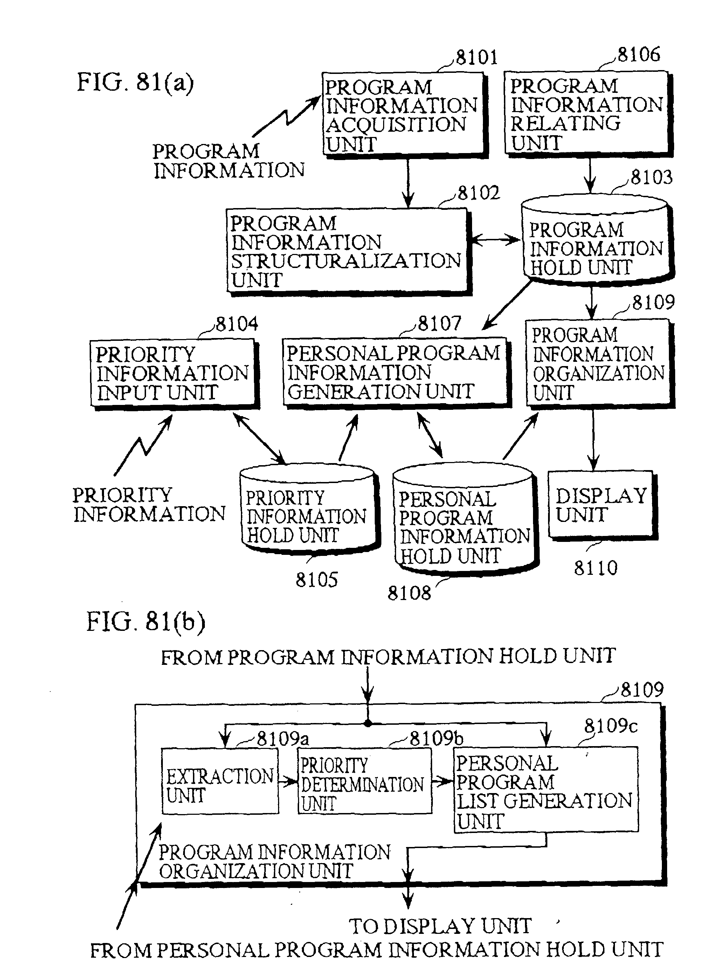

FIG.81(a) is a block diagram showing the construction of the program information retrieval apparatus in Embodiment 16;
FIG.81(b) is a block diagram showing the construction of the program information organization unit 8109 in Embodiment 16;

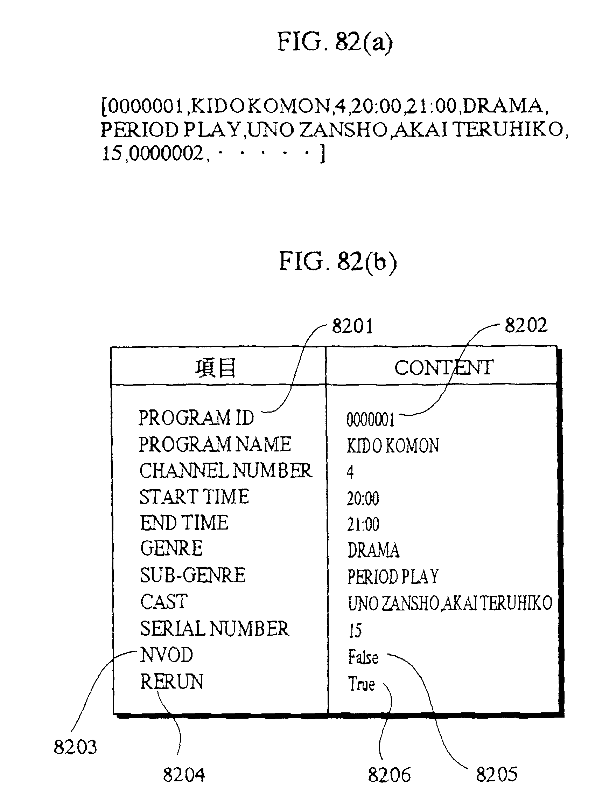

FIG.82(a) shows program information acquired by program information acquisition unit 8101;
FIG.82(b) shows the program information structuralized by the program information structuralization unit 8102;

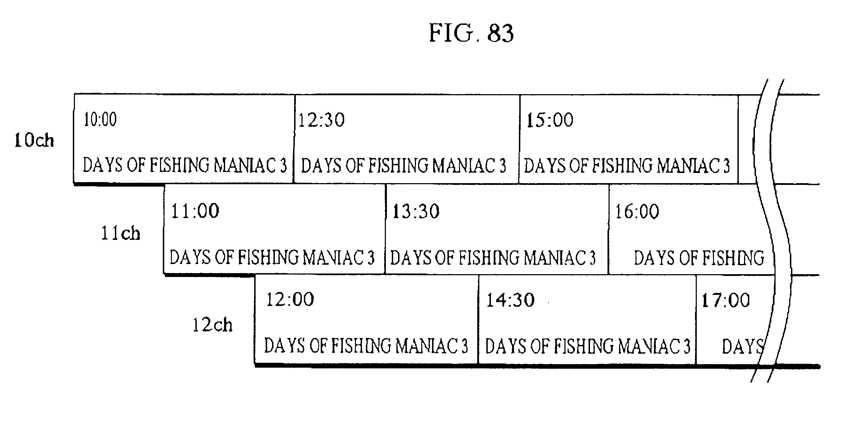

FIG.83 shows a relationship in NVOD between channels and the broadcast times of the same program;

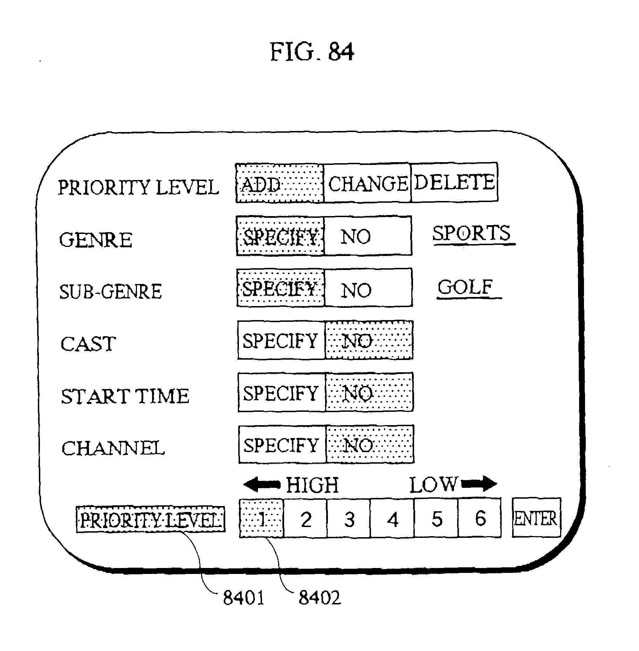

FIG.84 shows a priority information input screen displayed by the priority information input unit 8104;

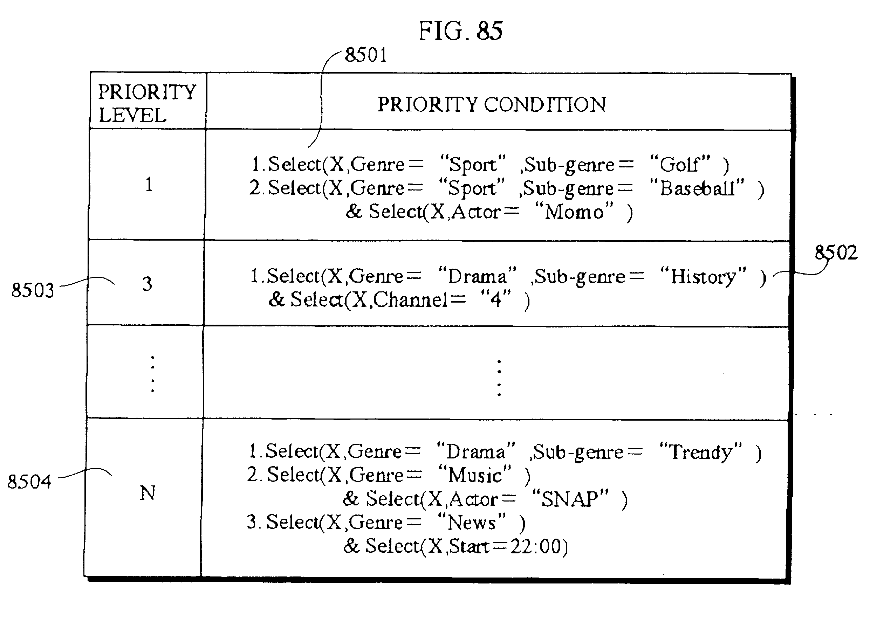

FIG.85 shows priority information input through priority information input unit 8104;

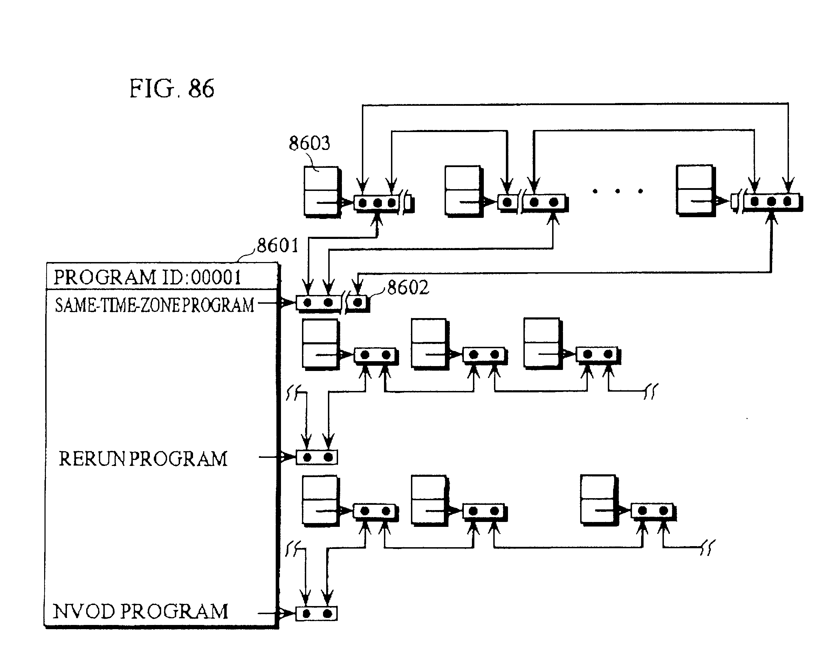

FIG.86 is a schematic representation of the relating performed by program information relating unit 8106;

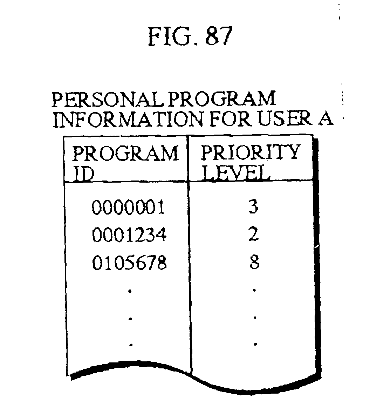

FIG.87 shows a part of personal program information generated by the personal program information generation unit 8107;

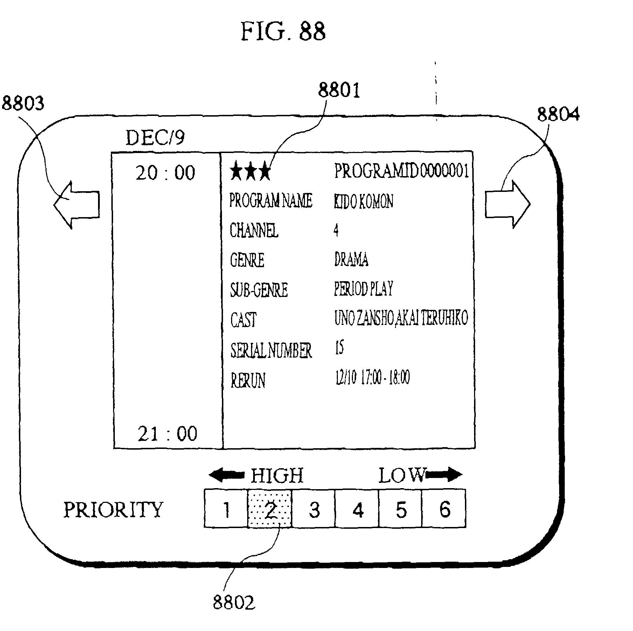

FIG.88 shows a part of a personal program list shown on the display unit 8110;

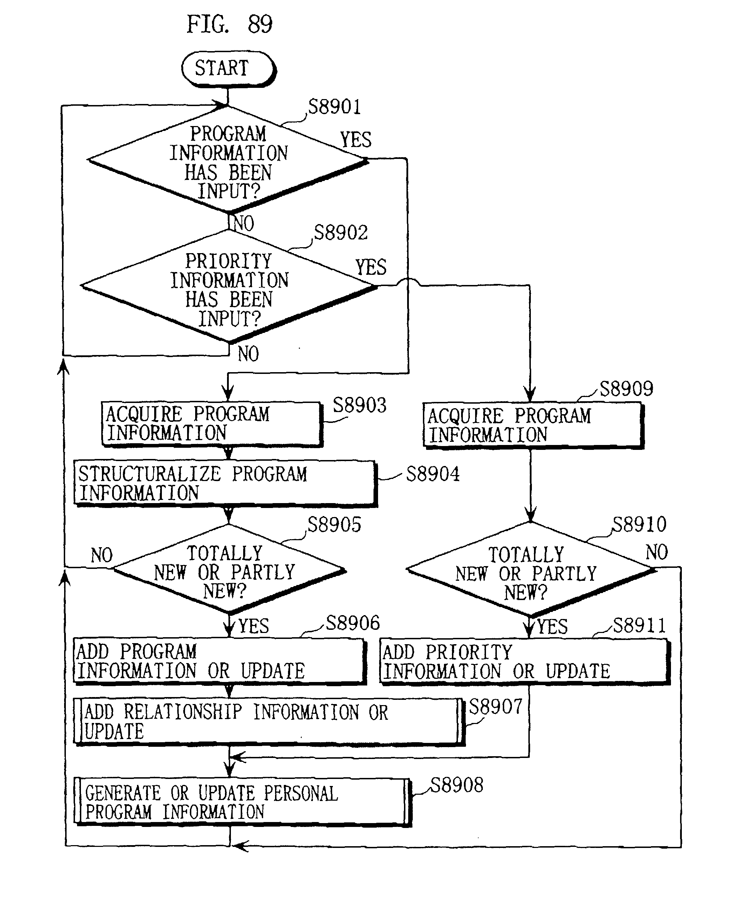

FIG.89 is a flow chart of the process for updating the personal program information in Embodiment 16;

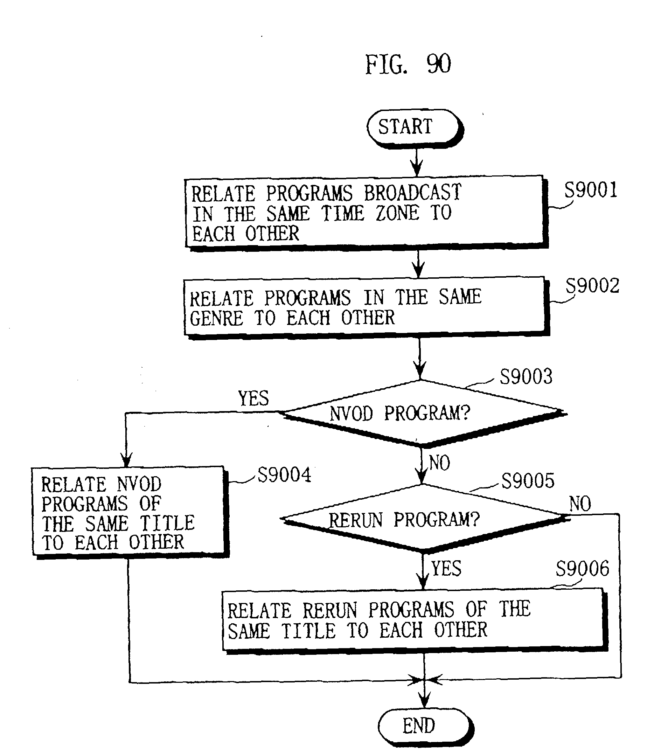

FIG.90 is a flow chart of generating relationships between programs;

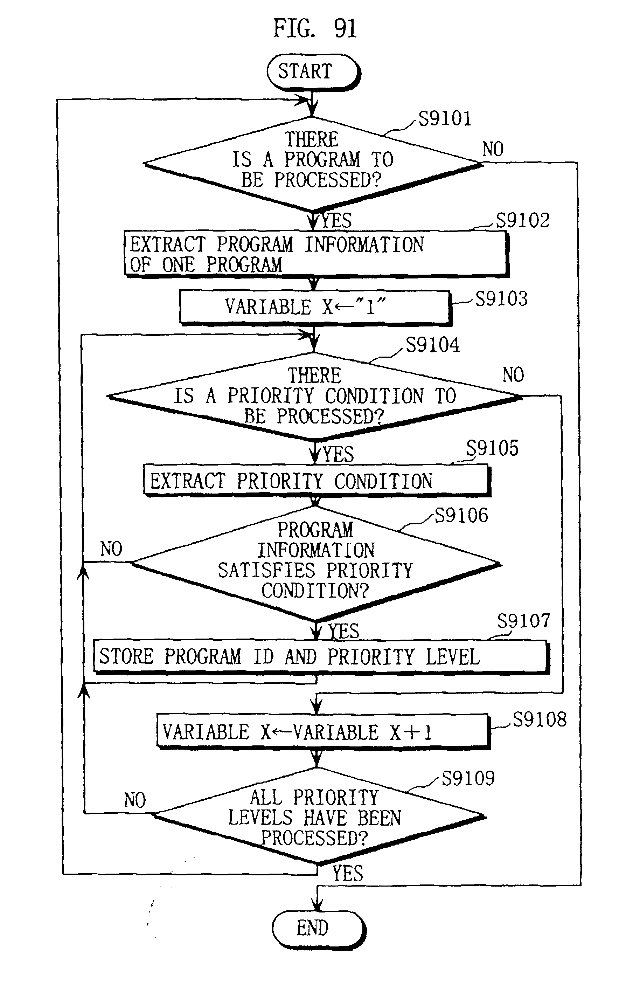

FIG.91 is a flow chart of generating personal program information;

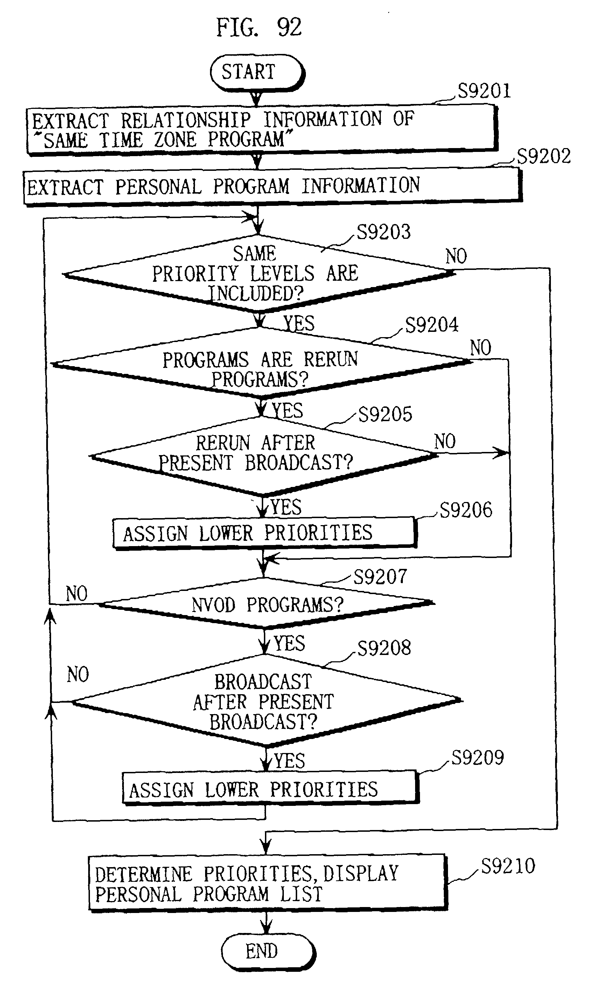

FIG.92 is a flow chart of generating and displaying a personal program list;

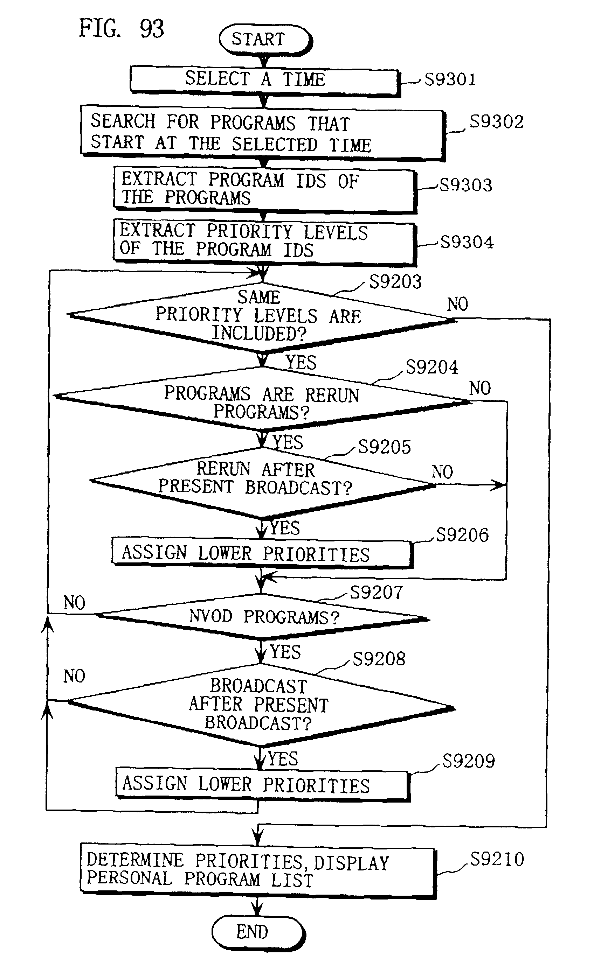

FIG.93 is a flow chart of generating and displaying a personal program list;

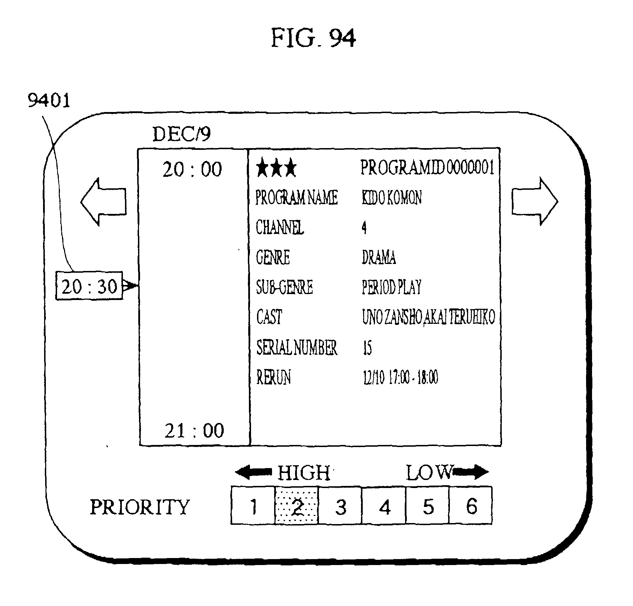

FIG.94 shows a part of a personal program list displayed on display unit 8110 in Embodiment 17;

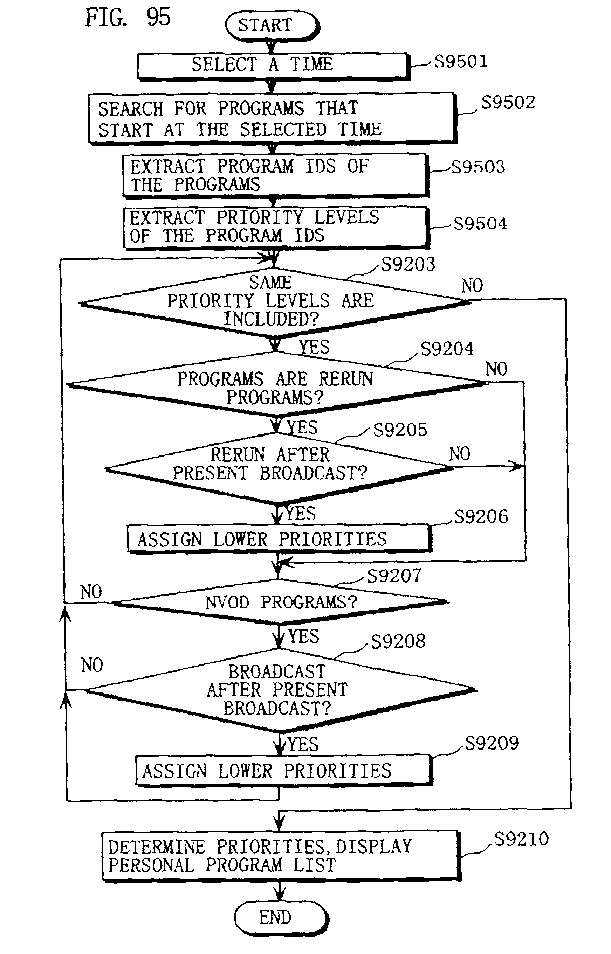

FIG.95 is a flow chart of generating and displaying a personal program list;

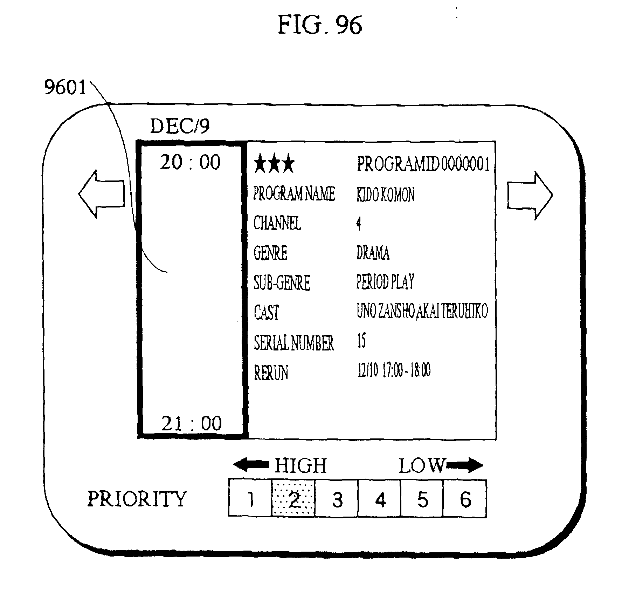

FIG.96 shows a part of a personal program list displayed on display unit 8110 in Embodiment 18;

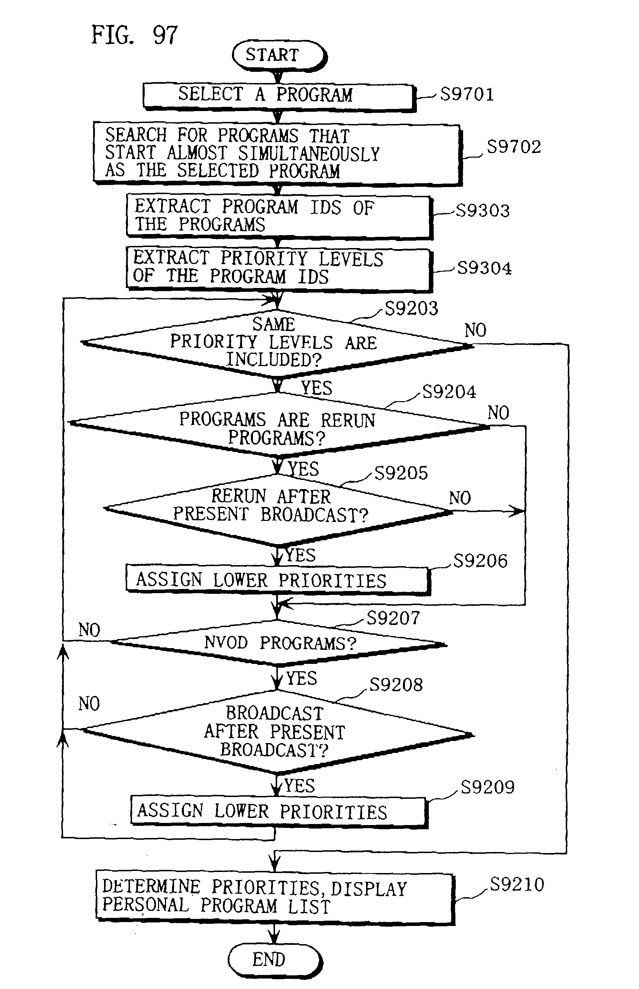

FIG.97 is a flow chart of generating and displaying a personal program list;

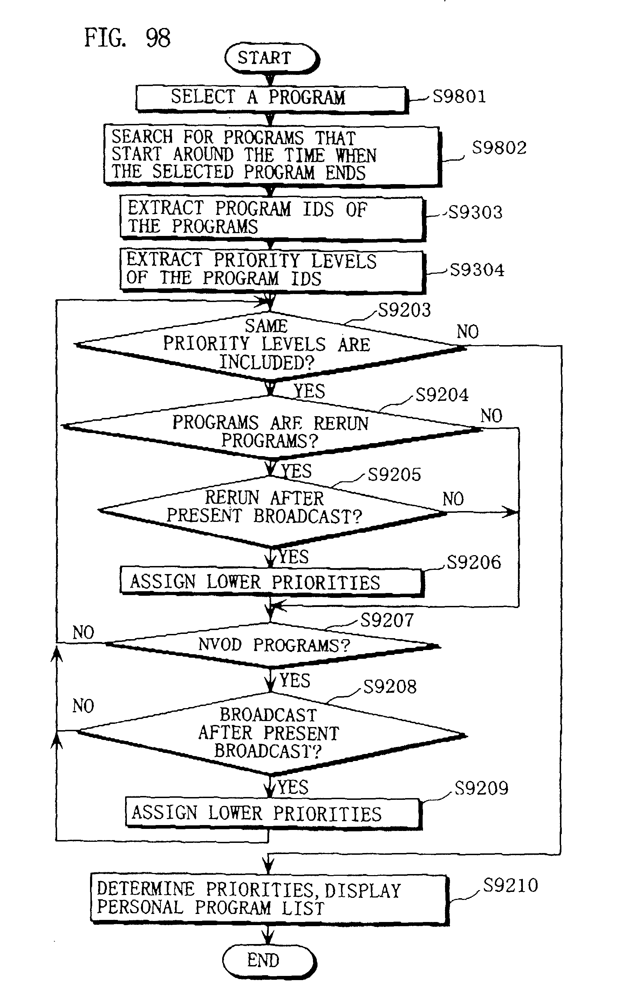

FIG.98 is a flow chart of generating and displaying a personal program list;

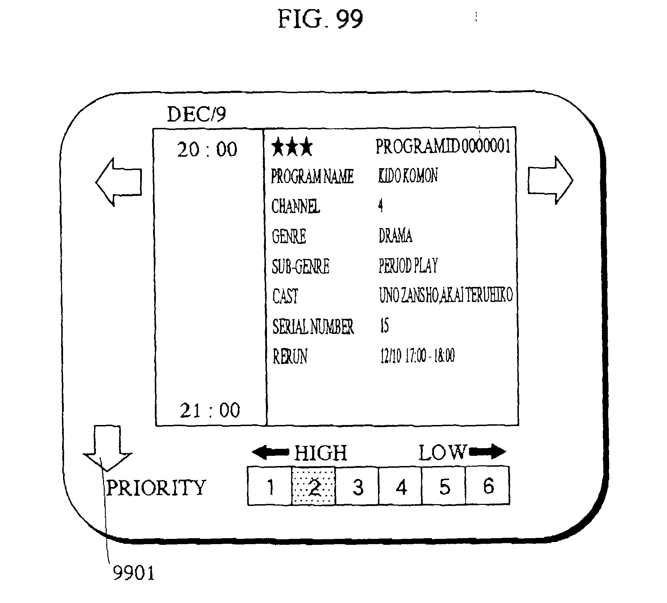

FIG.99 shows a part of a personal program list displayed on display unit 8110 in Embodiment 20;

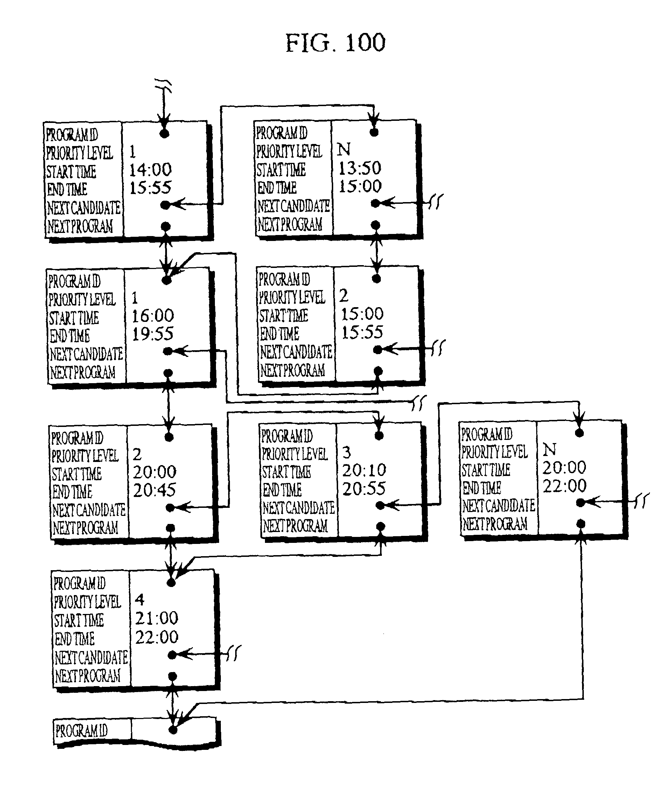

FIG.100 shows an outline of the personal program information which is previously generated in Embodiment 19 or 20;

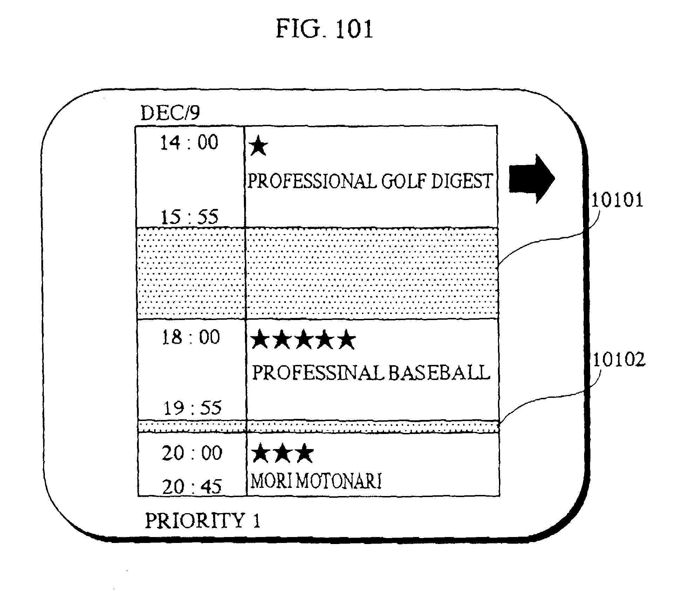

FIG.101 shows a part of a personal program list which is generated beforehand and displayed on display unit 8110 in Embodiment 20;

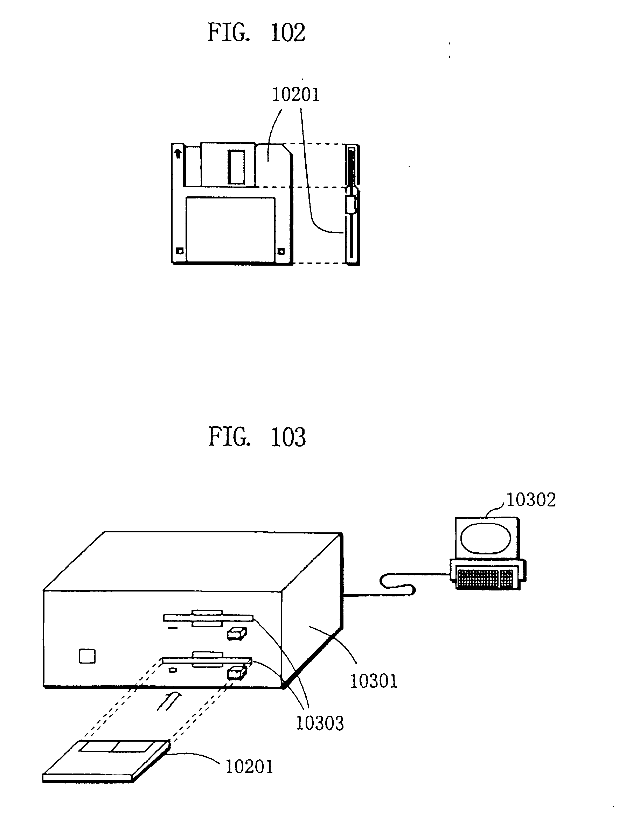

FIG.102 shows a 3.5-inch floppy disk 10201; and
FIG.103 shows a disk reading apparatus 10301 and a computer 10302.

### DESCRIPTION OF THE PREFERRED EMBODIMENTS

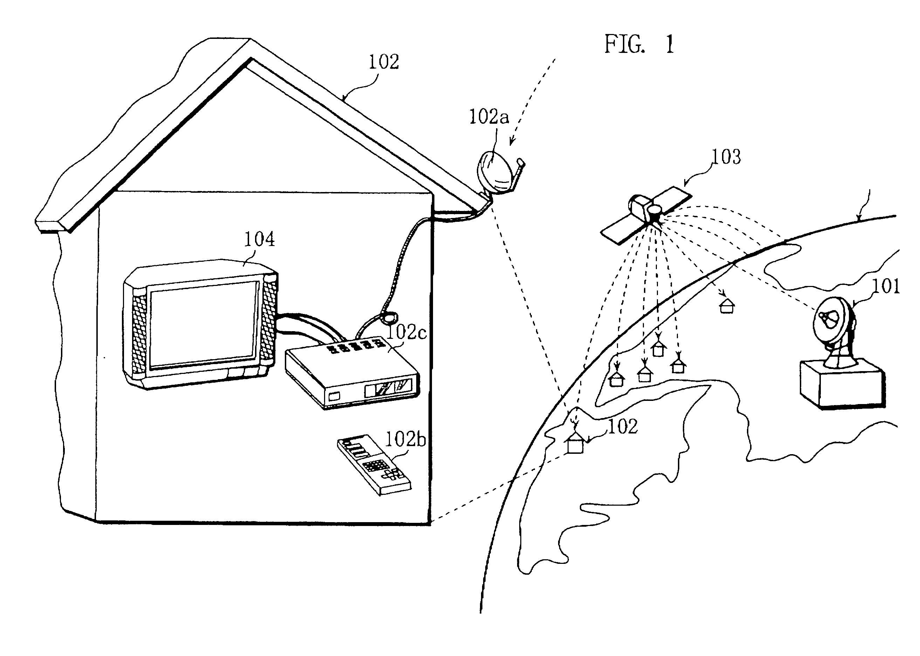

FIG.1 shows a schematic representation of a program information retrieval system.

The present system is set in a broadcasting station 101 and a user residence 102 and enables the user to receive broadcast data from the station 101 via a communication satellite 103.

The broadcasting station 101 is, for example, a broadcasting station for satellite broadcasts equipped with a large-scale broadcast equipments. The broadcasting station 101 transmits broadcast data to a large number of user residences via the communication satellite 103.

The user residence 102 is equipped with, for example, an antenna 102a, a remote controller 102b, and an STB (Set Top Box) 102c. The STB 102c is connected to a TV set 104. The STB 102c receives broadcast data via the communication satellite 103, receives user's inputs, and processes, as described later, these types of data to display images on the TV set 104.

It is needless to say that such a communication between the broadcasting station 101 and the user residence 102 is not limited to the communication via the communication satellite 103, but is achieved by a general broadcast using ground waves or a cable TV system.

Several preferred embodiments of the present invention, the program information retrieval system, are described below with reference to the drawings.

### <Embodiment 1>

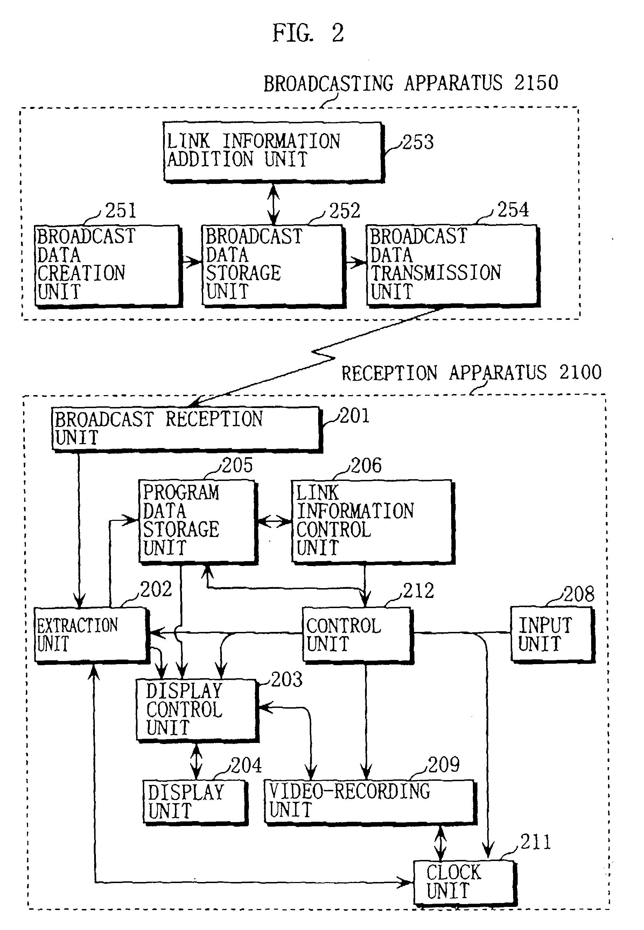

FIG.2 is a block diagram showing the construction of the program information retrieval system in Embodiment 1. The present system is composed of a broadcasting apparatus 250 and a reception apparatus 200. These components are respectively described below.

### Construction of Broadcasting apparatus 250

The broadcasting apparatus 250 is installed in a broadcasting station. The broadcasting apparatus 250 is composed of a broadcast data creation unit 251, a broadcast data storage unit 252, a link information addition unit 253, and a broadcast data transmission unit 254. The broadcasting apparatus 250 creates and broadcasts broadcast data which is composed of broadcast programs and program information corresponding to each program.

The broadcast data creation unit 251 creates broadcast data and stores the created broadcast data in the broadcast data storage unit 252.

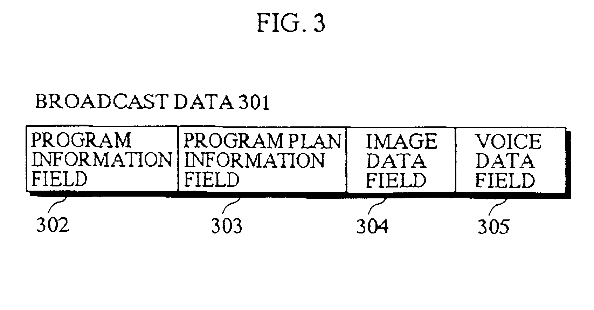

FIG.3 shows an example of the broadcast data received by the broadcast reception unit 201. Broadcast data 301 is composed of a program information field 302, a program plan information field 303, an image data field 304, and a voice data field 305.

The program information field 302 holds program detailed information, such as a title and a broadcast time, concerning the programs to be broadcast.

The program plan information field 303 holds program plan information for each channel.

The image data field 304 holds moving-picture data of a program.

The voice data field 305 holds voice data of a program.

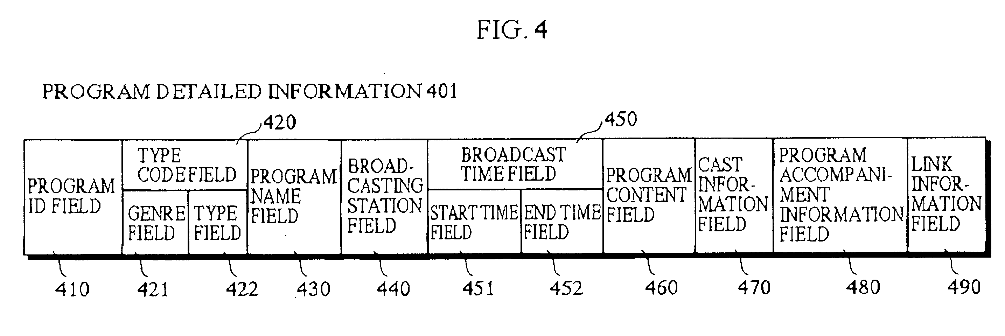

FIG.4 shows an example of the program detailed information held in the program information field 302. Program detailed information 401 is composed of a program ID field 410, a type code field 420, a program name field 430, a broadcasting station field 440, a broadcast time field 450, a program content field 460, a cast information field 470, a program accompaniment information field 480, and a link information field 490.

The program ID field 410 holds a program ID which uniquely indicates a program and is used for the identification of the program.

The type code field 420 is divided into a genre field 421 and a type field 422.

The program name field 430 holds a title of a program.

The broadcasting station field 440 holds a name of a station that broadcasts a program.

The broadcast time field 450 is divided into a start time field 451 and an end time field 452, respectively holding a broadcast start time and a broadcast end time of a program.

The program content field 460 holds an outline of a program.

The cast information field 470 holds names of the cast of a program.

The program accompaniment information field 480 holds a fare and audience limitation information.

The link information field 490 holds link information which links a plurality of pieces of program detailed information having certain information in common.

The broadcast data storage unit 252 is achieved, for example, by a RAM. The broadcast data storage unit 252 stores the broadcast data created by the broadcast data creation unit 251.

The link information addition unit 253 sets link information in the link information field 490 of each piece of program detailed information to link a plurality of pieces of program detailed information having certain information in common.

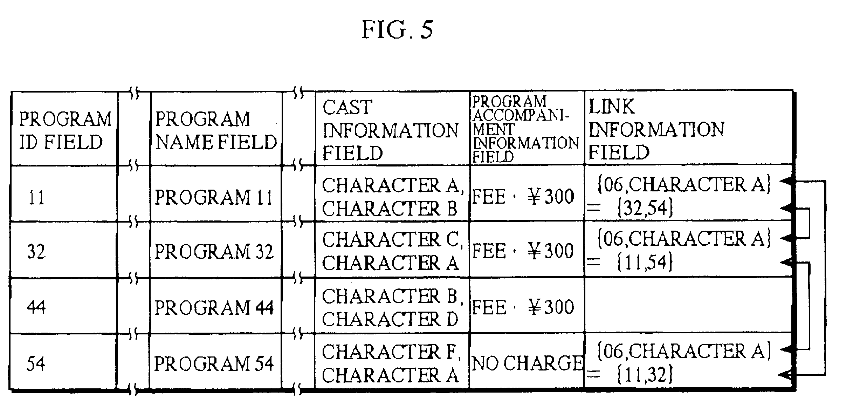

FIG.5 shows a plurality of pieces of program detailed information linked by the link information. In the drawing, three programs with IDs "11," "32," and "54" are linked to each other by a piece of common information "character A" held in the cast information field. Link information held in the link information field includes link item information (e.g., {06, character A}) and program IDs. The link item information is composed of an item identification code and item information. The item identification code (e.g., 06) indicates an item of the detailed program information. The item information (e.g., character A) shows the content of common information. The program ID shows other programs which have information in common with the present program.

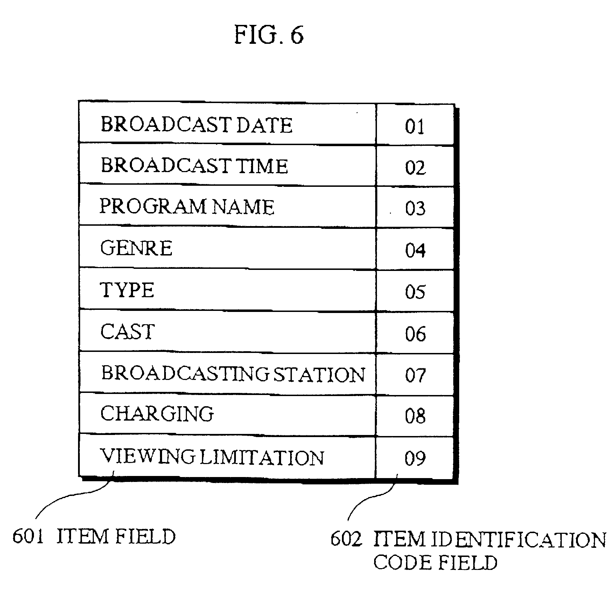

FIG.6 shows an item identification code list showing correspondence between items and item identification codes. The item identification code corresponds to an item displayed on the program detailed information screen which is used by the user to retrieve program information on reception apparatus 200, and does not correspond to the "field" included in the program detailed information 401. An item field 601 includes these items. An item identification code field 602 includes item identification codes, each being represented by two digits. The program detailed information screen is described later when a display control unit 203 of the reception apparatus 200 is described. The item identification code is stored in a RAM embedded in the link information addition unit 253.

Now, a linking process performed by the link information addition unit 253 is described below.

First, the link information addition unit 253 extracts the link item information from the program detailed information. The extracted link item information, such as character names and genre names in each field, can be specified by the user on the reception apparatus as keys used for the program information retrieval.

Then, the link information addition unit 253 refers to the broadcast data storage unit 252 to detect program detailed information that corresponds to the keys, namely the extracted link item information. The link information addition unit 253 then obtains program IDs from the program detailed information and stores the IDs in a built-in temporary storage apparatus.

The link information addition unit 253 creates link information by combining the link item information as a search key with program IDs acquired in the information retrieval. The link information addition unit 253 links a plurality of pieces of program detailed information by storing the created link information in the link information field 490 of a linkage-target piece of program detailed information.

The broadcast data transmission unit 254 transmits broadcast data with the link information added.

### Construction of Reception Apparatus

The reception apparatus is a TV set installed in a user residence. The reception apparatus includes a broadcast reception unit 201, an extraction unit 202, a display control unit 203, a display unit 204, a program data storage unit 205, a link information control unit 206, an input unit 208, a video-recording unit 209, a clock unit 211, and a control unit 212.

The broadcast reception unit 201, provided with an antenna, receives broadcast data from a broadcasting station via the antenna, and sends the received data to the extraction unit 202.

The extraction unit 202 extracts data from the received broadcast data and manages the program plan information and the program detailed information included in the received broadcast data.

The extraction unit 202 extracts the program detailed information and the program plan information respectively from the program information field 302 and program plan information field 303. The extraction unit 202 stores the extracted information in the program data storage unit 205.

When storing the program detailed information in the program data storage unit 205, the extraction unit 202 compares the link information of the newly added program detailed information with that of existent program detailed information having been stored in the program data storage unit 205. If they do not match, the extraction unit 202 corrects the new information with the existent one since the existent one reflects a program reservation specified by the user.

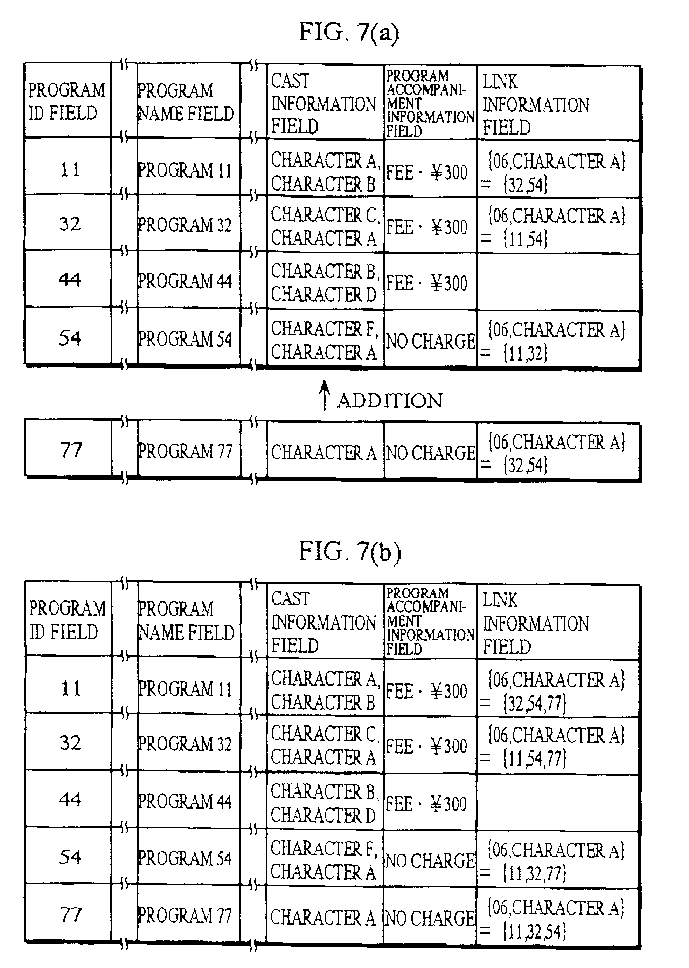

FIGs.7(a) and (b) show an example of the above. In FIG.7(a), proqram "77" is linked with programs "32" and "54," having "character A" of "cast information field" in common. The existent program detailed information, however, includes program "11" which is not included in the newly added information. This is because the user has video-recorded program "11" with a specification and the program detailed information on this program remains after the program has been broadcast. As a result, the extraction unit 202 adds program ID "11" to the link information of a program "77," as shown in FIG.7(b). The extraction unit 202 then adds program ID "77" to the link information of programs "11," "32," and "54."

The extraction unit 202 deletes the program plan information of programs having been broadcast. The extraction unit 202 does not delete the program detailed information of programs having been broadcast when the programs are reserved or have been video-recorded. The extraction unit 202 instructs the control unit 212 to check whether each program is reserved or has been video-recorded. The extraction unit 202 deletes the program detailed information of programs that are reserved or have been video-recorded when instructed by the control unit 212 to delete them with program IDs specified.

On receiving an instruction from the control unit 212, the extraction unit 202 extracts data from the image data field 304 and voice data field 305. The extraction unit 202 transmits the extracted data to the display control unit 203 so that the display control unit 203 can output the data to the display unit 204 or video-recording unit 209.

The program data storage unit 205, being achieved by a RAM or the like, stores the program detailed information and the program plan information extracted by the extraction unit 202. The program data storage unit 205 also stores a program detailed information screen to be displayed on the display unit 204 and screen format information of a program list. In the present embodiment, each format information is stored in the program data storage unit 205 in advance. However, each format information may be transmitted from the broadcasting apparatus 250 as a part of the broadcast data.

The input unit 208, being an input apparatus achieved by a remote controller or the like, converts instructions input by the user into signals and transmits the signals to the control unit 212.

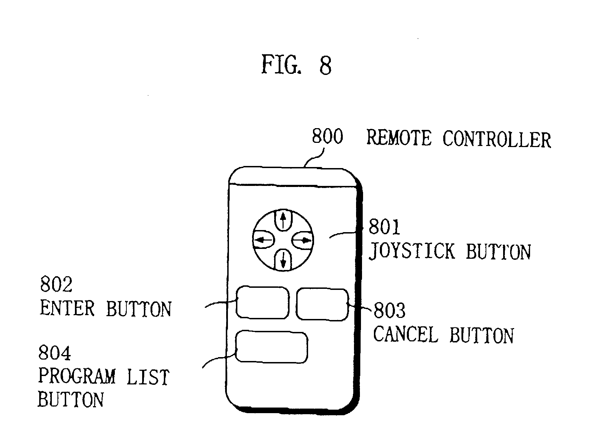

FIG.8 is a schematic representation of a remote controller 800 of Embodiment 1. A joystick 801 conveys instructions to move the cursor on the display unit 204 upward, downward, to the left, and to the right. An enter button 802 conveys an instruction specifying a program among the program list to display the program detailed information of the specified program on the screen. The enter button 802 also conveys an instruction specifying a reservation of a program selected from the program detailed information. The enter button 802 also conveys an instruction to change the program detailed information screen of a plurality of programs as a retrieval result. A cancel button 803 conveys an instruction to cancel the linking. A program list button 804 conveys an instruction to display the program list on the display unit 204.

The display control unit 203 creates and displays various types of screens on the display unit 204. The display control unit 203 also receives instructions input by the user responding to these screens.

On receiving an instruction to display the program list from the control unit 212, the display control unit 203 reads the program plan information, the program detailed information, and the program list screen format information from the program data storage unit 205. The display control unit 203 edits the read information to make the program list and displays the program list on the display unit 204.

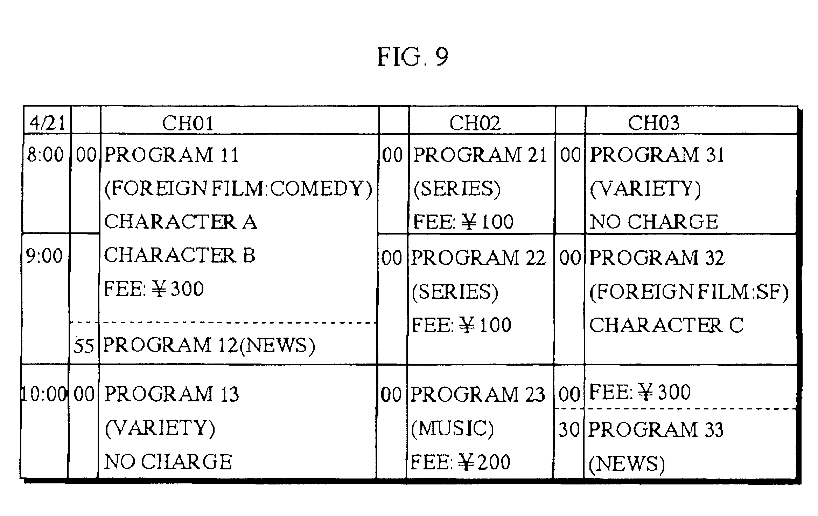

FIG.9 shows a program list displayed on the display unit 204.

On receiving an instruction to display the program detailed information from the control unit 212 while the program list is displayed on the display unit 204, the display control unit 203 identifies the program specified by the user by analyzing the cursor position on the program list, and obtains the program ID of the program whose detailed information screen should be displayed. The display control unit 203 reads from the program data storage unit 205 the program detailed information and the program detailed information format that correspond to the obtained program ID. The display control unit 203 edits the read information and the current time obtained from the clock unit 211 to create the program detailed information screen and displays the created screen on the display unit 204. Note that the cursor moves among the option items upward, downward, to the left, and to the right.

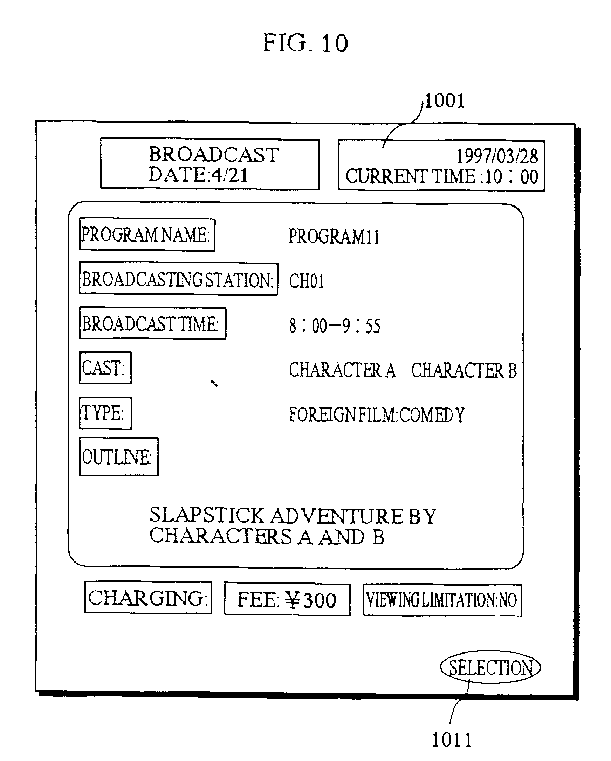

FIG.10 shows a program detailed information screen displayed on the display unit 204.

There is a limit to the amount of information displayed on the display unit 204. As a result, only a limited number of broadcasting stations or programs are included in the displayed program list. Also, a limited number of program names or characters are included in the displayed program detailed information for each program. On the other hand, the whole contents of the program detailed information of a program are displayed in the program detailed information screen. A current time area 1001 displays a current time held in the clock unit 211. A selection key 1011 is used to receive an instruction specifying a program video-recording reservation. Other items and their contents are the program detailed information read from the program data storage unit 205. Titles of information types such as "cast" are called items, and the contents of the titles such as "character A" are called item information. The user can specify the item information as a key for the program information retrieval. Each item has an identification code uniquely assigned to it, as shown in FIG.6. The identification code is used in the program information retrieval using the link information.

The display control unit 203 also obtains image data and voice data from the extraction unit 202, performs certain processes necessary for viewing or recording, such as decoding or expanding, on the obtained data, and transmits the processed data to the display unit 204 or the video-recording unit 209, on receiving such an instruction from the control unit 212.

The display control unit 203 analyzes the cursor position on the display unit 204 and the content displayed on the cursor position to the control unit 212, on receiving such an instruction from the control unit 212. In doing this, when the cursor stays in an item in the program detailed information, the display control unit 203 converts the item into an item identification code shown in FIG.6, and sends the item identification code to the control unit 212. For this purpose, the display control unit 203 stores the item identification code list shown in FIG.6 in a built-in RAM.

The display control unit 203 also moves the cursor on the display unit 204, on receiving such an instruction from the control unit 212.

The display control unit 203 also displays a detailed program result screen of search result programs, on receiving such an instruction from the control unit 212 as the link information control unit 206 ends searching programs. The display control unit 203 receives from the control unit 212 program IDs of the search result programs together with the instruction to display the program detailed information screen. The display control unit 203 reads from the program data storage unit 205 the program detailed information that corresponds to the received program IDs and also reads the format for the program detailed information for the search results. The display control unit 203 sorts a plurality of pieces of the read program detailed information in the order of the start time included in the program detailed information. The display control unit 203 creates the program detailed information screen for a program with the earliest start time and displays the screen on the display unit 204. In doing so, the display control unit 203 receives from the control unit 212 the link item information used as the key for the information retrieval, as well as the program IDs as the search results, and stores these types of data in a built-in storage apparatus.

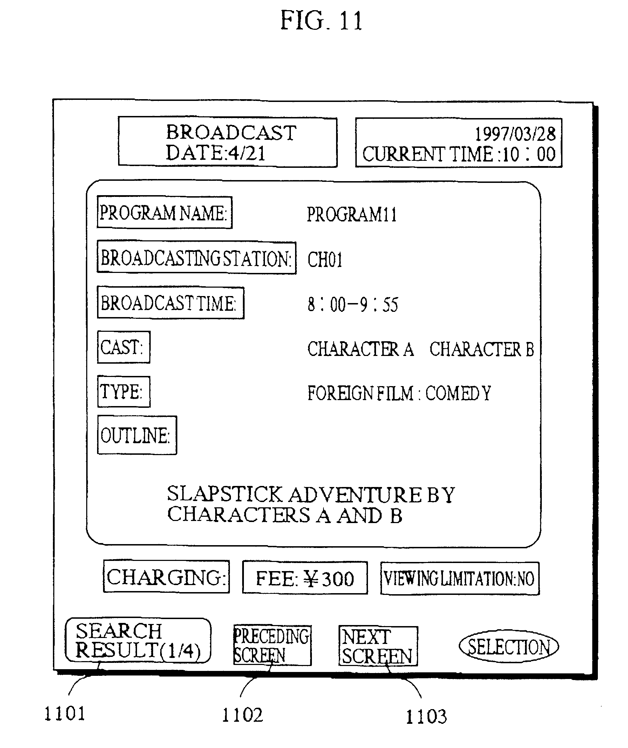

FIG.11 a program detailed information screen as a search result. As shown in the drawing, a search result area 1101, a preceding screen key 1102, and a next screen key 1103 are displayed on the bottom line of the screen. The sign "1/4" shown in the search result area 1101 indicates that the currently displayed information is the first of four pieces of program detailed information. The preceding screen key 1102 and the next screen key 1103 are used by the user to change the program detailed information screens. When the user presses the enter key 402 on the remote controller 800 with the cursor staying on the next screen key 1103 on the screen shown in FIG.11, the control unit 212 instructs the display control unit 203 to display the next screen. On receiving this instruction, the display control unit 203 creates a screen for the second of sorted four pieces of program detailed information and displays the created screen on the display unit 204. On the displayed screen, the search result area 1101 displays "2/4."

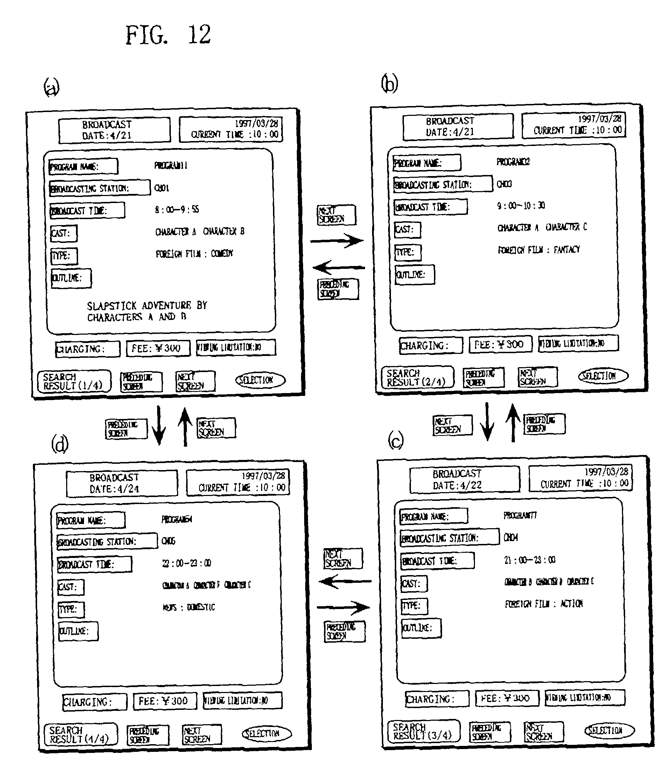

FIG.12 shows four program detailed information screens to be displayed as a search result and their changes.

The display unit 204, being achieved by a CRT, a liquid crystal panel or the like, displays the program list and the program detailed information screen created by the display control unit 203. The display unit 204 is provided with a speaker unit for outputting voices. The display unit 204 outputs image data and voice data transmitted from the display control unit 203.

On receiving a program information retrieval instruction from the control unit 212, the link information control unit 206 performs the information retrieval using the link item information transmitted from the control unit 212 together with the instruction.

The link information control unit 206 searches the 490 in the program detailed information in order for a piece of program detailed information that has the same link information as the transmitted link item information. The link information control unit 206 then obtains program IDs of other pieces of program detailed information linked by the link item information by referring to the link information.

On completing the information retrieval, the link information control unit 206 transmits the obtained program IDs to the control unit 212 as the search result. According to the retrieval method, the retrieval ends when one piece of program detailed information that has the same link information as the specified item information is detected. In contrast, in conventional retrieval methods without using the link information, the search does not end until all pieces of program detailed information are detected. This indicates that the information retrieval using the link information improves the retrieval efficiency of the reception apparatus and reduces the loads of the retrieval processing.

On receiving from the control unit 212 a link cancel instruction, program IDs, and link item information as the cancellation target, the link information control unit 206 deletes the target link information from the program detailed information having the specified program IDs. The link information control unit 206 further deletes the program IDs from the link information of other pieces of program detailed information holding the program IDs as the link information. Now, canceling of the link by the link item information is described in detail with reference to FIG.5. The link information control unit 206 receives from the control unit 212 a link cancel instruction, a program ID "11," and link item information {06,character A} as the cancellation target. The link information control unit 206 deletes "{06,character A}={32,54} from link information of program 11. The link information control unit 206 further deletes the program ID "11" from the link information of programs 32 and 54, where program IDs including "11." are combined with the link item information {06,character A}.

The video-recording unit 209 manages program video-recording reservation information and contents of recorded programs. The video-recording unit 209 also performs the video-recording and reproduction of programs using a built-in recording/reproduction apparatus. The recording/reproduction apparatus is provided with a recording medium such as video tape, a magnet-optical disk, an optical disk called "MO," a floppy disk, a hard disk, or a semiconductor memory.

When the user specifies a reservation via the input unit 208, the video-recording unit 209 receives the broadcast start time, broadcast end time, and information on the broadcasting station from the control unit 212. The video-recording unit 209 creates the video-recording reservation information from the received information and stores the created information in an internal RAM. The video-recording unit 209 determines a recording time based on the current time obtained from the clock unit 211. The video-recording unit 209 instructs the control unit 212 to allow the display control unit 203 to transmit the image/voice data to the video-recording unit 209. The video-recording unit 209 video-records the image/voice data received from the display control unit 203 using the internal recording/reproduction apparatus.

The video-recording unit 209 reproduces a program recorded by the recording/reproduction apparatus in accordance with an instruction from the control unit 212. The video-recording unit 209 sends the reproduced program to the display control unit 203.

The video-recording unit 209 also deletes the program video-recording reservation information or contents of recorded programs in accordance with an instruction and program IDs received from the control unit 212.

The video-recording unit 209 also checks whether a program has been reserved for video-recording or whether a program has been video-recorded in response to an inquiry from the control unit 212, where the control unit 212 uses the program ID for the inquiry. The video-recording unit 209 notifies the control unit 212 of the check result.

The clock unit 211 provides the current time to any units by request.

The clock unit 211 sends the current time to the video-recording unit 209 using the time to start the video-recording. The clock unit 211 sends the current time to the control unit 212 so that the user can decide whether to reserve or view a program based on the time. The clock unit 211 also sends the current time to the extraction unit 202 using the time as a standard in deleting the program detailed information and program plan information of the programs having been broadcast.

The control unit 212 transmits instructions and information to each unit to control processes such as searching the program detailed information, outputting programs to the display apparatus, and video-recording/reproducing programs.

On receiving a request from the extraction unit 202 to check whether a program with a specified ID is reserved for video-recording or has been video-recorded, the control unit 212 instructs the video-recording unit 209 to check this. The control unit 212 notifies the extraction unit 202 of the check result.

On receiving a program list display instruction input from the user with the remote controller 800, the control unit 212 instructs the display control unit 203 to display the program list. The control unit 212 also instructs the display control unit 203 to display the program detailed information screen when the user presses the enter button on the remote controller 800 while the program list is displayed on the display unit 204.

When the user presses the enter button on the remote controller 800 while the program list is displayed on the display unit 204, the control unit 212 first instructs the display control unit 203 to analyze the cursor position. The control unit 212 receives the cursor position from the display control unit 203. When the cursor is on the selection key 1011, indicating that the user desires to view the program, the control unit 212 determines whether to reproduce or reserve each program based on the broadcast time included in the program detailed information obtained from the display control unit 203 and the current time obtained from the clock unit 211. If the current time has passed the broadcast end time, indicating that the program has been broadcast or video-recorded, the control unit 212 instructs the video-recording unit 209 to reproduce the program. If the current time is between the broadcast start time and the broadcast end time, indicating that the program is being broadcast, the control unit 212 instructs the extraction unit 202 to extract the image data and voice data and transmit the extracted data to the display control unit 203. The transmitted data is output to the display unit 204. If the current time is before the broadcast start time, indicating that the program has not been broadcast, the control unit 212 instructs the video-recording unit 209 to create the video-recording reservation information of the program.

When the user presses the enter button on the remote controller 800 while the program list is displayed on the display unit 204, and the cursor position analysis result obtained from the display control unit 203 indicates that the cursor is at an item of the program detailed information, the control unit 212 judges that the user specifies a key item for the program information retrieval and obtains information of the item from the display control unit 203. The control unit 212 sends the obtained information to the link information control unit 206 as the link item information, instructing the link information control unit 206 to the program detailed information using the link item information as the key.

On completing the program information retrieval, the link information control unit 206 sends, to the control unit 212, program IDs of the programs that have information matching the link item information. The control unit 212 transmits the program IDs to the display control unit 203. The display control unit 203 displays the program detailed information screen of the search result programs.

The control unit 212 also instructs the display control unit 203 to analyze the cursor position when the user presses the enter button on the remote controller 800 while the program detailed information screen of the search result programs is displayed on the display unit 204. When the cursor is on the next screen key 1103 or the preceding screen key 1102, indicating that the user specifies a change of the program detailed information screens of the search result programs, the control unit 212 instructs the display control unit 203 to change the screens.

The control unit 212 also instructs the display control unit 203 to delete the link information of the programs of the currently displayed program detailed information when the user presses the cancel button on the remote controller 800 while the program detailed information screen of the search result programs is displayed on the display unit 204. In doing so, the control unit 212 sends to the extraction unit 202 the link item information used as the key for the information retrieval, as well as the program IDs of the delete targets. The control unit 212 obtains the link item information from the display control unit 203. The control unit 212 sends the program IDs to the video-recording unit 209, instructing it to delete information related to the programs. On receiving the instruction, the video-recording unit 209 deletes the program video-recording reservation information or contents of recorded programs. The control unit 212 judges whether each program has been broadcast based on based on the broadcast time included in the program detailed information obtained from the display control unit 203 and the current time obtained from the clock unit 211. The control unit 212 instructs the extraction unit 202 to delete the program detailed information of the program when the program has been broadcast.

On receiving an instruction to move the cursor input by the user operating the joystick 801 on the remote controller 800, the control unit 212 instructs the display control unit 203 to move the cursor providing information of the moving direction.

When instructing the display control unit 203 to display the program list and the program detailed information screen, the control unit 212 stores screen types and program IDs of the program detailed information in a temporary storage area in the control unit 212 so that the program displayed can be identified.

### Operation of Broadcasting station

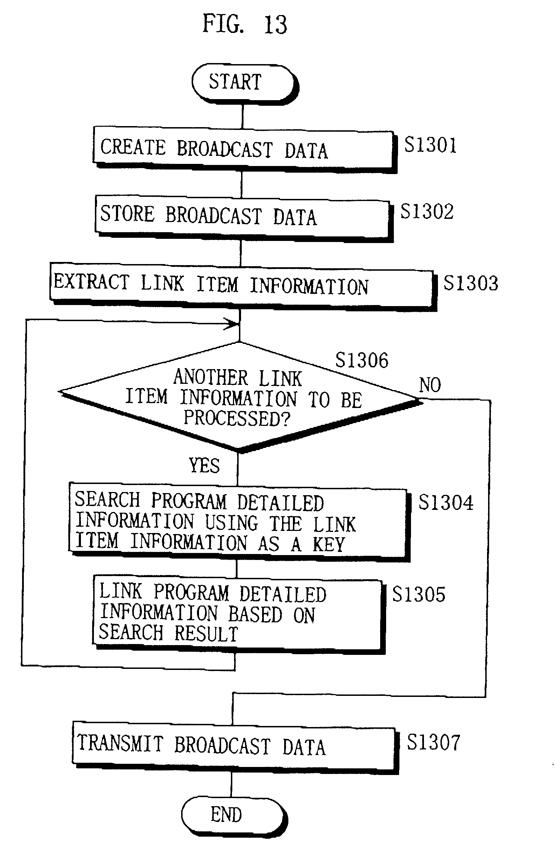

FIG.13 is a flowchart of the broadcast data creation process performed by the broadcasting apparatus 250 in Embodiment 1. This process is described below with reference to the flowchart.

The broadcast data creation unit 251 creates broadcast data as shown in FIG.3 (step S1301). The broadcast data creation unit 251 stores the created broadcast data in the broadcast data storage unit 252 (step S1302). The link information addition unit 253 extracts the link item information from the program detailed information (step S1303). The link information addition unit 253 searches the program detailed information using the link item information as a key (step S1304). The link information addition unit 253 links a plurality of pieces of program detailed information based on the search result (step S1305). The link information addition unit 253 repeats the above processes for each piece of link item information (step S1306). The broadcast data transmission unit 254 transmits the broadcast data including the program detailed information with the link information added (step S1307).

### Operation of Reception Apparatus

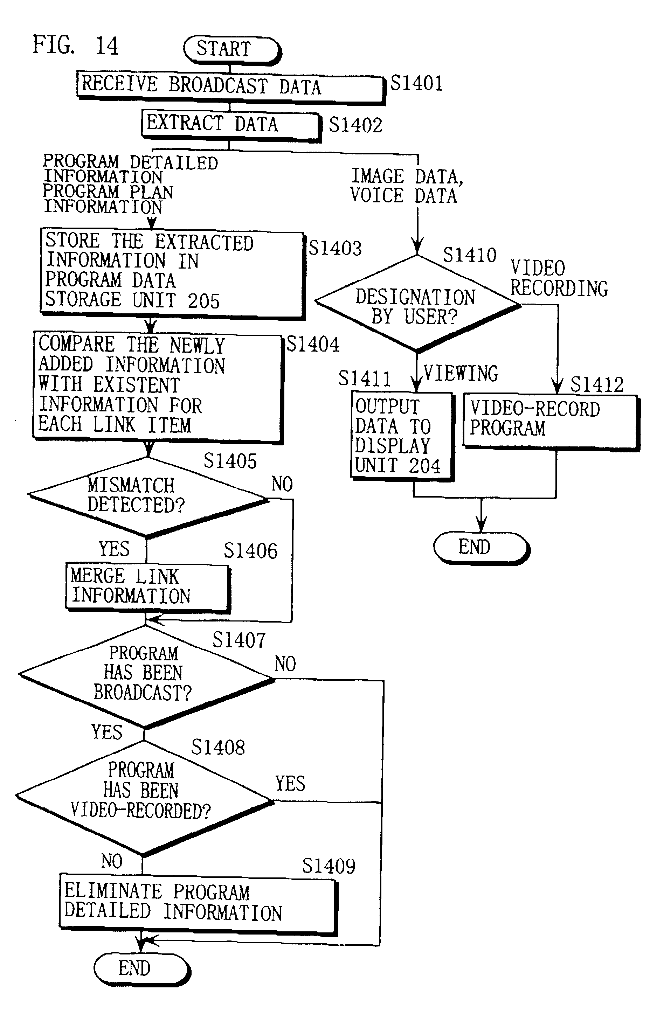

FIG.14 is a flowchart of processing of the broadcast data by the reception apparatus 200 in Embodiment 1.

The broadcast reception unit 201 receives the broadcast data from the broadcast data transmission unit 254 (step S1401), and sends the received broadcast data to the extraction unit 202.

The extraction unit 202 extracts the program detailed information and the program plan information from the program information field 302 and the program plan information field 303 included in the received broadcast data (step S1402), and stores the extracted information in the program data storage unit 205 (step S1403).

Extraction unit 202 compares the link information included in the program detailed information to be added with the link information included in the existing program detailed information stored in the program data storage unit 205 (step S1404). If a mismatch is detected between them (step S1405), this mismatch is resolved (step S1406).

Extraction unit 202 eliminates the program detailed information and the program schedule information of a program having been broadcast from the program data storage unit 205 on the basis of current time acquired from the clock unit 211 already (steps S1407-S1409). However, in this case, the program detailed information of a program having been reserved or recorded is not eliminated (step S1408).

Extraction unit 202, on receiving the designation of viewing or video recording from control unit control unit 212 (step S1410), extracts data from the image data field 304 and voice data field 305 of the broadcast data. The extracted image data and voice data are transmitted to the display control unit 203. The display control unit 203 processes the data for viewing or video recording. In case the control unit 212 designates viewing, the display control unit 203 displays the data on the display unit 204 (step S1411). If the designation from the control unit control unit 212 is video recording, the display control unit 203 sends data to the video-recording unit 209 for video recording (step S1412).

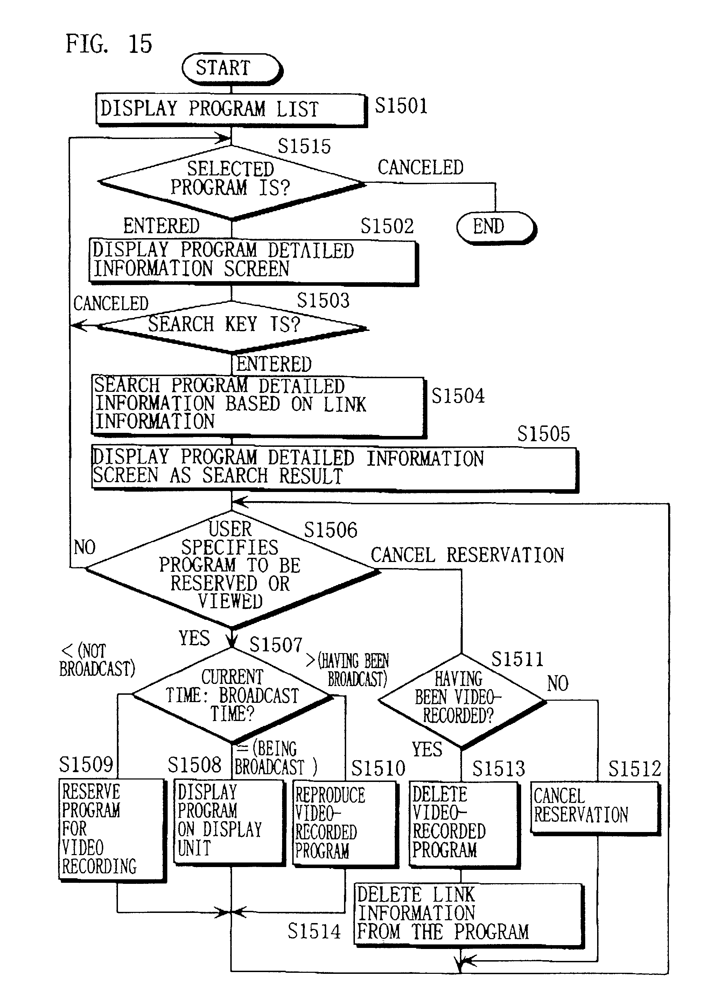

FIG.15 is a flow chart showing the information retrieval and reservation processes of the reception apparatus 200 in Embodiment 1. These processes are described below with reference to the flow chart.

When the user presses the program list button 804 of remote controller 800, the control unit 212 instructs the display control unit 203 to display the program list. The display control unit 203 edits information stored in the program data storage unit 205 to make a program list and displays it on the display unit 204 (step S1501).

When the user operates the remote controller 800 to specify a program on a program list, the control unit 212 instructs the display control unit 203 to display the program detailed information screen of the specified program. The display control unit 203 acquires the program ID of the program by analyzing the cursor position. The display control unit 203 then acquires the program detailed information of this program and the format of the program detailed information screen to create the program detailed information screen and displays it on display unit 204 (step S1502).

The user uses remote controller 800 to specify search key item information among the item information on this screen. Suppose, for example in FIG.10, the user presses enter button 802 while the cursor is positioned on "character A" of item "cast" in the program detailed information screen of program 11. Then the control unit 212 instructs display control unit 203 to analyze cursor position to acquire search key item information (step S1503).

In this example, {06, character A} is the key item information which is a combination of item identification code "06" indicating item "cast" with item information "character A."

The control unit 212 sends the key item information to the link information control unit 206 for its use in searching the program detailed information. The link information control unit 206 fetches the program detailed information containing {06, character A} in the link information field 490 of link item information. The link information control unit 206 then obtains the program ID of the program detailed information and the program ID combined with {06, character A} in the link information (step S1504). For example, in FIG.5, the link information control unit 206 detects link item information {06, character A} in the link information of program 4, and acquires, as the search results, program ID "11" of program 4 and program IDs "32" and "54" which are combined with {06, character A} in the link information of program 11.

After completing the information retrieval, the link information control unit 206 sends the acquired program IDs to the control unit 212. The control unit 212 sends the program IDs to the display control unit 203, instructing to display the program detailed information screen. The display control unit 203 acquires program detailed information of this program ID from program data storage unit 205. The display control unit 203 sorts the acquired program detailed information in accordance with the broadcast start time to create the program detailed information screen of the initial one and displays it on the display unit 204 (step S1505).

FIG.11 shows an example of the program detailed information screen as the search results. When a plurality of pieces of program detailed information are retrieved, the user can change screens as shown in FIG.12 by pressing enter button 802 while the cursor is positioned on "preceding screen" button or "next screen" button.

The user determines whether to reserve or view a program based on the displayed program detailed information (step S1506), For selecting the viewing, the user positions the cursor on the selection key 1011 on the screen, and presses enter button 802 of remote controller 800. The control unit 212 acquires the current time from clock unit 211. The control unit 212 also instructs the display control unit 203 to acquire the broadcast time of the program included in the displayed program detailed information screen, and compares them (step S1507) If the program is currently broadcast, control unit 212 identifies the broadcasting station of the program via the display control unit 203. The control unit 212 sends this information to the extraction unit 202 so that it extracts the image data and voice data of the program. The extracted data is sent to display control unit 203. The display control unit 203 outputs it to display unit 204 (step S1508).

If the broadcast start time is after the current time, control unit 212 acquires program detailed information from display control unit 203, then sends this information to video-recording unit 209, allowing it to create video-recording reservation information (step S1509). If the current time has passed the broadcast end time, that is when the program has been video-recorded, control unit 212 sends the program ID to video-recording unit 209, allowing it to reproduce the program. The control unit 212 also sends the image and voice data of the program reproduced by video-recording unit 209 to the display control unit 203. The data is then output to display unit 204 (step S1510).

The user can also cancel the program reservation. For the cancellation, the user presses cancel button 803 of remote controller 800 after positioning the cursor on selection key 1011 on the program detailed information screen as the search results. On receiving this instruction, control unit 212 sends the program ID of the cancellation target program to the video-recording unit 209, instructing to cancel the video recording of the program. On receiving this instruction, the video-recording unit 209 checks the state of video-recording reservation on the program with the received program ID (step S1511). If the program is only reserved and has not been recorded, the video-recording unit 209 cancels the reservation (step S1512). If the program has been reserved and recorded, the video-recording unit 209 cancels the reservation and deletes the video-recorded program (step S1513). When the program has been video-recorded, the control unit 212 instructs link information control unit 206 to update link information. In instructing so, the control unit 212 also sends to the link information control unit 206 the program ID and the search key item information used for searching the program detailed information.

Link information control unit 206 detects a link-cancellation target program information from the program data storage unit 205 using the program ID as a key. Link information control unit 206 then detects a piece of link information among the link information included in the program information that matches the search key item information. Link information control unit 206 sequentially accesses the linked program detailed information using the program ID included in the detected piece of link information as a key to delete the program ID of a cancellation-target program from the link information of each piece of program detailed information. Link information control unit 206 then deletes from the cancellation-target program the link information that matches the search key item information (step S1514). If the program has been broadcast, the control unit 212 instructs the extraction unit 202 to delete the program detailed information.

As understood from the above description, the program detailed information the reception apparatus 200 receives from the broadcasting apparatus 250 is linked by the link information beforehand, where the link information includes the item information which can be specified by the user when searching the programs. Since the information retrieval is performed using the link information, the performance of program information retrieval has been improved, compared to the conventional method which searches all pieces of programs detailed information using a search key.

In the present embodiment, program schedule information and program detailed information are transmitted in separate packets. However, they may be transmitted in one packet. In doing so, program detailed information contained in a packet of program information field 302 is in advance arranged in the order of broadcasting station and broadcast time.

In the present embodiment, the sorting is done according to the broadcast start time. However, the sorting may be done in the alphabetical order on the broadcasting station names or program names.

In the present embodiment, all the specifiable information is included in the link item information. However, the link item information may be limited, for example, to person's names.

The above described program information retrieval system may be achieved by a general computer and a program information retrieval process program, the program being stored in a storage medium.

The above described program information may, beforehand, be stored in a storage medium, such as a hard disk, of a supplier apparatus. The program information may be transferred to a receiver apparatus, or vice versa, or may be copied into a storage medium, such as a CD-ROM, which can be carried or delivered.

### <Embodiment 2>

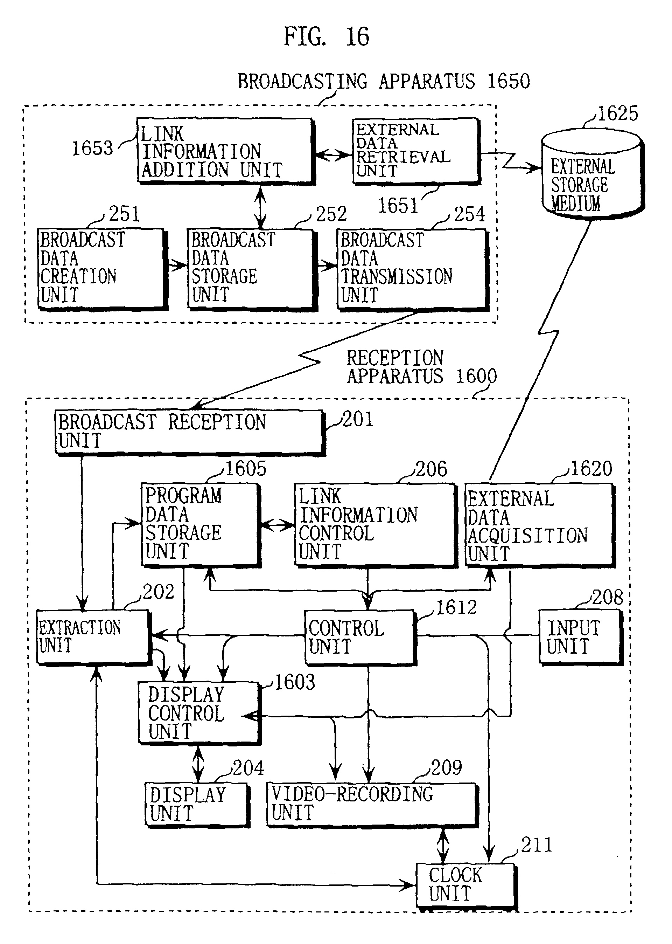

FIG.16 is a block diagram showing the construction of the program information retrieval system in Embodiment 2.

A broadcasting apparatus 1650 of the present embodiment is constructed the same as the broadcasting apparatus 250 except for an additional unit, external data retrieval unit 1651.

A link information addition unit 1653 handles the same processes as the link information addition Unit 253 except for processes related to the external data retrieval unit 1651. Only such unique processes of the present embodiment are described below.

Note that external storage medium 1625 is achieved by WWW (World Wide Web) in the present embodiment.

The external data retrieval unit 1651 connects to WWW and accesses homepages related to item information using URLs (Uniform Resource Locators). A browser for connection and a software program for information retrieval is embedded in the external data retrieval unit 1651. The external data retrieval unit 1651 activates the browser using the item information received from the link information addition unit 1653 as a key to connect to WWW. The external data retrieval unit 1651 then searches the external storage medium 1625 using a search engine such as "Yahoo" to retrieve a URL of a homepage related to the item information. The external data retrieval unit 1651 sends the acquired URL to the link information addition unit 1653.

The link information addition unit 1653, in addition to the performances of the link information addition unit 253 of Embodiment 1, sends the link item information to the external data retrieval unit 1651 when searching the program detailed information using the link item information. On receiving the information, the external data retrieval unit 1651 retrieves a URL of a homepage related to the link item information. The external data retrieval unit 1651 sends the retrieved URL to the link information addition unit 1653. The link information addition unit 1653 creates the link information composed of link item information, program ID, and URL including the URL received from the external data retrieval unit 1651. The link information addition unit 1653 adds the created link information to the program detailed information, resulting in linkage between each program detailed information and external data.

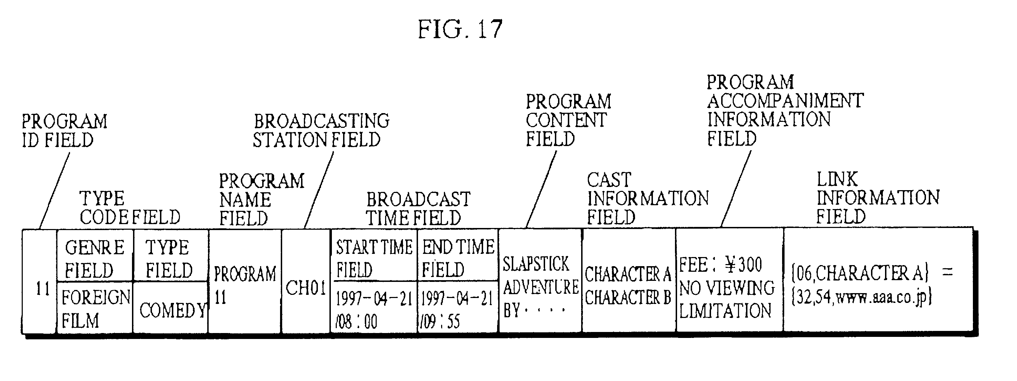

FIG.17 shows a piece of program detailed information to which the link information including the URL has been added as described above. The drawing indicates program "11" is linked with programs "32" and "54" by "character A" held in the cast information field. The drawing also indicates that a homepage with URL "www.aaa.co.jp" is related to "character A."

The construction of reception apparatus 1600 is the same as the reception apparatus 200 in Embodiment 1 except for an additional unit, external data acquisition unit 1620. Control unit 1612, display control unit 1603, and program data storage unit 1605 handle the same processes as the control unit 212, display control unit 203, and program data storage unit 205 of Embodiment 1 except for processes related to the external data acquisition unit 1620. The processes unique to the present embodiment are described below.

On receiving an instruction from the display control unit 1603, the external data acquisition unit 1620 accesses the homepage with the URL which is given with the instruction. The external data acquisition unit 1620 reads data from the homepage and sends it to the display control unit 1603. The external data acquisition unit 1620 includes a browser embedded in itself. This has been brought into practical use and is well known as Internet TV. Accordingly, it is not described in detail.

The display control unit 1603, in addition to the performances of the display control unit 203 of Embodiment 1, receives instructions from the user through various screens and operates to display external data. This process is described below for each screen.

The display control unit 1603 checks whether a URL is included in the link information of the program detailed information when the program detailed information screen as the search results is displayed. When a URL is included, display control unit 1603 generates a program detailed information screen including a measure with which the user can specify displaying of external data, displays the screen on display unit 204. The display control unit 1603 reads the format of this screen from program data storage unit 1605.

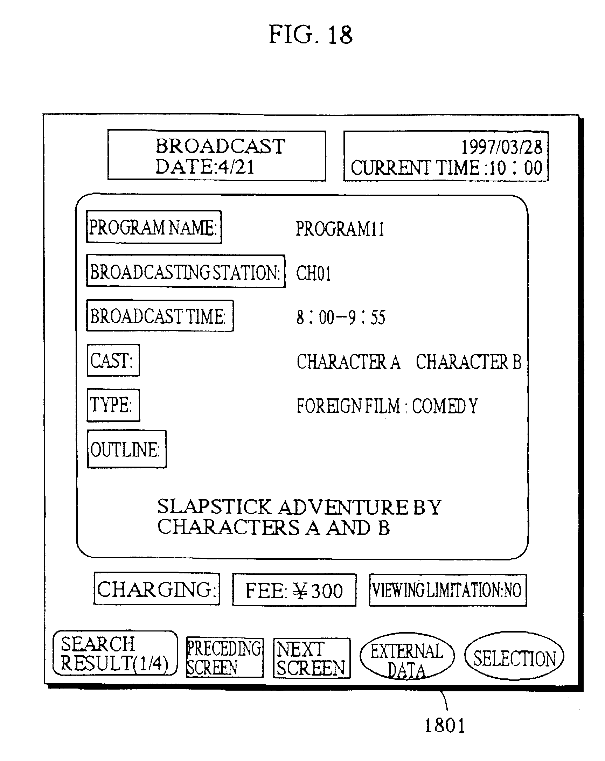

FIG.18 shows the program detailed information screen including a measure with which the user can specify displaying of external data.

The user presses the enter button 802 of remote controller 800 while positioning the cursor on the external data key 1801 when desiring to view the external data.

When the user specifies displaying of external data as described above, display control unit 1603 receives an instruction from control unit 1612 and creates an external data specification screen for receiving a specification of a piece of external data from the user, and displays the screen on display unit 204. The display control unit 1603 reads the format for the screen from program data storage unit 1605.

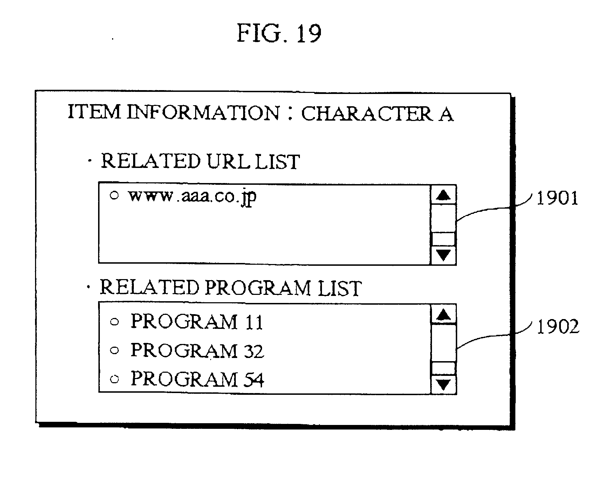

FIG.19 shows an external data specification screen. The screen includes an external data specification area 1901 and a program detailed information specification area 1902. When the user presses the enter button 802 of remote controller 800 while positioning the cursor on a desired URL in the external data specification area 1901, the specified external data is displayed on display unit 204. When the user presses the enter button 802 of remote controller 800 while positioning the cursor on a desired program in the program detailed information specification area 1902, the program detailed information screen of the specified program is displayed on display unit 204. The URLs and program names displayed on the external data specification screen are extracted from the program detailed information read by the display control unit 1603 from control unit 1612 using the program ID received from the control unit 1612 as the program search results.

When the user specifies a URL on the external data specification screen, display control unit 1603 receives an instruction from control unit 1612, sends the URL to the external data acquisition unit 1620, instructing it to read contents of the homepage of the URL. The display control unit 1603 displays the external data sent from the external data acquisition unit 1620 on display unit 204. The screen displaying the contents of a homepage is not illustrated. The user can return from this homepage content screen to the previous screen by pressing the cancel button 803 of remote controller 800.

When the user specifies a program on the external data specification screen, display control unit 1603 receives an instruction from control unit 1612, generates the program detailed information screen for displaying the program detailed information of the specified program and displays it on display unit 204.

When the user presses the cancel button 803 of remote controller 800 while the contents of the homepage is displayed, the display control unit 1603 receives an instruction from control unit 1612, generates the external data specification screen, and displays it on display unit 204.

The control unit 1612 sends instructions of "enter" and "cancel" input by the user with via the remote controller 800 to the display control unit 1603.

The program data storage unit 1605 stores the screen formats of the external data specification screen and the program detailed information screen for receiving external data display specification.

### Operation of Broadcasting apparatus

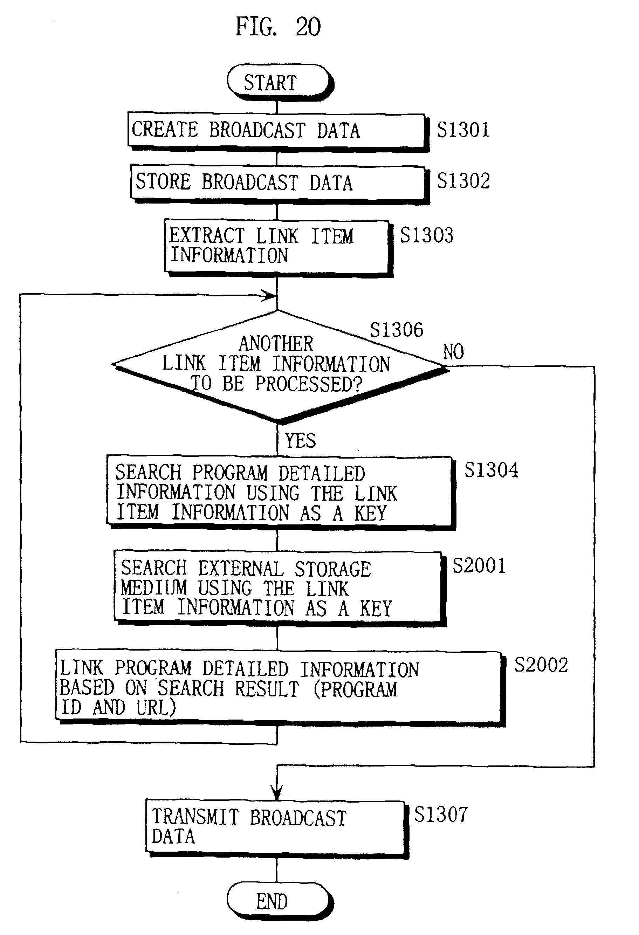

FIG.20 is a flow chart of the broadcast data creation process performed by the broadcasting apparatus 1650 in Embodiment 2. This process is described below with reference to the flowchart. Note that the steps overlapping the flowchart shown in FIG.13 are omitted.

The broadcast data creation unit 251 creates broadcast data, and stores the created broadcast data in the broadcast data storage unit 252. The link information addition unit 1653 extracts the link item information (steps S1303-S1303). The link information addition unit 1653 searches the program detailed information using the link item information as a key (step S1304). The link information addition unit 1653 sends the link item information to the external data retrieval unit 1651 so that it acquires the URL of the homepage related to the link item information (step S2001). The link information addition unit 1653 creates link information using the acquired URL and program ID and the item information used as a key for the searching, resulting in linkage between each program detailed information and the homepage (step S2002).

### Operation of Reception Apparatus

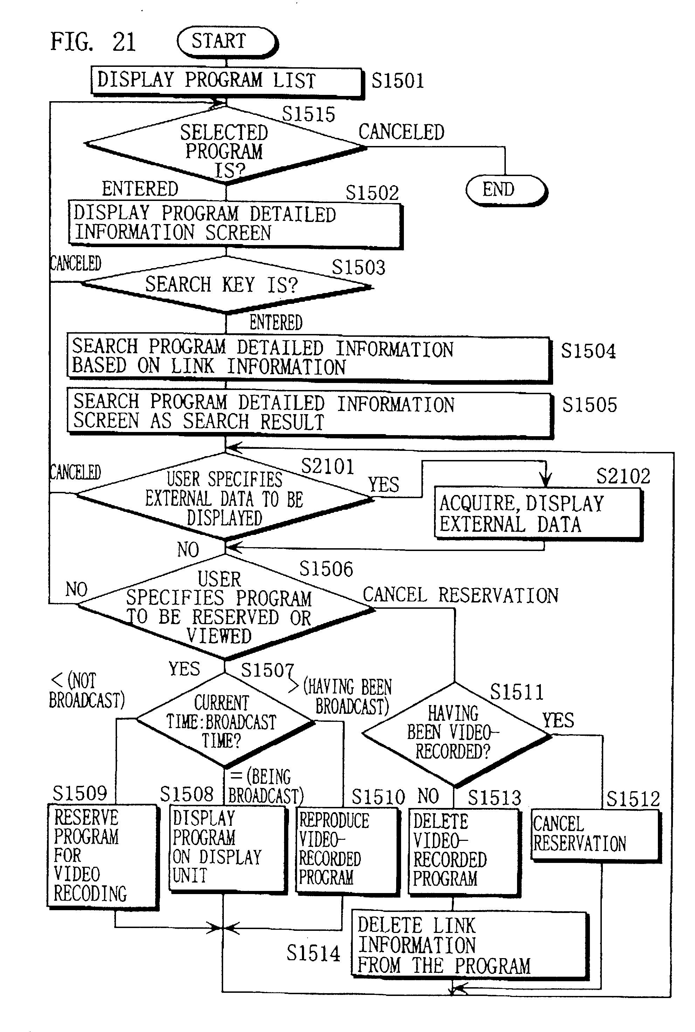

FIG.21 is a flow chart of the external data display process performed by the reception apparatus 1600 in Embodiment 2. This process is described below with reference to the flowchart. Note that the steps overlapping the flowchart shown in FIG.15 are omitted. Also, the processing of the broadcast data performed by the extraction unit 202 is omitted since it is the same as that shown in FIG.14.

Steps S1501 to S1504 are the same as Embodiment 1. Suppose, in the present Embodiment, the information retrieval is performed using item information " "character A" of item "cast."

Display control unit 1603 acquires program detailed information of a program of the program ID as the search results from program data storage unit 205. Display control unit 1603 then sorts the program detailed information based on the broadcast start time to create the program detailed information screen of the initial one, and displays the screen on display unit 204 (step S1505). The displayed program detailed information screen includes a button for external data display specification as shown in FIG.18 if the link information of the program detailed information includes a URL. when the user presses the enter button 802 of remote controller 800 while positioning the cursor on the "external data" button, this designation is notified to the display control unit 1603 from the control unit 1612. The display control unit 1603 analyzes the cursor position and recognizes this designation to display external data. The display control unit 1603 then displays the external data specification screen as shown in FIG.19. When the user requests the display of external data specifying a URL on the screen via the remote controller 800 (step S2101), the display control unit 1603 instructs the external data acquisition unit 1620 to acquire external data, sending the URL. The external data acquisition unit 1620 accesses a home page on the basis of this URL, reads the contents, and sends the read contents to display control unit 1603. The sent data is displayed on display unit 204 (step S2102). The user can change the home page display screen to the external data specification screen by pressing cancel button 803 of remote controller 800.

The user refers to the contents of the home page and determines whether to reserve a program. The process for the program reservation is omitted here since it is the same as Embodiment 1.

As apparent from the above description, according to Embodiment 2, broadcast unit 1650 broadcasts the broadcast data which includes the link information containing external data contained, as well as program detailed information. The reception apparatus 1600 receives a specification from the user and displays displays external data using the link information. With this construction, the can obtain broader information to determine whether to reserve or view a program by referring to external data from the program detailed information screen.

In the present embodiment, external data retrieval unit 1651 acquires a URL of home page using a search engine. However, URLs can be obtained from other sources, such as a CD- ROM attached to a published material or a home page providing index information.

In the present embodiment, reception apparatus 1600 is provided with external data acquisition unit 1620. However, the reception apparatus 1600 may merely show URLs to the user, without acquiring the contents of homepages.

The above described program information retrieval system may be achieved by a general computer and a program information retrieval process program, the program being stored in a storage medium.

The above described program information may, beforehand, be stored in a storage medium, such as a hard disk, of a supplier apparatus. The program information may be transferred to a receiver apparatus, or vice versa, or may be copied into a storage medium, such as a CD-ROM, which can be carried or delivered.

### <Embodiment 3>

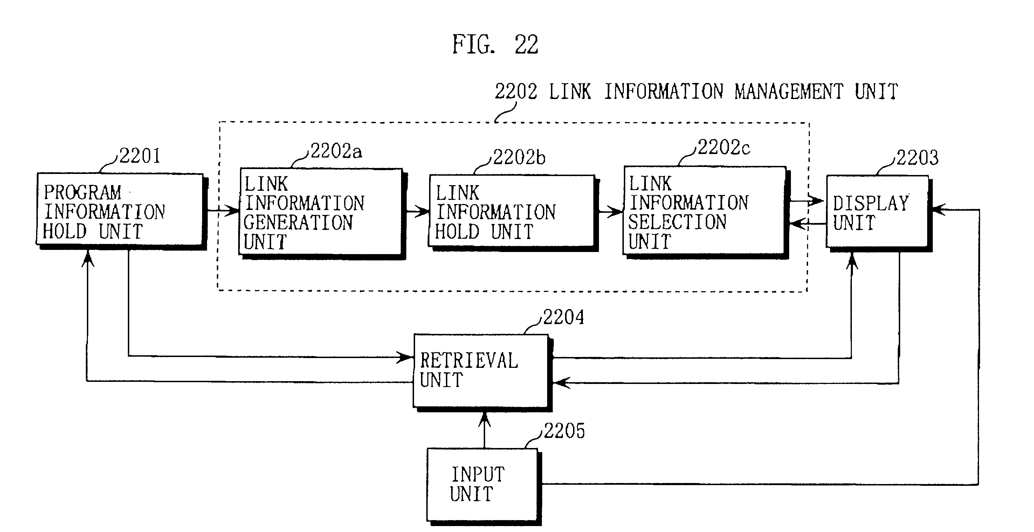

FIG.22 is a block diagram showing the construction of the program information retrieval apparatus in Embodiment 3.

The program information retrieval apparatus is composed of a program information hold unit 2201, a link information management unit 2202, a display unit 2203, a retrieval unit 2204 and an input unit 2205.

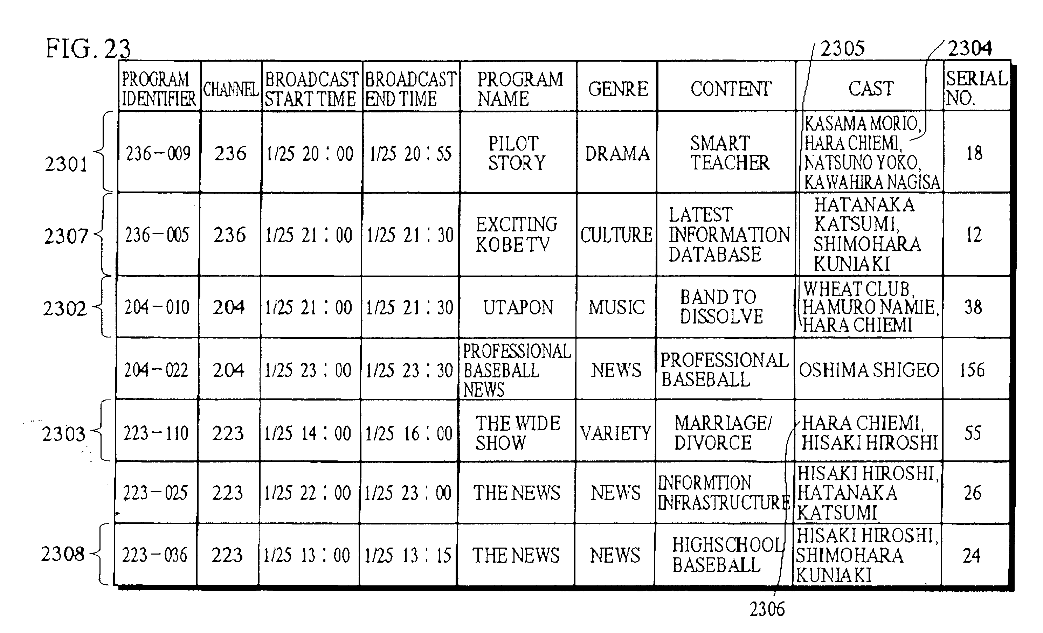

The program information hold unit 2201 is achieved by a storage apparatus such as a memory or a hard disk, and stores program information. The program information characterizes contents of broadcast programs for each program. The program information is supplied beforehand to a TV receiver, to a terminal used by a subscriber to an information network connected via a telephone line, or to an apparatus for reading a storage medium. These apparatuses receive the program information through broadcasts interleaving the information, via a communication line, or from a recording medium. FIG.23 shows a part of program information.

The program information includes a plurality of program attribute groups. Each program attribute group is composed of a plurality of program attribute items each of which includes program attribute values. Each program attribute value is a piece of information that characterizes a program. Each program attribute item represents a type of the program attribute value. FIG.23 shows program attribute values falling into each program attribute item. The top line of the table shows program attribute items: "program identifier," "channel", "broadcast start time," "broadcast end time," "program name," "genre," "content," "cast," and "series." Each program attribute group is a group of program attribute values of one program, such as the group indicated by 2301 in FIG.23. Each program identifier (ID) uniquely corresponds to a program.

It should be noted that this program information is an example and it may contain other program attribute items, or may contain a part of this program information. Although this program information includes programs provided on the same day, the program information may include programs provided in any time period.

The link information management unit 2202 refers to the program information stored in the program information hold unit 2201 and generates and manages link information which links programs with each other.

Link information management unit 2202 is composed of a link information generation unit 2202a, a link information hold unit 2202b, and a link information selection unit 2202c.

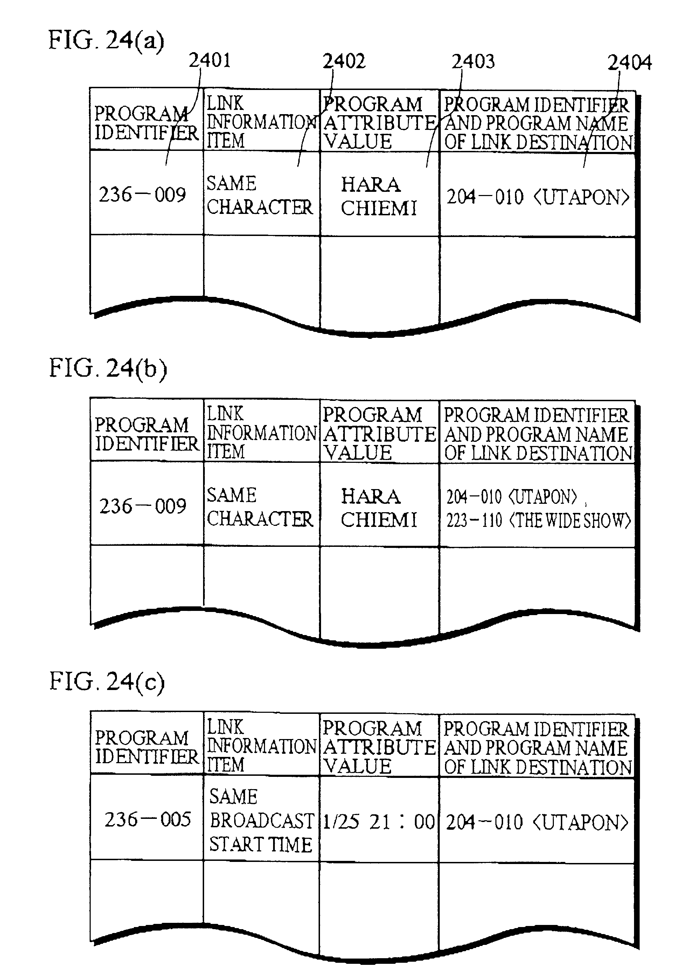

Link information generation unit 2202a generates link information based on link information items, where the link information items are rules for generating the link information. The link information relates a program attribute group including a program attribute value to other program attribute groups including program attribute values which are related to the former program attribute value in accordance with a predetermined rule. This relating process is executed for each program attribute value in a certain program attribute item. FIGS.24(a)-(c) show link information. For example, FIGS.24(a)-(b) show link information generated by relating the program attribute group including program attribute value "Hara Chiemi" to other program attribute groups including a value program attribute related to "Hara Chiemi" based on link information item "same character." The generation of the link information is described later.

Link information hold unit 2202b is achieved in a storage apparatus such as a memory or a hard disk, and stores the link information generated by the link information generation unit 2202a.

Link information selection unit 2202c selects link information among the link information stored in the link information hold unit 2202b based on a certain program attribute value, and sends the selected information to the display unit 2203.

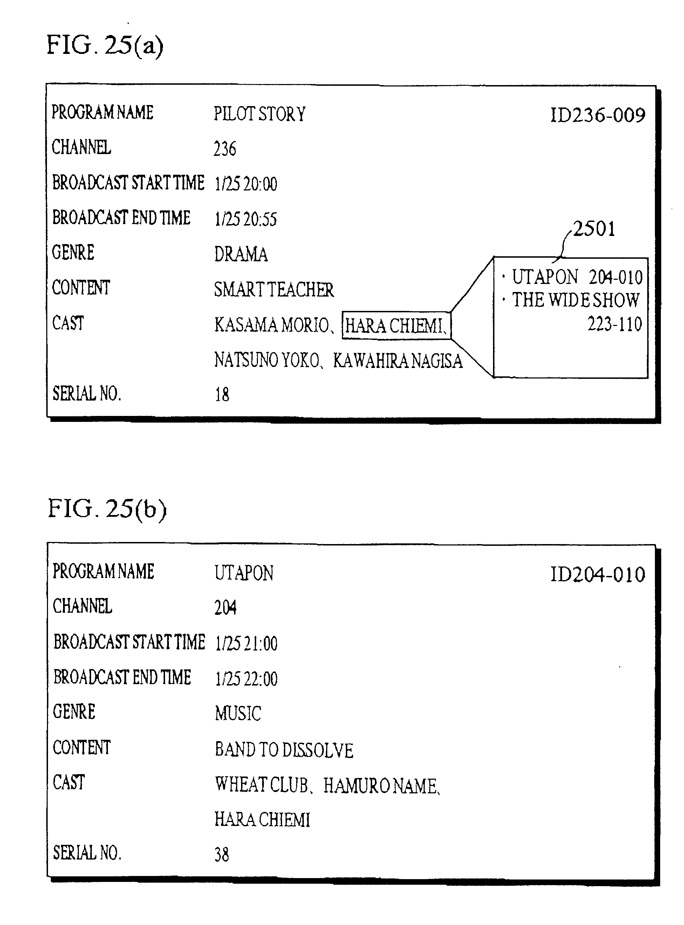

Display unit 2203 includes a display apparatus not illustrated, such as a CRT. Display unit 2203 displays program attribute values in units of programs retrieved by the retrieval unit 2204, and displays a link destination program identifier and a program name included in the link information selected by the link information selection unit 2202c. FIG.25(a) shows program attribute values of program "Pilot Story" and link destination program identifier "204-010" and "223-110" and program names "Utapon" and "The Wide Show."

Retrieval unit 2204 retrieves program information of a program selected by the user by referring to the information displayed on the display unit 2203, and displays the retrieved information on the display unit 2203, where the retrieval unit 2204 retrieves the information using the link destination program identifier of the program. For example, when the user selects "Utapon" as the link destination program, retrieval unit 2204 searches for program information using the identifier "204-010." FIG.25(b) shows the program information displayed on display unit 2203 as a result of this search.

Input unit 2205, including an infrared ray remote controller, is used by the user to input data for searching program information. For example, the user presses buttons of the infrared ray remote controller to input program attribute values or link destination program name which are used for search of program information.

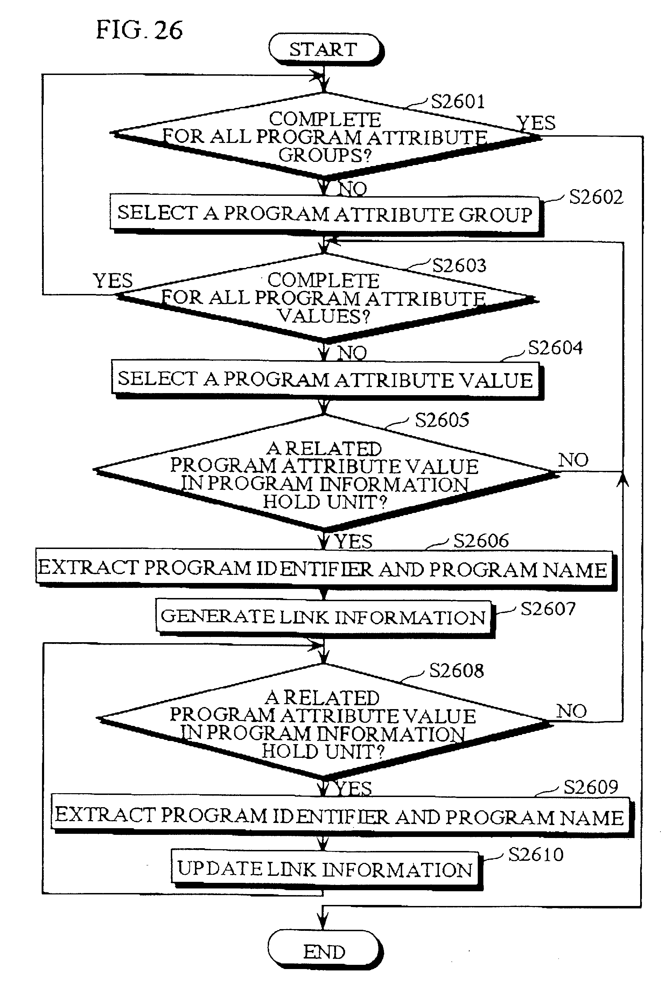

FIG.26 is a main flow chart of the link information generation process.

The link information generation process performed by the link information generation unit 2202a is described with reference to FIG.26.

The process is described using an example in which link information is generated using link information item "same character."

The program information shown in FIG.23 is obtained beforehand and is stored in program information hold unit 2201.

It is judged whether link information has been generated for each program attribute group of each program stored in the program information hold unit 2201 (step S2601). When it is judged as negative, control goes to step S2602: when it is judged as positive, the process ends.

A program attribute group is selected from program information stored in program information hold unit 2201 (step S2602). For example, program attribute group "2301" shown in FIG.23 is selected.

It is judged whether every program attribute value of the selected program attribute group has been related to other program attribute values in accordance with a predetermined rule (step S2603). When it is judged as negative, control goes to step S2604; when it is judged as positive, control returns to step S2601.

A program attribute value is selected from the program attribute group (step S2604). For example, character "Hara Chiemi" indicated as "2304" shown in FIG.23 is selected.

It is judged whether a program attribute value related to the selected program attribute value is detected in the program information hold unit in accordance with the predetermined rule (step S2605). When it is judged as positive, control goes to step S2606; when it is judged as negative, control returns to step S2603. For example, it is judged as positive in the above step since the character "Hara Chiemi," as indicated by "2305" in FIG.23, is detected in the program information hold unit.

The program identifier and the program name are extracted from the program attribute group containing the program attribute value (step S2606). For example, program identifier "204-010" and program name "Utapon" are extracted from the program attribute group 2302 containing character "Hara Chiemi."

The link information is generated using the program identifier and the program name, and the generated link information is stored in the link information hold unit 2202b (step S2607). For example, the link information as shown in FIG.24(a) is generated. In the drawing, 2401 represents a link source program identifier, 2402 a link information item, 2403 a program attribute value, 2404 a program identifier and a program name of a link destination.

It is judged again whether a program attribute value related to the selected program attribute value is detected in the program information hold unit in accordance with the predetermined rule (step S2608). When it is judged as positive, control goes to step S2609; when it is judged as negative, control returns to step S2603. For example, it is judged as positive in the above step since the character "Hara Chiemi," as indicated by "2306" in FIG.23, is detected in the program information hold unit.

The program identifier and the program name are extracted from the program attribute group containing the program attribute value (step S2609). For example, program identifier "223-110" and program name "The Wide Show" are extracted from the program attribute group 2303 containing character "Hara Chiemi."

The link information is updated using the program identifier and the program name, and the updated link information is stored in the link information hold unit 2202b (step S2610). Control returns to step S2608. For example, the link information as shown in FIG.24(a) is updated to that as shown in FIG.24(b).

In the present example, It is judged in the second round of step S2608 that a program attribute value related to the selected program attribute value is not detected since character "Hara Chiemi" is not detected any more. As a result, control returns to step S2603, and the process is repeated for each character included in the program attribute group of program "Utapon." The repeated process is not detaled here. Eventually, when it is judged that every program attribute value of the selected program attribute group has been related to other program attribute values in step S2603, control returns to step S2601.

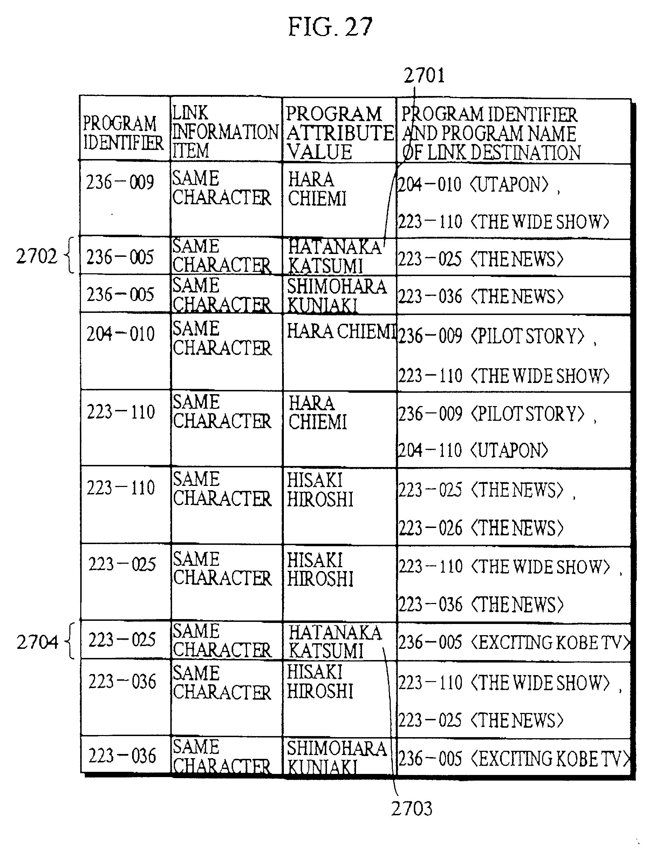

In this way, the present process is performed until It is judged in step S2601 that link information has been generated for each program attribute group of each program stored in the program information hold unit 2201. FIG.27 shows the link information eventually generated in the above process.

A rule may be additionally applied to the generation of link information. An applicable rule may be that link information is generated only for the programs which start to be broadcast after a selected program starts. Another applicable rule may be that link information is generated only for the programs having the same genre as the selected program. If the former rule is applied to the program attribute group 2301 shown in FIG.23, link information is generated only for program "Utapon." If the latter rule is applied to the example case of the present embodiment, all the link information is deleted from a once-generated list of link information since no program is found to satisfy the rule.

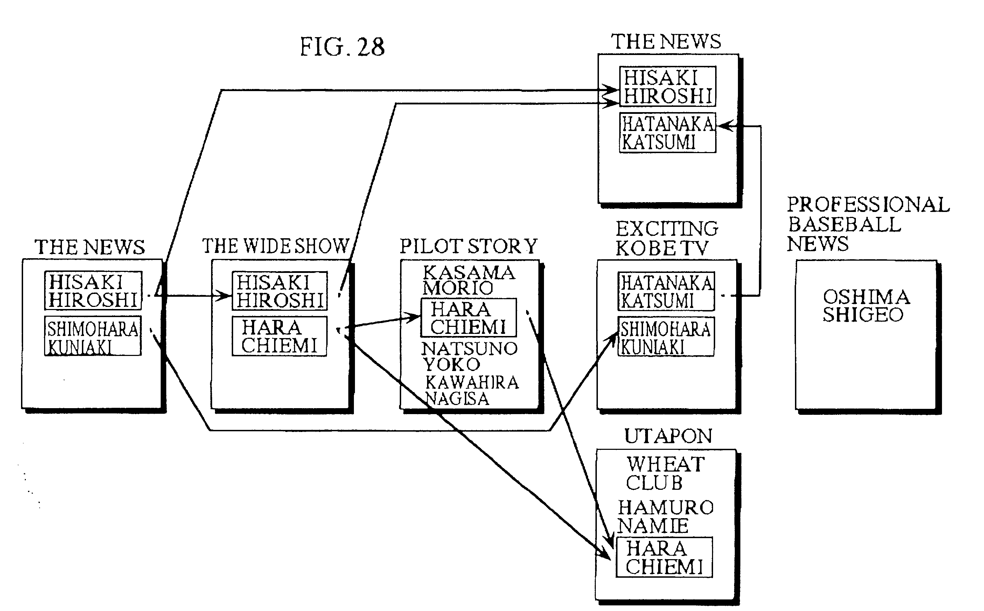

FIG.28 shows the process of generating link information only for the programs broadcast after a selected program using link information item "same character" in the case of the present embodiment, where the arrow source indicates a link source program, and the arrow destination a link destination program.

The present embodiment shows an example case in which the link information is generated in accordance with link information item "same character." However, all the possible combinations of attributes may be used as the link information item. For example, if "same broadcast start time" is specified as the link information item, the link information is generated including all the programs having the same broadcast start time. For example, "Kobe SuperTV" represented as 2307 in FIG.23 and "Utapon" represented as 2302 in FIG.23 are included in the link information shown in FIG.24(c) since they have same broadcast start time.

The present embodiment shows an example case in which the link information is generated by linking program attribute groups having the same program attribute value with each other. However, program attribute groups having a plurality of the same program attribute values may be linked with each other. For example, "same broadcast start time and same broadcast start time" may be specified as the link information item.

The present embodiment shows an example case in which the link information is generated by linking program attribute groups having the same program attribute value with each other. However, a rule related to a program attribute value may be specified as the link information item. For example, "later programs" may be specified as the link information item so that the link information is generated including all the programs broadcast later than a specified program based on their "broadcast start time."

The link information may not include "link information item," "program attribute value," and "link destination program name." The link information may be composed of only "program identifier" and "link destination program identifier." Also, the link information may be composed of "program identifier," "link destination program identifier," and one or more other ones.

Furthermore, when there is no need to provide both the link source and the link destination, as in the cases where "same character" or "same broadcast start time" is specified as the link information item, each piece of link information may be composed of a program attribute value and a program identifier of the same program attribute group or may be composed of the same combination and one or more other ones.

The above described program information retrieval apparatus may be achieved by a general computer and a program information retrieval process program, the program being stored in a storage medium.

### <Embodiment 4>

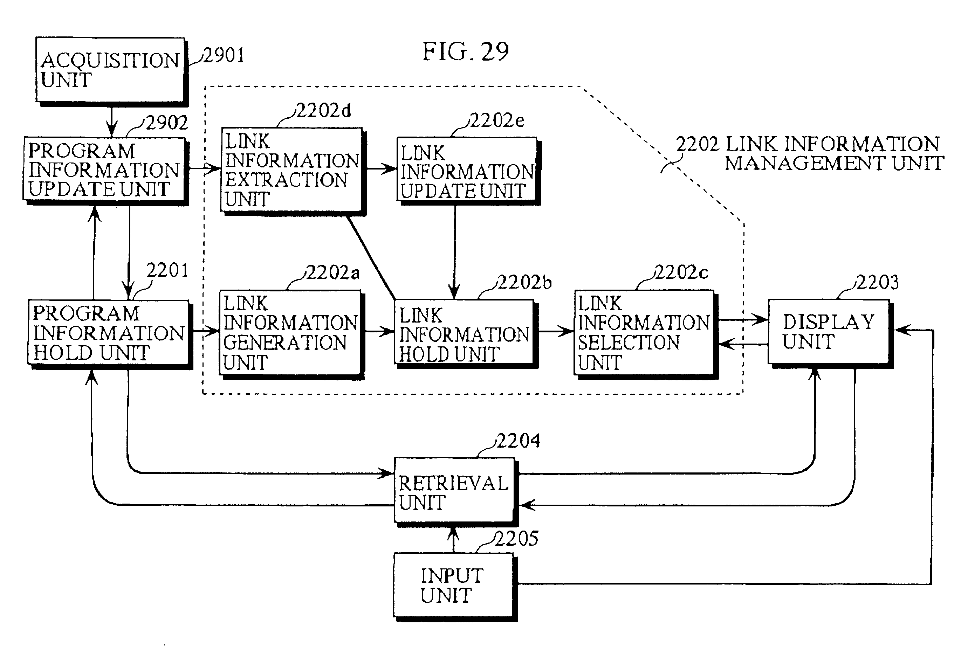

FIG.29 is a block diagram showing the construction of the program information retrieval apparatus in Embodiment 4.

The program information retrieval apparatus is composed of a program information hold unit 2201, a link information management unit 2202, a display unit 2203, a retrieval unit 2204, an input unit 2205, an acquisition unit 2901, and a program information update unit 2902.

Of the above mentioned components, only ones unique to the present embodiment are described below.

The acquisition unit 2901, being achieved by a TV receiver or a terminal used by a subscriber to an information network connected via a telephone line, receives program attribute groups through broadcasts, acquires program attribute groups via a communication line, or acquires program attribute groups from a recording medium.

The program information update unit 2902 updates the program information stored in the program information hold unit 2201 by comparing program attribute groups newly obtained by acquisition unit 2901 with the program attribute groups acquired immediately before.

Link information management unit 2202 updates link information based on the program information updated by program information update unit 2902.

Link information management unit 2202 consists of link information extraction unit 2202d and link information update unit 2202e.

Link information extraction unit 2202d extracts, from link information hold Unit 2202b, link information related to program attribute values updated by program information update unit 2902.

Link information update unit 2202e updates the link information extracted by link information extraction unit 2202d based on program attribute values updated by program information update unit 2902, and stores the updated link information in link information hold unit 2202b.

The link information update process is described below in detail.

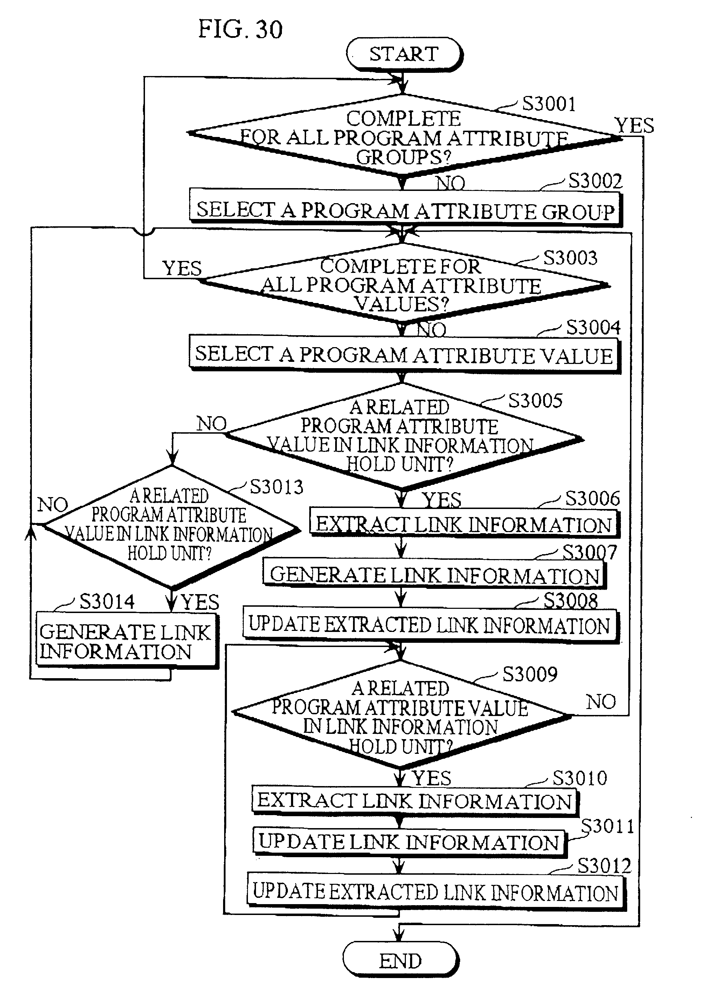

FIG.30 is a flow chart of the link information update process.

The process is described using an example in which link information is added in relation to link information item "same character." It is assumed that the link information shown in FIG.27 is stored beforehand in the link information hold unit 2202b.

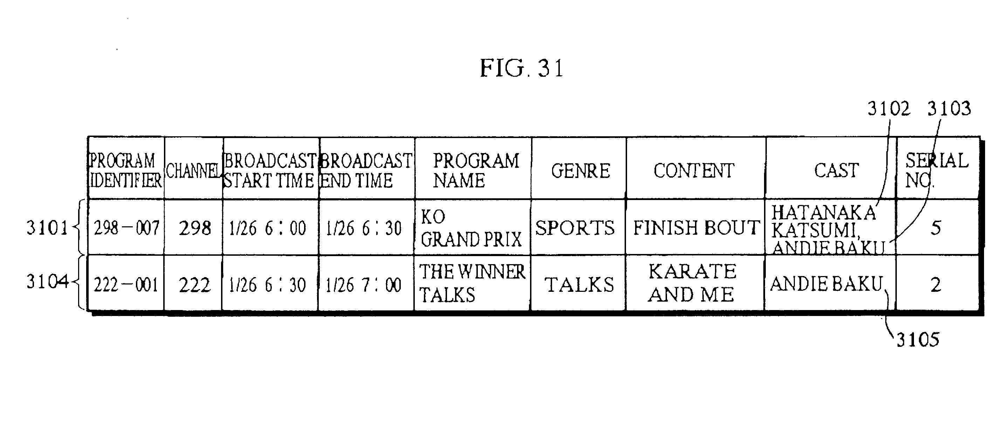

It is judged whether link information has been updated for each program attribute group of each program which has been updated by the program information update unit 2902 (step S3001). When it is judged as negative, control goes to step S3002; when it is judged as positive, the process ends. For example, program attribute groups as shown in FIG.31 has been added by the program information update unit 2902.

A program attribute group is selected from program information stored in program information hold unit 2201 (step S3002). For example, program attribute group "3101" shown in FIG.31 is selected.

It is judged whether every program attribute value of the selected program attribute group has been related to other program attribute values in accordance with a predetermined rule (step S3003). When it is judged as negative, control goes to step S3004; when it is judged as positive, control returns to step S3001.

A program attribute value is selected from the program attribute group (step S3004). For example, character "Hatanaka Katsumi" indicated as "3102" in FIG.31 is selected.

It is judged whether a program attribute value related to the selected program attribute value is detected in the link information hold unit 2202b in accordance with the predetermined rule (step S3005). When it is judged as positive, control goes to step S3006; when it is judged as negative, control returns to step S3003. For example, it is judged as positive in the above step since the character "Hatanaka Katsumi," as indicated by "2701" in FIG.27, is detected in the link information hold unit 2202b.

The piece of link information containing the detected program attribute value is extracted (step S3006). For example, a piece of link information "2702" containing the character "Hatanaka Katsumi" as shown in FIG.27 is extracted.

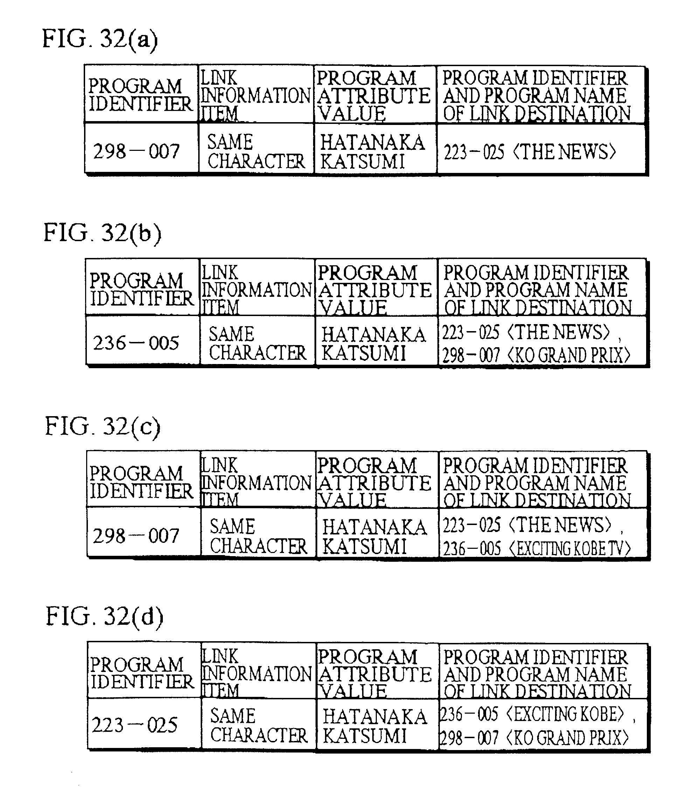

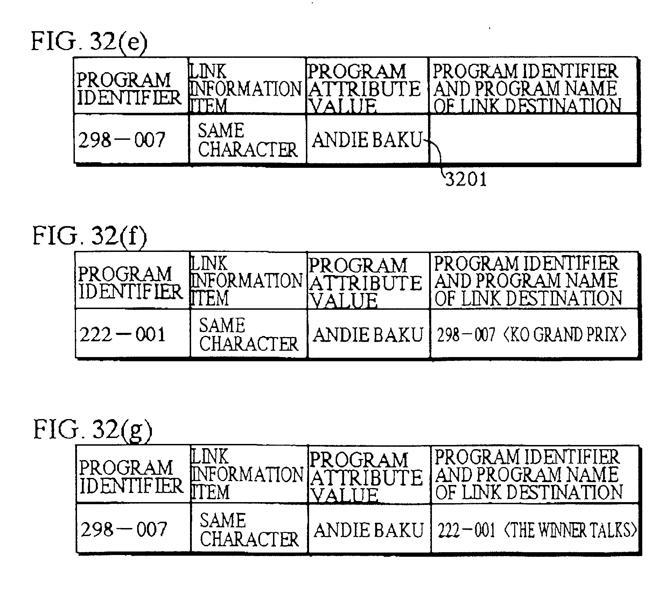

Link information is generated concerning the program attribute group and program attribute value currently processed. The "program identifier" and "program name" of the link information extracted in step S3006 are inserted into the "link destination program identifier and program name" of the generated link information. This link link information is stored in the link information hold unit 2202b (step S3007). For example, the link information as shown in FIG.32(a) is generated.

The extracted link information is updated (step S3008). For example, the link information "2702" shown in FIG.27 is updated to link information as shown in FIG.32(b).

It is judged again whether a program attribute value related to the selected program attribute value is detected in the link information hold unit 2202b in accordance with the predetermined rule (step S3009). When it is judged as positive, control goes to step S3010; when it is judged as negative, control returns to step S3003. For example, it is judged as positive in the above step since the character "Hatanaka Katsumi," as indicated by "2703" in FIG.27, is detected in the link information hold unit 2202b.

The piece of link information containing the detected program attribute value is extracted (step S3010). For example, a piece of link information "2704" containing the character "Hatanaka Katsumi" as shown in FIG.27 is extracted.

The "program identifier" and "program name" of the link information extracted in step S3010 are inserted into the "link destination program identifier and program name" of the link information generated in step S3007 (step S3011). For example, the link information shown in FIG.32(a) is updated as shown in FIG.32(c).

The "program identifier" and "program name" of the link information generated in step S3007 are inserted into the "link destination program identifier and program name" of the link information extracted in step S3010 (step S3012). For example, the link information "2704" shown in FIG.27 is updated to link information as shown in FIG.32(d).

In the present example, it is judged in the second round of step S3009 that a program attribute value related to the selected program attribute value is not detected since character "Hatanaka Katsumi" is not detected any more. Accordingly, control goes to step S3003.

In the present example, it is judged as negative in the second round of step S3003. In the following step S3004, for example, character "Andie Baku" indicated as "3103" in FIG.31 is selected.

In the following step S3005, in the present example, it is judged that a program attribute value related to the selected program attribute value "Andie Baku" is not detected in the link information hold unit 2202b in accordance with the predetermined rule. Control goes to step S3013.

In step S3013, it is judged whether a program attribute value related to the selected program attribute value is detected in the program information update unit in accordance with the predetermined rule. When it is judged as positive, control goes to step S3014; when it is judged as negative, control returns to step S3003. For example, it is judged as positive in the above step since the character "Andie Baku" is detected.

In step S3014, a piece of link information that has no link destination information is generated. For example, the link information as shown in FIG.32(e) is generated. Then control returns to step S3003.

In the present example, it is judged as positive in the third round of step S3003, and control returns to step S3001.

It is judged as negative in the second round of step S3001, and control goes to step S3002.

In the second round of step S3002, program attribute group "3104" shown in FIG.31 is selected, and control goes to step S3003.

In this round of step S3003, it is judged as negative. Control then goes to step S3004.

In step S3004, character "Andie Baku" indicated as "3105" in FIG.31 is selected.

In the following step S3005, it is judged as positive and control goes to step S3006.

In this round of step S3006, the link information as shown in FIG.32(e) including the character "Andie Baku" is extracted.

In the following step S3007, the link information as shown in FIG.32(f) is generated.

In the following step S3008, the link information as shown in FIG.32(e) is updated to the link information as shown in FIG.32(g).

In the following step S3009, it is judged that no program attribute value related to the selected program attribute value is detected, and control returns to step S3003.

In this round of step S3003, it is judged that every program attribute value of the selected program attribute group has been related to other program attribute values in accordance with a predetermined rule, and control returns to step S3001.

In this round of step S3001, it is judged that link information has been updated for each program attribute group of each program which has been updated by the program information update unit 2902, and the process ends.

The present embodiment describes the link information update process using an example in which program information and link information are added to the existent information. However, the link information may be updated when the program information is deleted or changed in part.

The above described program information retrieval apparatus may be achieved by a general computer and a program information retrieval process program, the program being stored in a storage medium.

### <Embodiment 5>

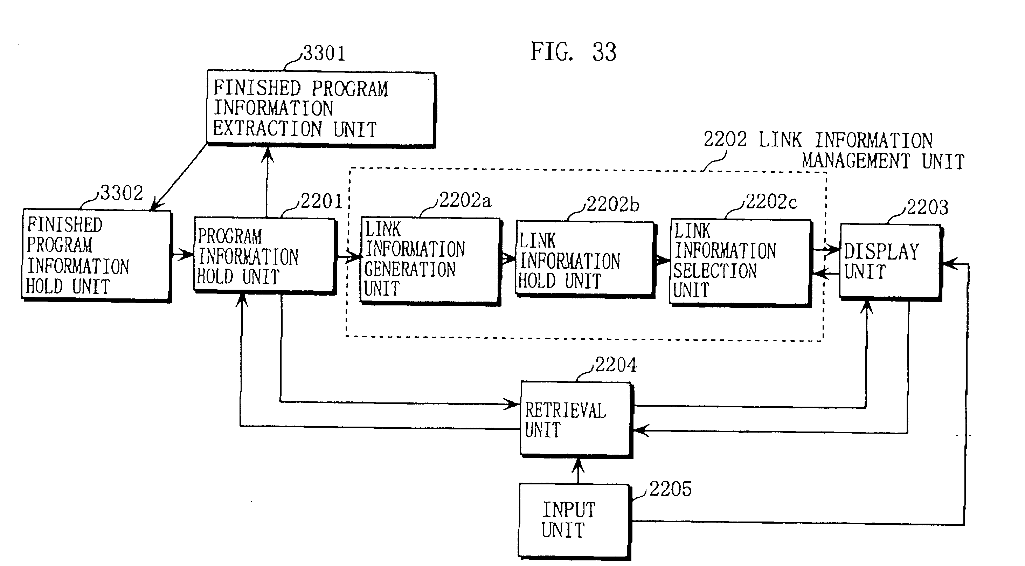

FIG.33 is a block diagram showing the construction of the program information retrieval apparatus in Embodiment 5.

The program information retrieval apparatus is composed of a program information hold unit 2201, a link information management unit 2202, a display unit 2203, a retrieval unit 2204, an input unit 2205, a finished program information extraction unit 3301, and a finished program information hold unit 3302.

Of the above mentioned components, only ones unique to the present embodiment are described below.

Finished program information extraction unit 3301 holds the current time. Finished program information extraction unit 3301 compares the current time with the program attribute value of program attribute item "broadcast end time" held in program information hold unit 2201 every certain time period. When the broadcast end time is later than the current time, finished program information extraction unit 3301 judges that the corresponding program has not been broadcast, and does not proceed to a particular process; when the broadcast end time is earlier than the current time, finished program information extraction unit 3301 judges that the corresponding program has been broadcast, and extracts the program attribute group including the program attribute value from the program information hold unit 2201.

Finished program information hold unit 3302 stores the program attribute group extracted by finished program information extraction unit 3301.

The extraction and storage of the finished program information are described below in detail.

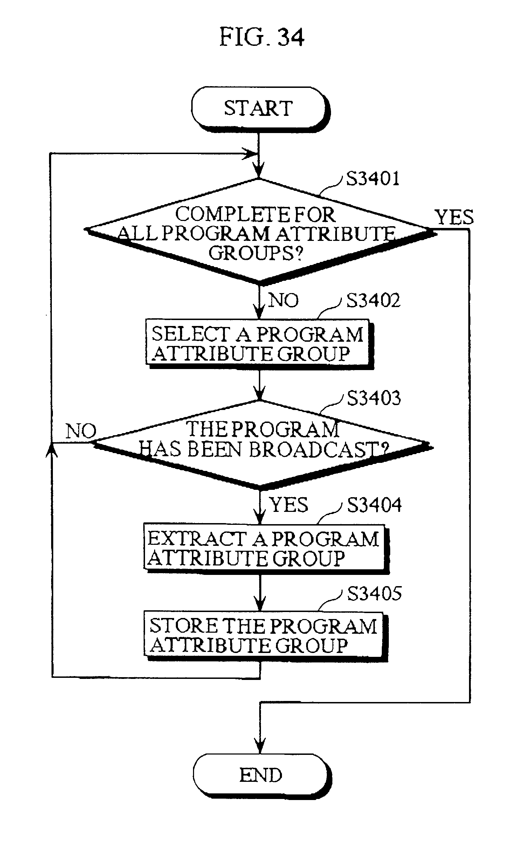

FIG.34 is a flow chart of the extraction and storage of the finished program information.

In the following example used for describing the process, it is assumed that the current time is "1/25 14:00." It is also assumed that the program information as shown in FIG.23 is stored in program information hold unit 2201.

It is judged whether the finished program information has been extracted for each program attribute group stored in program information hold unit 2201 (step S3401). When it is judged as negative, control goes to step S3402; when it is judged as positive, the process ends. In the present example, it is judged as negative, and control goes to step S3402.

A program attribute group is selected (step S3402). In the present example, program attribute group "2308" as shown in FIG.23 is selected.

It is judged whether the program having the selected program attribute group has been broadcast by comparing the current time with the broadcast end time included in this program attribute group (step S3403). When it is judged as negative, control returns to step S3401; when it is judged as positive, control goes to step S3404. In the present example, since the broadcast end time "1/25 13:15" is earlier than the current time "1/25 14:00," it is judged that the target program has been broadcast.

The program attribute group including the program attribute value (in this case, "broadcast end time" value) is extracted from the program information hold unit 2201 (step S3404). In the present example, program information group "2308" as shown in FIG.23 is extracted.

The extracted program attribute group is stored in the finished program information hold unit (step S3405). Control then returns to step S3401.

In the present example, in the second round of step S3401, it is judged as negative again, and control goes to step S3402.

In the second round of step S3402, program attribute group "2301" as shown in FIG.23 is selected, and control goes to step S3403.

In the second round of step S3403, it is judged that the target program has not been broadcast since the broadcast end time "1/25 20:55" is later than the current time "1/25 14:00," and control returns to step S3401.

It should be noted that only selected pieces of program information satisfying a certain condition may be preserved. This is achieved when each program attribute group stored in program information hold unit 2201 includes a preservation attribute which indicates whether the current program attribute group should be preserved; and when finished program information hold unit 3302 includes a prohibition unit which prohibits a program attribute group from being preserved in accordance with the preservation attribute. For example, the preservation attribute may be specified for desired program attribute groups.

The above described program information retrieval apparatus may be achieved by a general computer and a program information retrieval process program, the program being stored in a storage medium.

### <Embodiment 6>

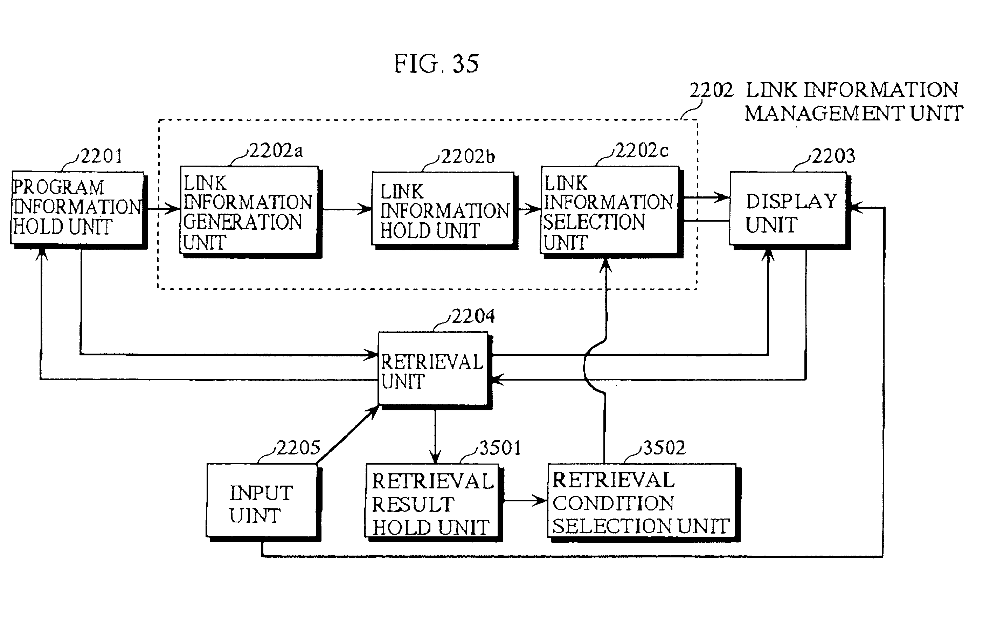

FIG.35 is a block diagram showing the construction of the program information retrieval apparatus in Embodiment 6.

The program information retrieval apparatus is composed of a program information hold unit 2201, a link information management unit 2202, a display unit 2203, a retrieval unit 2204, an input unit 2205, a retrieval result hold unit 3501, and a retrieval condition selection unit 3502.

Of the above mentioned components, only ones unique to the present embodiment are described below.

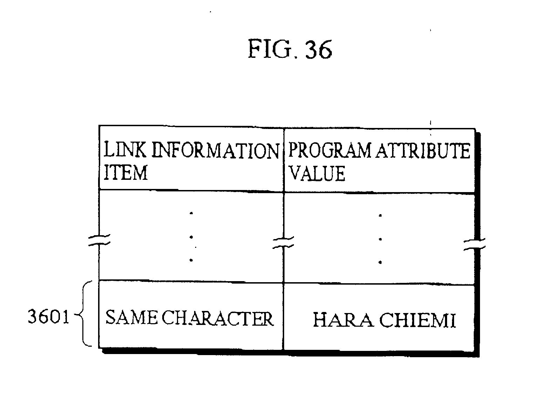

Retrieval result hold unit 3501 holds a retrieval history of the retrieval unit 2204. For example, suppose the user, through the program information linked as shown in FIG.28, has retrieved program information of "Pilot story" as a result of a search specifying "Hara Chiemi" from the information screen of "The Wide Show." Then, retrieval result hold unit 3501 adds a piece of retrieval result information "3601" as shown in FIG.36 to the retrieval result.

Retrieval condition selection unit 3502 selects a latest-used program attribute value, a latest-used link information item, a program attribute value or a link information item which has been used the most times, or the like based on the retrieval result held in the retrieval result hold unit 3501. In the present example, retrieval condition selection unit 3502 selects program attribute value "Hara Chiemi" as the latest-used program attribute value.

Link information selection unit 2202c selects link information related by the program attribute value selected by the retrieval condition selection unit 3502. In the present example, link information selection Unit 2202c selects link information related by "Hara Chiemi."

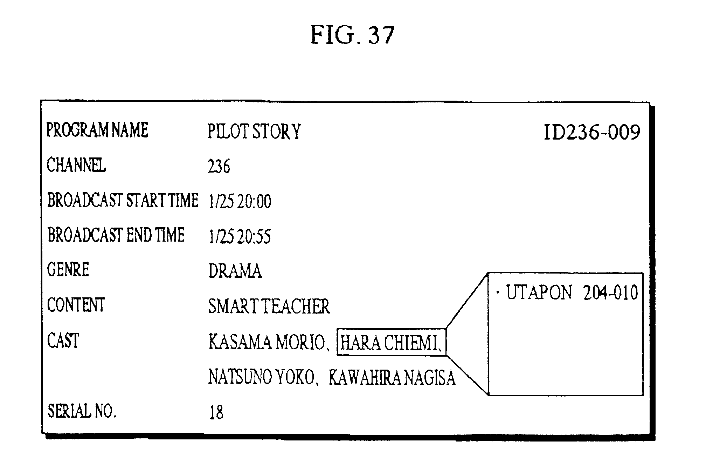

Display unit 2203, as in Embodiment 3, displays program attribute values in units of programs retrieved by the retrieval unit 2204, and displays a link destination program identifier and a program name included in the link information selected by the link information selection unit 2202c. FIG.37 shows the contents displayed in the present example which includes program attribute values of program "Pilot Story" and link destination program identifier "204-010" and program name "Utapon".

The above description uses an example with link information item "same character." However, other link information item, such as "same time" or "same link" may be used as well.

Retrieval condition selection unit 3502 may select a plurality of program attribute values. Also, link information selection unit 2202c may select a plurality of pieces of link information.

The above described program information retrieval apparatus may be achieved by a general computer and a program information retrieval process program, the program being stored in a storage medium.

In Embodiments 3-6, program information not including link information is acquired, then the program information is searched using link information that is generated and held. However, as in Embodiments 1-2, program information including link information may be acquired so that the program information is searched using the link information that has been included in the program information. In this case, the program information retrieval apparatus does not include a means for generating link information. Instead, program information suppliers, as as a broadcasting station, include such means and provides program information including link information to the program information retrieval apparatus.

### <Embodiment 7>

The Embodiment 7 section introduces the program information retrieval apparatus with a feature of displaying information of concurrently broadcast programs.

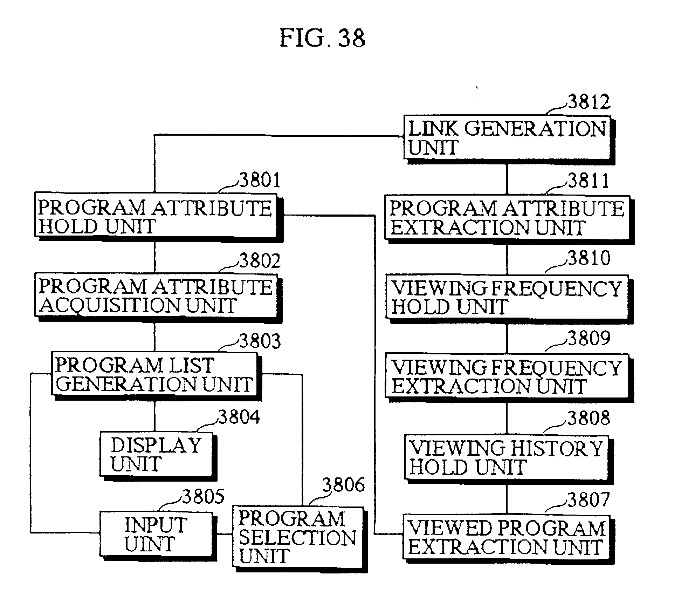

FIG.38 is a block diagram showing the construction of the program information retrieval apparatus in Embodiment 7.

The program information retrieval apparatus is composed of a program attribute hold unit 3801, a program attribute acquisition unit 3802, a program list generation unit 3803, a display unit 3804, an input unit 3805, a program selection unit 3806, a viewed program extraction unit 3807, a viewing history hold unit 3808, a viewing frequency extraction unit 3809, a viewing frequency hold unit 3810, a program attribute extraction unit 3811, and a link generation unit 3812.

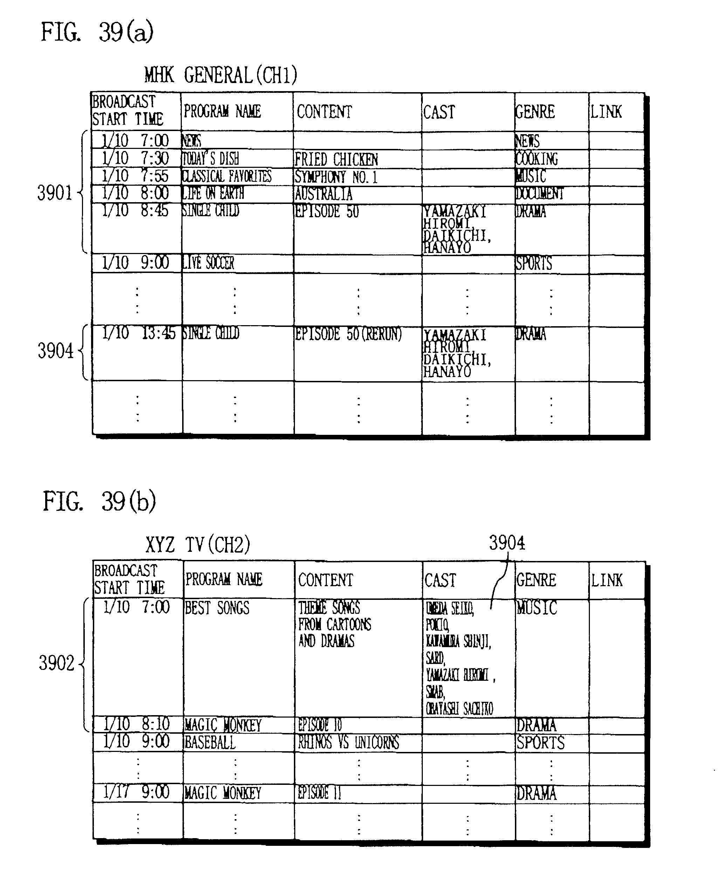

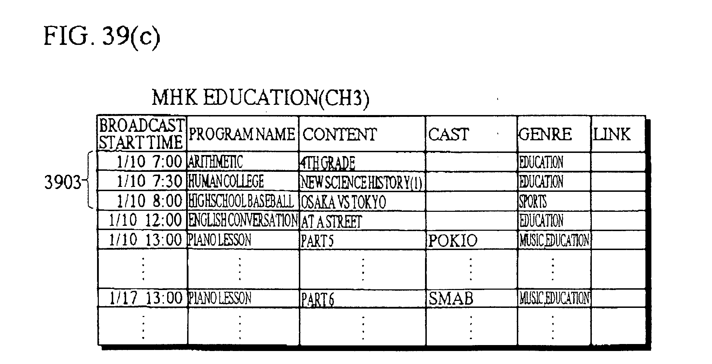

Program attribute hold unit 3801 holds program attributes in units of programs. FIGs.39(a)-(c) show a part of program attributes for respective broadcasting stations. Here, the program attributes constitutes detailed information of the programs. For example, as shown in FIG.39, the program attributes are divided into a variety of program attribute items "broadcast start time," "program name," "content," "cast," "genre," and "link." It is assumed that these program attributes are sent from a broadcasting station beforehand, that the link information is generated by the link generation unit 3812, and that, for example, the program attributes shown in FIGs.39(a)-(c) are stored in a hard disk.

Program attribute acquisition unit 3802 acquires, from program attribute hold unit 3801, program attributes in a range of time including a time specified by the user. For example, program attribute acquisition unit 3802 acquires program attributes of programs broadcast by all the broadcasting stations between 7:00 and 9:00 on January 10th, namely, program attribute groups 3901, 3902, and 3903 as shown in FIG.39.

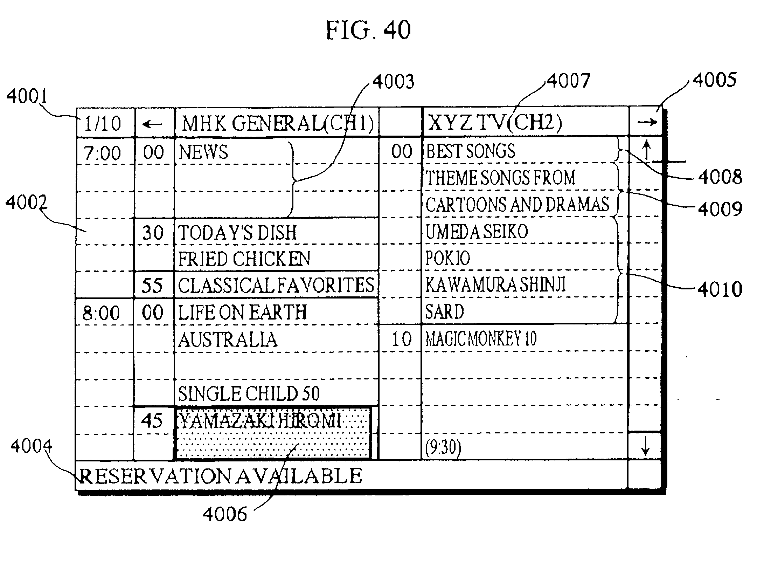

Program list generation unit 3803 generates a program list using the program attributes acquired by the program attribute acquisition unit 3802 and displays the generated program list on display unit 3804 when receiving an instruction from the user via the input unit 3805. The amount of information as the program attributes used in the program list is limited by the size of the display area of the display unit 3804. The program list generation unit 3803 also highlights an area in a displayed program list selected by the user. FIG.40 shows a program list example. The program list includes program attribute groups 3901 and 3902 of different two channels. 4006 in FIG.40 indicates an area highlighted by program list generation unit 3803. In the same drawing, 4001 represents a date field, 4002 a time field, 4003 a program attribute display field, 4004 a link information display field, 4005 a scroll icon display field, 4006 a selected program, 4007 a channel display field, 4008 a program name display field, 4009 a content display field, and 4010 a cast display field. Here, the program attribute group 3904 shown in FIG.39(b) includes seven characters in the cast column for program "Best songs," while the program list shown in FIG.40 includes four of them for the same program due to a limitation to the size of the cast display field 4010.

The program list generation unit 3803 also retrieves link information, from the program attribute acquisition unit 3802, that includes a certain program attribute among all the programs broadcast in the same time zone as the currently processed program. For example, the program list generation unit 3803 retrieves link information including program attribute "Yamazaki Hiromi" and displays a message, "Yamazaki Hiromi appears in a concurrent program."

Display unit 3804 displays the program list generated by the program list generation unit 3803. For example, display unit 3804 displays the program list shown in FIG.40 on a TV screen.

Input unit 3805 is used by the user to search or selects program information. For example, the user pushes buttons on an infrared ray remote controller to input a channel number or a time or to search or select program information.

Program selection unit 3806, when the user selects a program on the program list displayed on the 3804, actually receives the selected program for viewing, reserves the selected program for receiving, or reserves the selected program for video recording, and notifies program list generation unit 3803 of an effectively performed one of these processes. On receiving this notification, program list generation unit 3803 highlights the selected program on the screen. For example, the user selects program "Single Child 50" represented as 4006 in FIG.40 by operating an infrared ray remote controller. Program selection unit 3806 then notifies program list generation unit 3803 of the selected program "Single Child 50.".

Program extraction unit 3807 extracts from program attribute hold unit 3801 program attributes of programs having been viewed. For example, when the user views "Single Child" broadcast on 13:45, January 10, program extraction unit 3807 extracts program attributes represented as 3904 in FIG.39(a).

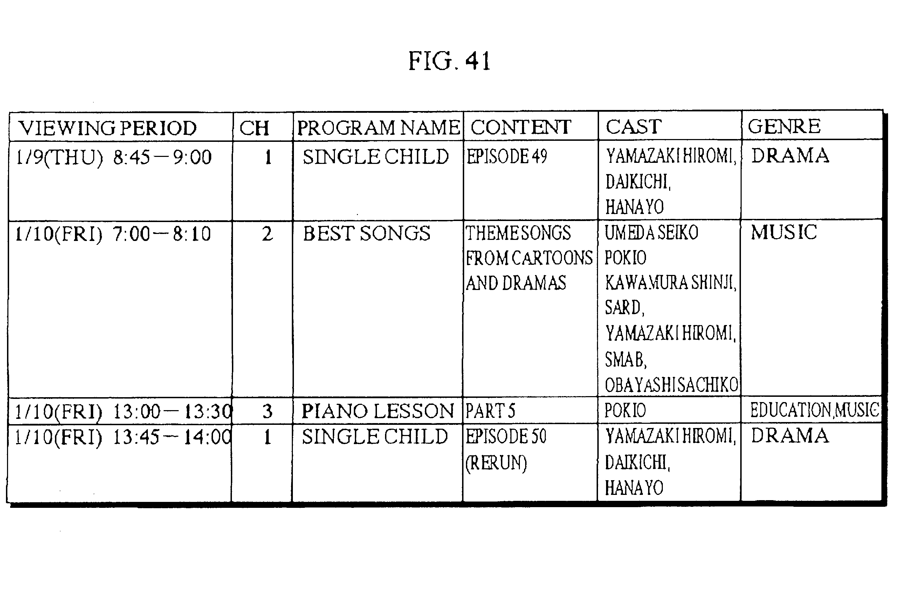

Viewing history hold unit 3808 sequentially stores program attributes of programs extracted by the program extraction unit 3807. The information held by the viewing history hold unit 3808 is regarded as the viewing history, and is also referred to as a viewing history table. Here, the viewing history shows the history of programs viewed by the user, including the program attributes and information of channels but excluding information of links between the programs. FIG.41 shows a viewing history table. For example, information of programs having viewed by the user is stored in a hard disk as the viewing history table, such as the one shown in FIG.41.

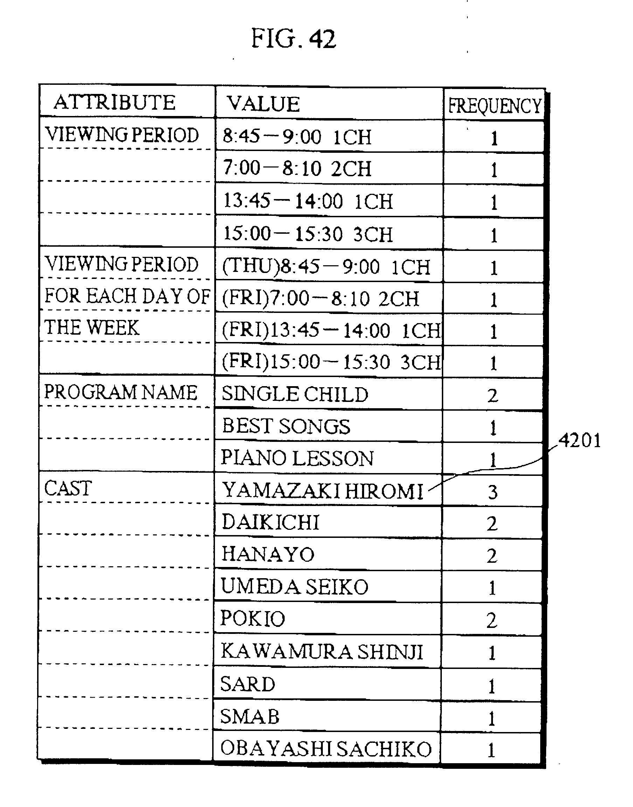

Viewing frequency extraction unit 3809 calculates a viewing frequency for each program attribute included in the viewing history table by adding up the number of times the viewing frequency extraction unit 3809 reads each program attribute from the viewing history table. FIG.42 shows an example of viewing frequency table which is made from the viewing history table shown in FIG.41.

Viewing frequency hold unit 3810 stores the viewing frequency calculated by the viewing frequency extraction unit 3809 as a viewing frequency table. For example, the viewing frequency table as shown in FIG.42 is stored in a hard disk.

Program attribute extraction unit 3811 extracts from viewing frequency hold unit 3810 program attributes having viewing frequencies greater than a predetermined value. For example, if the predetermined value is set to "3," program attribute "Yamazaki Hiromi" represented as 4201 is extracted from the viewing frequency table shown in FIG.42.

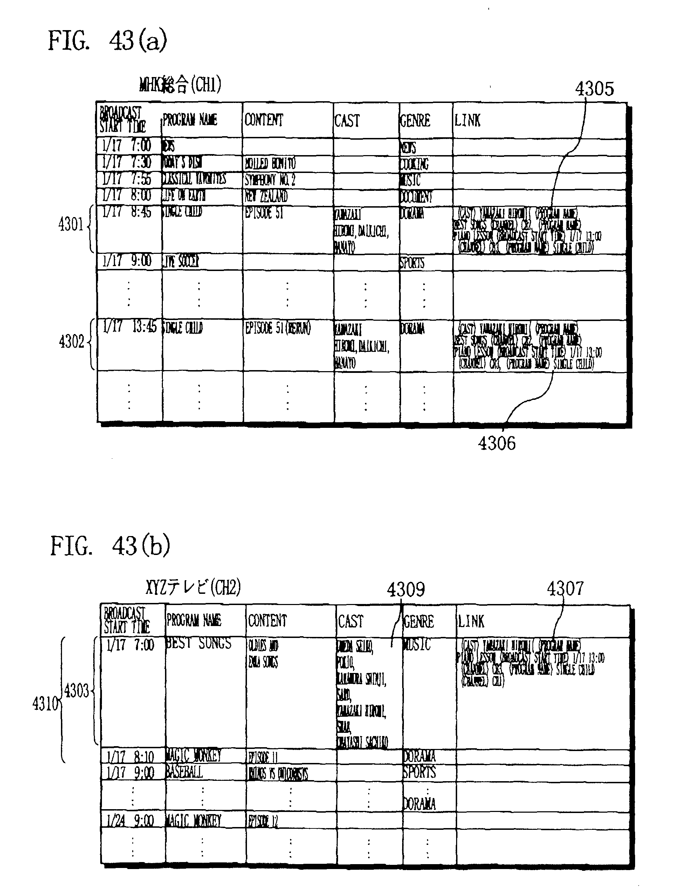

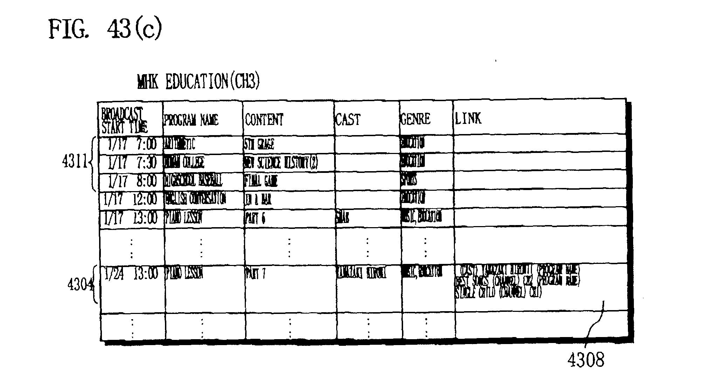

Link generation unit 3812 generates link information between programs which include the program attributes extracted by the program attribute extraction unit 3811, per extracted program attribute. For example, see FIG.43. Link generation unit 3812 detects programs 4301, 4302, 4303, and 4304 including program attribute "Yamazaki Hiromi" which is extracted by the program attribute extraction unit 3811, then generates link information 4305, 4306, 4307, and 4308. The generated data is stored in a hard disk in program attribute hold unit 3801.

Now, the operation of the present apparatus is described below.

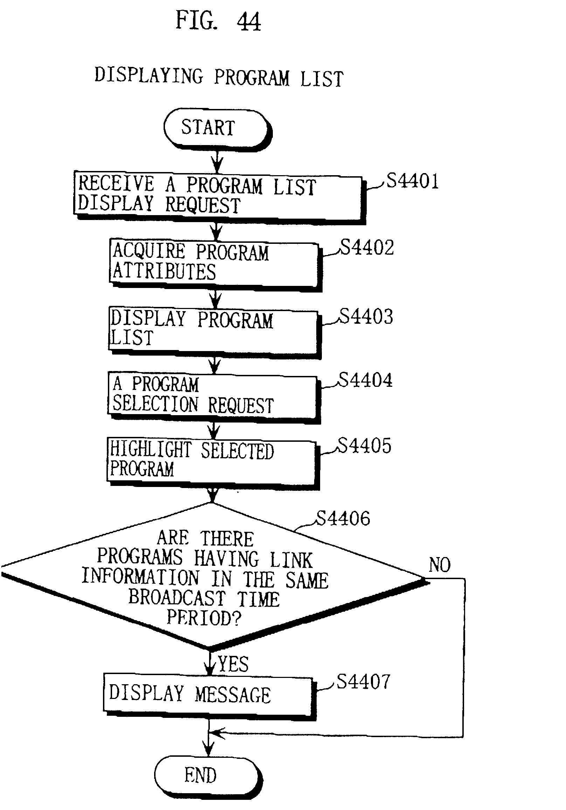

FIG.44 is a flow chart of the program list display process in Embodiment 7.

The program list display process is described with reference to FIG.44.

Here, a sample case is considered where the program attributes shown in FIGs.39(a)-(c) are stored in program attribute hold unit 3801.

A program list display request is generated when the user inputs a channel number and a time via the input unit 3805. For example, a program list display request is generated when the user inputs "CH1" of broadcasting station "MHK general" and "1/10 7:00" representing January 10th, 7:00AM (step S4401).

Program attribute acquisition unit 3802 acquires, from program attribute hold unit 3801, program attributes in a range of time including a time specified by the user (step S4402). For example, program attribute acquisition unit 3802 acquires program attributes of programs broadcast by all the broadcasting stations between 7:00 and 9:00 on January 10th, namely, program attribute groups 3901, 3902, and 3903 as shown in FIG.39.

Program list generation unit 3803 generates a program list using the program attributes acquired by the program attribute acquisition unit 3802 and displays the generated program list on display unit 3804 when receiving an instruction from the user via the input unit 3805 (step S4403). In the present example, the program list includes program attribute groups 3901 and 3902 of different two channels as shown in FIGs.39(a) and such programs are found, and the process ends here.

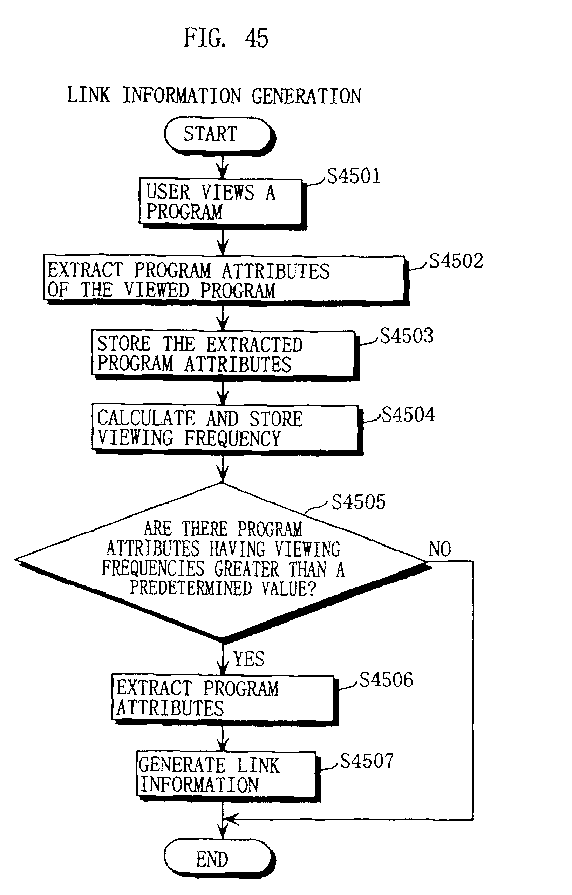

FIG.45 is a flow chart of the link information generation process.

The link information generation process is described below with reference to FIG.45.

The user views a program (step S4501). For example, the user views program "Single Child" represented as 3904 in FIG.39(a).

Viewed program extraction unit 3807 extracts the program attributes of the viewed program (step 54502). In the present example, viewed program extraction unit 3807 extracts the program attributes represented as 3904 in FIG.39(a).

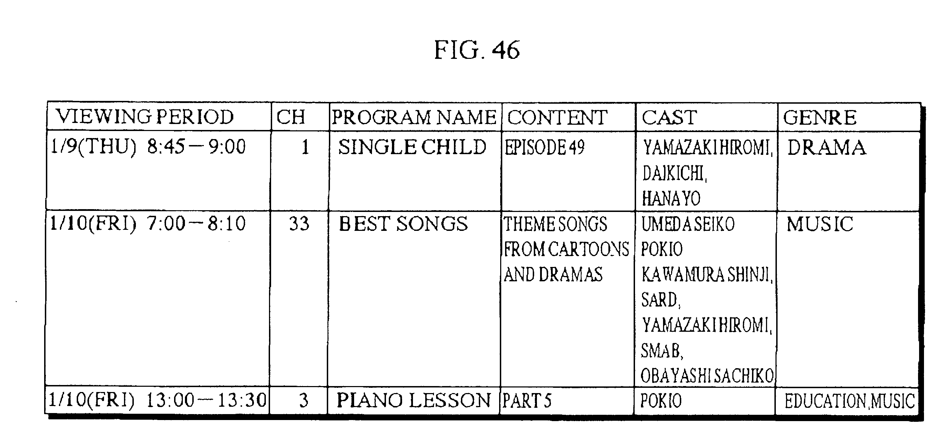

Viewing history hold unit 3808 stores the extracted program attributes (step S4503). That is, viewing history hold unit 3808 adds the newly extracted program attributes to the viewing history table. In the present example, the program attributes represented as 3904 in FIG.39(a) is added to the viewing history table. FIG.41 shows the viewing history table after the program attributes 3904 are stored. FIG.46 shows the viewing history table before the program attributes 3904 are stored.

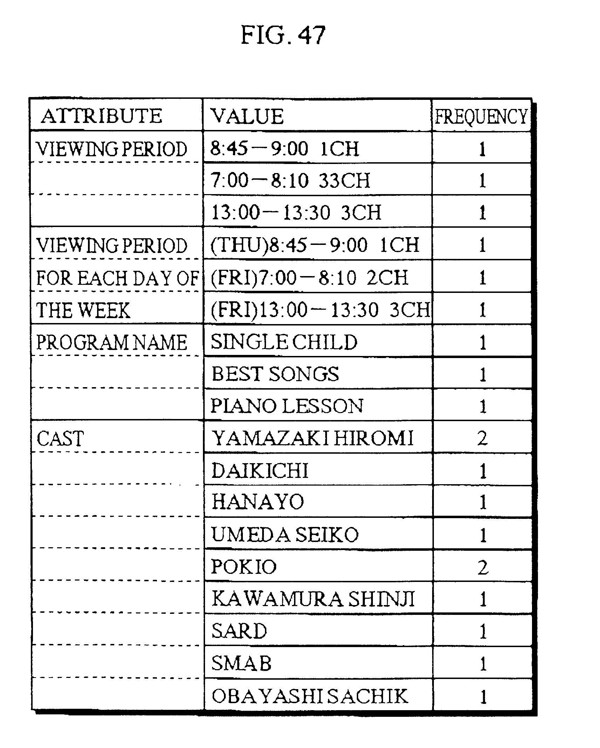

Viewing frequency extraction unit 3809 calculates a viewing frequency and stores the calculated viewing frequency in the viewing frequency hold unit 3810 as the viewing frequency table (step S4504). In the present example, the viewing frequency is calculated based on the viewing history table shown in FIG.41. FIG.42 shows the viewing frequency table after the user views the program "Single Child" 3904, the table being made based on the viewing history table shown in FIG.41. FIG.47 shows the viewing frequency table before user views the program "Single Child" 3904, the table being made based on the viewing history table shown in FIG.46.

It is judged whether viewing frequency hold unit 3810 stores program attributes having viewing frequencies greater than a predetermined value (step S4505) . When it is judged as positive, control goes to step S4506; when it is judged as negative, the process ends.

Program attribute extraction unit 3811 extracts from viewing frequency hold unit 3810 program attributes having a viewing frequency greater than a predetermined value (step S4504). For example, if the predetermined value is set to "3," program attribute "Yamazaki Hiromi" represented as 4201 is extracted from the viewing frequency table shown in FIG.42.

Link generation unit 3812 generates link information between programs which include the program attributes extracted by the program attribute extraction unit 3811, per extracted program attribute (step S4507). For example, see FIG.43. Link generation unit 3812 detects programs 4301, 4302, 4303, and 4304 including program attribute "Yamazaki Hiromi" which is extracted by the program attribute extraction unit 3811, then generates link information 4305, 4306, 4307, and 4308.

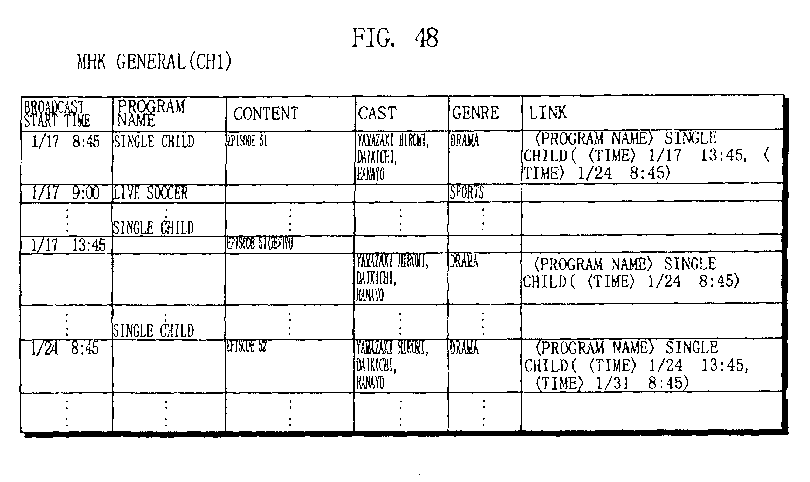

FIG.48 shows a part of the contents stored in program attribute hold unit 3801 after link generation unit 3812 generates link information between programs which include program attribute "Single Child."

The format of link information is defined as follows:
<program attribute item> program attribute of the program attribute item (<program attribute item indicating the first link destination: "program name"> program attribute of the "program name" <program attribute item for identifying the first link destination: "broadcast start time"> program attribute of the "broadcast start time" <program attribute item for identifying the first link destination: "channel"> program attribute of the "channel," ... <program attribute item indicating the nth link destination: "program name"> program attribute of the "program name" <program attribute item for identifying the nth link destination: "broadcast start time"> program attribute of the "broadcast start time" <program attribute item for identifying the nth link destination: "channel"> program attribute of the "channel").

For example, link 4305 shown in FIG.43 is generated in accordance with the above described format. Note that in the link 4305, "broadcast start time" attribute is omitted when not necessary, "channel" attribute is omitted when the same channel name is to be repeated. Accordingly, program "Single Child" represents both programs 4301 and 4302.

Now, the program list display process after the link information is generated is described with reference to FIG.44.

Here, a sample case is considered where the program attributes shown in FIG.43 are stored in program attribute hold unit 3801.

A program list display request is generated when the user inputs a channel number and a time via the input unit 3805 (step S4401). For example, a program list display request is generated when the user inputs "CH2" of broadcasting station "XYZ TV" and "1/17 7:00" representing January 17th, 7:00AM.

Program attribute acquisition unit 3802 acquires, from program attribute hold unit 3801, program attributes in a range of time including a time specified by the user (step S4402). For example, program attribute acquisition unit 3802 acquires program attributes of programs broadcast by all the broadcasting stations between 7:00 and 9:00 on January 17th.

Program list generation unit 3803 generates a program list using the program attributes acquired by the program attribute acquisition unit 3802 and displays the generated program list on display unit 3804 when receiving an instruction from the user via the input unit 3805 (step S4403). In the present example, the program list includes program attribute groups 4310 and 4311 of different two channels as shown in FIGs.43(b) and 43(c).

A program selection request is generated when the user operates the input unit 3805 to select a program among the programs displayed on the display unit 3804 (step S4404). In the present example, the user selects program "Magic Monkey" broadcast on 8:10, January 17 on channel 2.

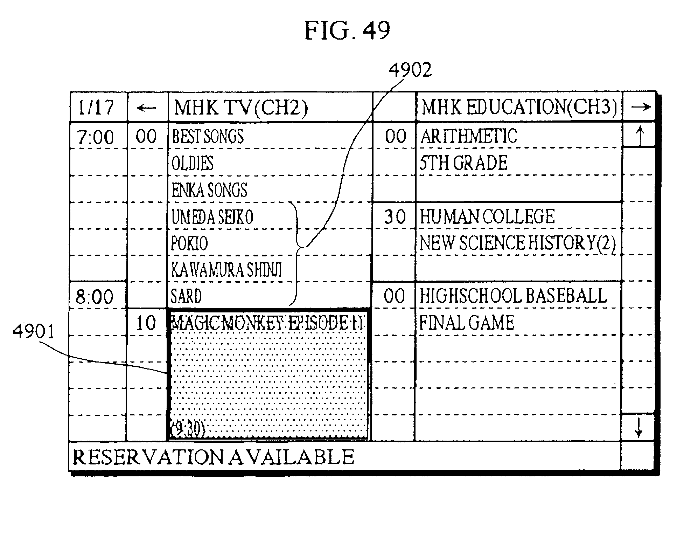

Program selection unit 3806, when the user selects a program on the program list displayed on the 3804 to view the program, notifies program list generation unit 3803 of the selected program. On receiving this notification, program list generation unit 3803 highlights the program on the screen (step S4405). In the present example, program selection unit 3806 notifies program list generation unit 3803 of the selected program "Magic Monkey," and program list generation unit 3803 highlights the selected program "Magic Monkey" 4901 as shown in FIG.49.

It is judged whether there are programs having link information in the same broadcast time period as the selected program (step S4406). When it is judged as positive, control goes to step S4407; when it is judged as negative, the process ends. In the present example, a piece of link information 4305 shown in FIG.43(a) is found for the selected program "Magic Monkey" which is broadcast from 8:10 to 9:00.

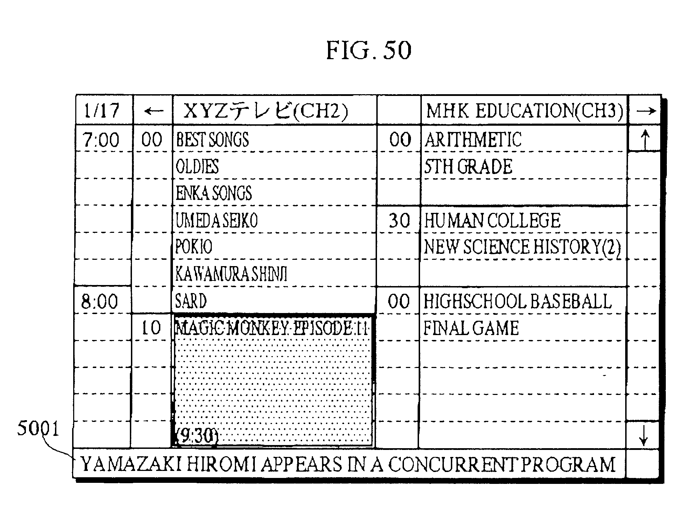

A message is displayed in relation to the programs having link information (step S4407). In the present example, message 5001 "Yamazaki Hiromi appears in a concurrent program" as shown in FIG.50 is displayed. FIG.50 shows a program list displayed as a result of the above process.

In the present embodiment, a message is displayed. However, a concurrent program having link information may automatically be reserved for video recording instead of or as well as displaying a message.

In the present embodiment, programs having a program attribute of a viewing frequency greater than "3" are linked to each other. However, programs may be linked to each other for each viewing frequency value.

In the present embodiment, link information is generated beforehand. However, link information may be generated as necessary.

In the present embodiment, the viewing history is made by extracting program attributes of viewed programs. However, the viewing history may be made by extracting program attributes of selected or reserved programs.

The above described program information retrieval apparatus may be achieved by a general computer and a program information retrieval process program, the program being stored in a storage medium.

### <Embodiment 8>

Embodiment 8 introduces the program information retrieval apparatus with a feature of displaying program attributes in order of priority and viewing frequency.

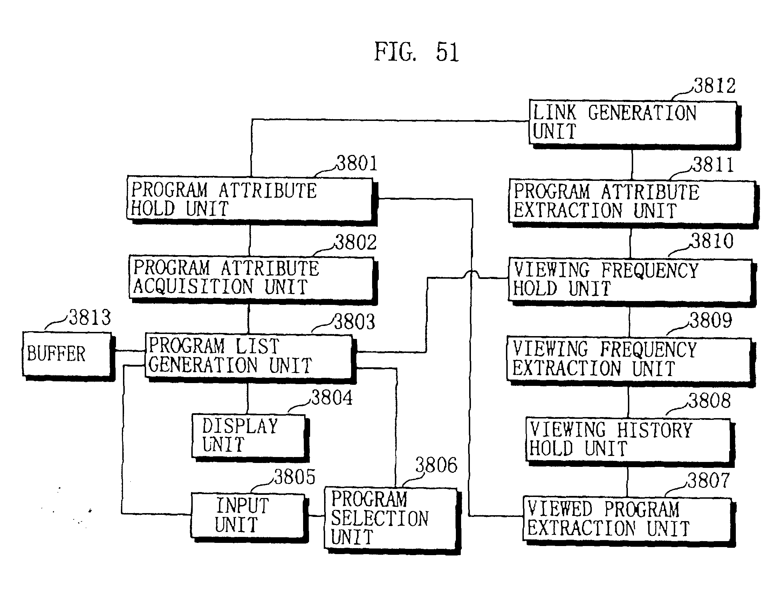

FIG.51 is a block diagram showing the construction of the program information retrieval apparatus in Embodiment 8.

The construction is similar to that of Embodiment 7. Only components unique to the present embodiment are described below.

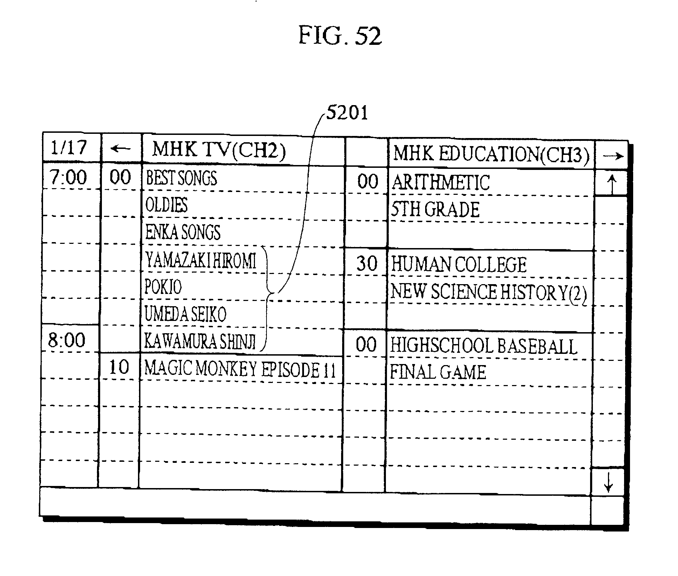

Program list generation unit 3803 generates a program list using the viewing frequency stored in the viewing frequency hold Unit 3810 and a buffer 3813, as well as program attributes acquired by the program attribute acquisition unit 3802. For example, FIG.52 shows a program list generated by the unit 3803 and displayed on a Tv screen, the program list being made of program attributes 4310 and 4311 of different two channels shown in FIG.43 and the viewing frequency shown in FIG.42. Here, although the program attributes 4309 shown in FIG.43(b) includes seven characters in the cast column for program "Best songs," the program list shown in FIG.52 includes four of them due to a limitation to the size of the cast display field 5201, in which the order of the seven characters have been changed and the highest-ranked four are included in the list, where "Yamazaki Hiromi" is given the top priority based on the link information 4307 and the other six characters are rearranged in accordance with the viewing frequency shown in FIG.42.

Buffer 3813 is used to temporarily store data when program list generation unit 3803 generates a program list. For example, the buffer is used to rearrange seven characters of the program "Best songs" in the order of viewing frequency.

Now, the operation of the present apparatus is described in detail.

The example of the operation described below is based on the following assumption: (a) FIG.43 shows program attributes for each broadcasting station. The information "broadcast start time," "program name," "content," "cast," and "genre" have been sent from the broadcasting stations beforehand and the link information has been generated with the construction of Embodiment 7. (b) Program attribute hold unit 3801 stores the program attributes shown in FIG.43. Viewing frequency hold unit 3810 stores the viewing frequency shown in FIG.42.

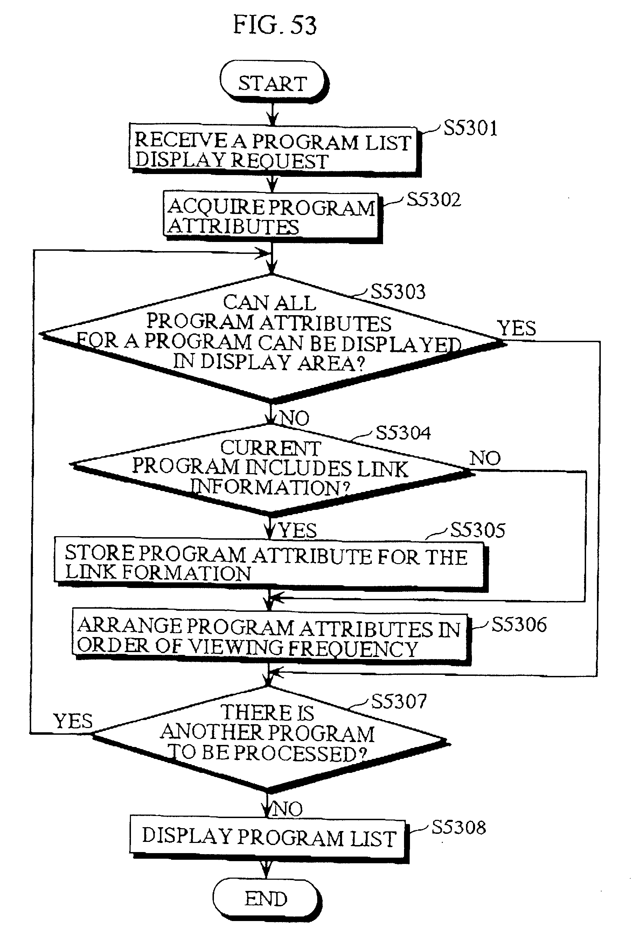

FIG.53 is a flow chart of the program list display process in Embodiment 8.

A program list display request is generated when the user inputs a channel number and a time via the input unit 3805 (step S5301). For example, a program list display request is generated when the user inputs "CH2" of broadcasting station "XYZ TV" and "1/17 7:00" representing January 17th, 7:00AM.

Program attribute acquisition unit 3802 acquires, from program attribute hold unit 3801, program attributes in a range of time including a time specified by the user (step S5302). For example, program attribute acquisition unit 3802 acquires program attributes of programs broadcast by all the broadcasting stations between 7:00 and 9:00 on January 17th.

It is judged for each program display area whether all the program attributes for a program can be displayed in the display area (step S5303). When it is judged as positive, control goes to step S5307; when it is judged as negative, control goes to step S5304. Here, a case concerning "cast" of the program "Best Songs" is described as an example. The display area for the program "Best Songs" includes one line for the program name, two lines for the content, and four lines for four characters of the cast. The program attributes 4309 shown in FIG.43(b) includes seven characters in the cast column for program "Best songs." As a result, it is judged as negative in this step.

It is judged whether the current program includes link information (step S5304). When it is judged as positive, control goes to step S5305; when it is judged as negative, control goes to step S5306. In the present example, it is judged as positive since the program has link information 4307 shown in FIG.43(b).

The program attribute for the link formation is stored in buffer 3813 (step S5305). In the present example, "Yamazaki Hiromi" detected from the link information 4307 shown in FIG.43(b) is stored in buffer 3813.

The program attributes are arranged in accordance with the viewing frequency, and the arranged program attributes are stored in buffer 3813 (step S5306). In the present example, the highest-ranked three except "Yamazaki Hiromi" according to the viewing frequency are: "POKIO" (viewing frequency 2), "Umeda Seiko" (viewing frequency 1), and "Kawamura Shinji" (viewing frequency 1).

It is judged whether there is another program to be processed (step S5307). When it is judged as positive, control returns to step 55303; when it is judged as negative, control goes to step S5308. In the present example, it is judged as positive, though the processes are omitted here.

A program list stored in buffer 3813 is displayed on display unit 3804 (step S5308). In the present example, the program list shown in FIG.52 is displayed. In the displayed characters 5201 in FIG.52, "Yamazaki Hiromi" is placed at the top and "POKIO" is placed at the second; in the characters 4902 in FIG.49, "Umeda Seiko" is placed at the top and "POKIO" is placed at the second.

In the present embodiment, a program attribute with viewing priority greater than a predetermined value is displayed given top priority, and the rest is displayed in the order of viewing priority. However, only priority may be taken into consideration, or program attributes may be displayed only in the order of viewing priority.

In the present embodiment, only program attributes in "cast" item are rearranged before being displayed. However, this may be applied to program attributes of other program attribute items. Also, program attributes of different program attribute items may be combined together, or a certain part of the program attributes may be prohibited from being arranged. objects are not limited as far as the objects are displayed given priority, or displayed in the order of viewing priority.

In the present embodiment, link information is generated beforehand. However, link information may be generated as necessary.

In the present embodiment, the viewing history is made by extracting program attributes of viewed programs. However, the viewing history may be made by extracting program attributes of selected or reserved programs.

The above described program information retrieval apparatus may be achieved by a general computer and a program information retrieval process program, the program being stored in a storage medium.

### <Embodiment 9>

Embodiment 9 introduces the program information retrieval apparatus with a feature of displaying link program names and link destination program list.

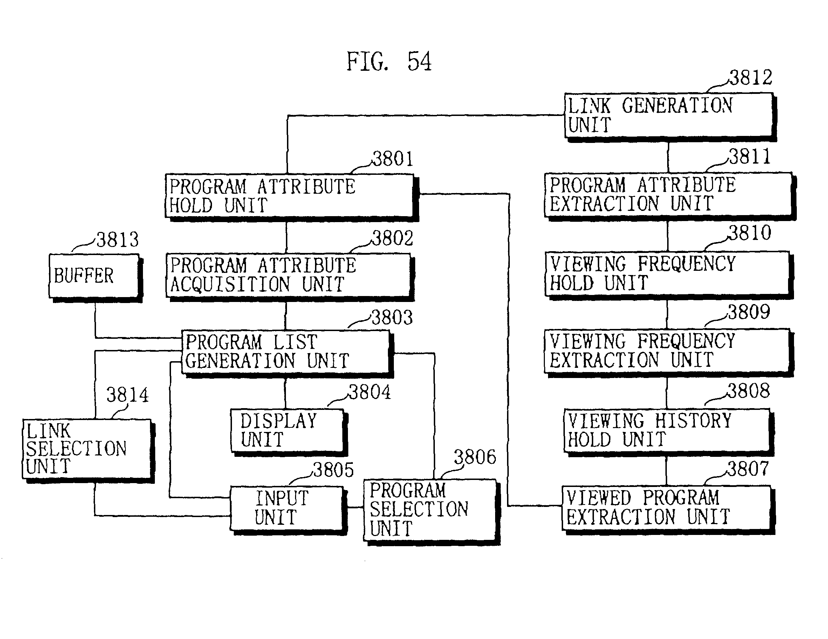

FIG.54 is a block diagram showing the construction of the program information retrieval apparatus in Embodiment 9.

The construction is similar to that of Embodiment 7. Only components unique to the present embodiment are described below.

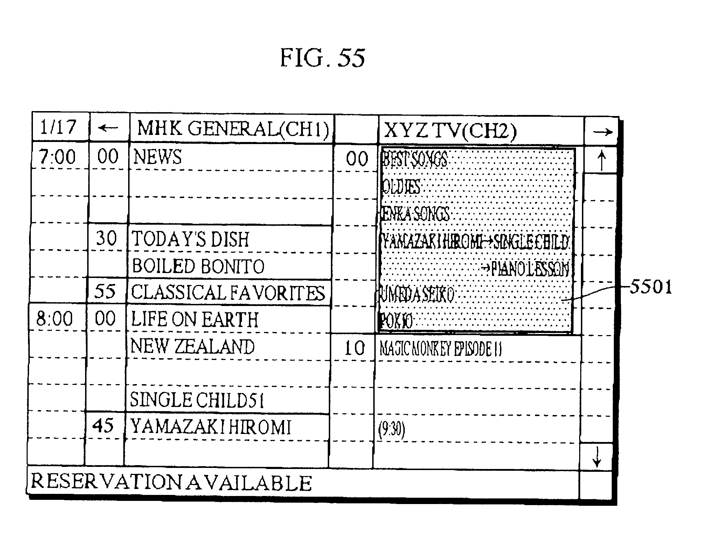

Program list generation unit 3803 generates a program list including link destination programs. For example, FIG.55 shows a program list generated by the unit 3803 and displayed on a TV screen, the program list being made of program attributes 4310 and 4311 of different two channels shown in FIG.43 and including information character "Yamazaki Hiromi," programs "Single Child" and "Piano Lesson" which are obtained from link information 4307 shown in FIG.43(b). As shown in the area 5501 in FIG.55, programs "Single Child" and "Piano Lesson" are added to character "Yamazaki Hiromi."

Buffer 3813 is used to temporarily store data when program list generation unit 3803 generates a program list. For example, the buffer temporarily stores information character "Yamazaki Hiromi," programs "Single Child" and "Piano Lesson."

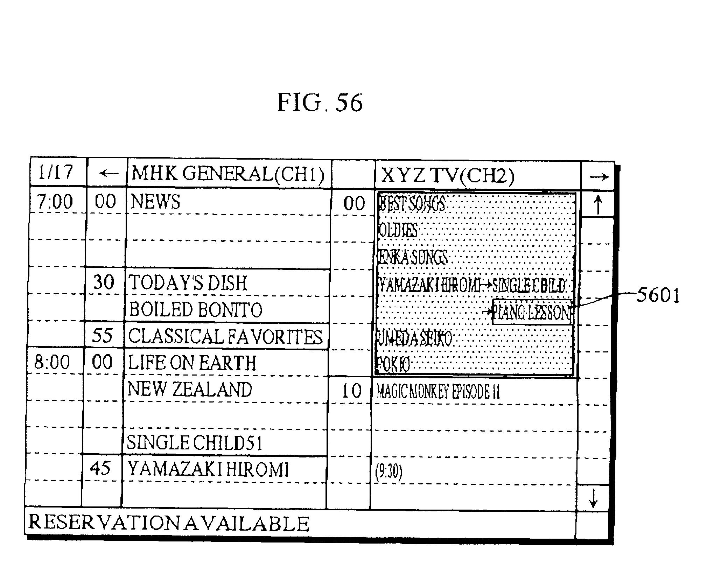

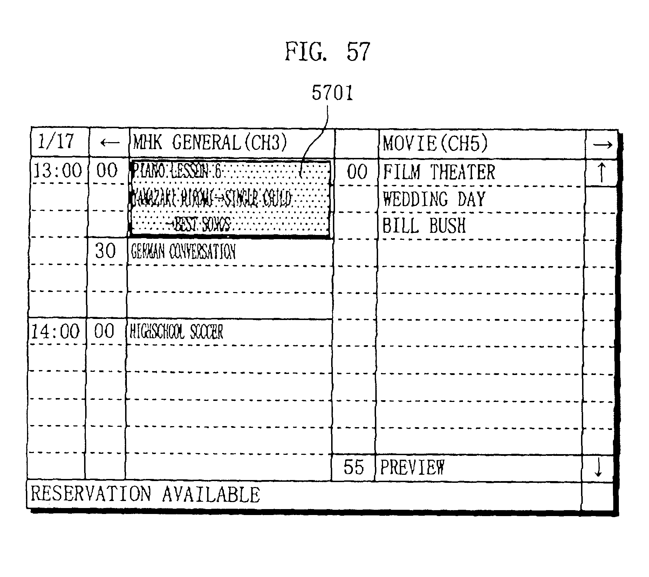

Link selection unit 3814, when the user selects a link destination on the program list displayed on the 3804, notifies program list generation unit 3803 of the selected link destination, requesting the unit 3803 to generate a program list of the link destination. FIG.56 shows that the user selects program "Piano Lesson" as the link destination, as indicated by "5501." FIG.57 shows the program list of the link destination "Piano Lesson" generated by the program list generation unit 3803.

Now, the operation of the present apparatus is described in detail.

The example of the operation described below is based on the following assumption: (a) Program attribute hold unit 3801 stores the program attributes shown in FIG.43. (b) Viewing frequency hold unit 3810 stores the viewing frequency shown in FIG.42.

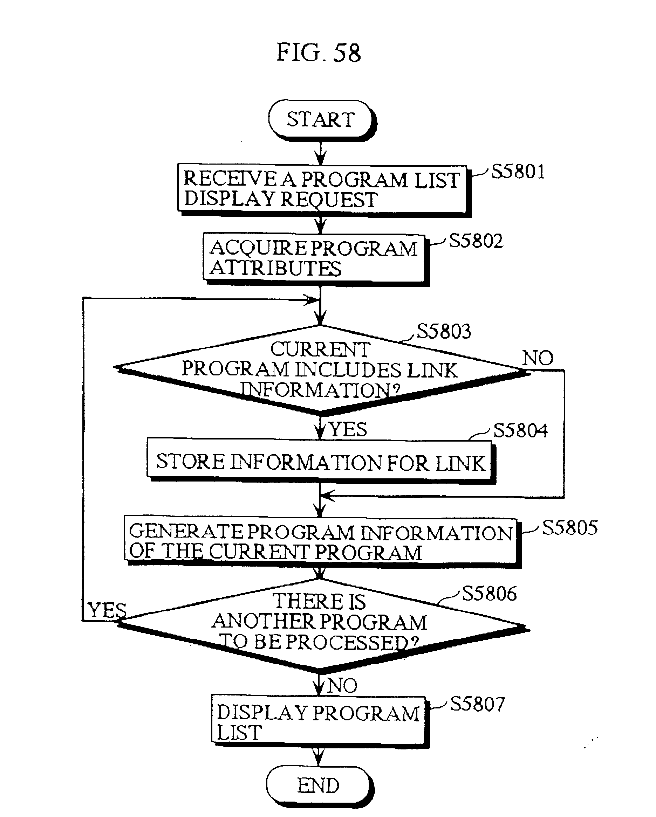

FIG.58 is a flow chart of the program list display process in Embodiment 9.

A program list display request is generated when the user inputs a channel number and a time via the input unit 3805. For example, a program list display request is generated when the user inputs "CH1" of broadcasting station "MHK general" and "1/17 7:00" representing January 17th, 7:00AM (step S5801).

Program attribute acquisition unit 3802 acquires, from program attribute hold unit 3801, program attributes in a range of time including a time specified by the user (step S5802). For example, program attribute acquisition unit 3802 acquires program attributes of programs broadcast by all the broadcasting stations between 7:00 and 9:00 on January 17th.

It is judged whether the current program includes link information (step S5803). When it is judged as positive, control goes to step S5804; when it is judged as negative, control goes to step S5805. In the present example, it is judged as positive since the program "Best Songs" includes link information represented as 4307 in FIG.43(b).

The program attribute specified for the link and link destinations arc stored in buffer 3813 (step S5804). In the present example, character "Yamazaki Hiromi," programs "Single Child" and "Piano Lesson" are detected and stored in buffer 3813.

Program information of the current program is generated using program attributes other than those obtained from the link information, and the generated program information is stored in buffer 3813 (step S5805). In the present example, program information of program "Best Songs" is generated and stored in buffer 3813.

It is judged whether there is another program to be processed (step S5806). When it is judged as positive, control returns to step S5803; when it is judged as negative, control goes to step S5807. In the present example, it is judged as positive, though the processes are omitted here.

A program list stored in buffer 3813 is displayed on display unit 3804 (step S5807). In the present example, the program list shown in FIG.55 is displayed. As shown in the area 5501 in FIG.55, programs "Single Child" and "Piano Lesson" are added to character "Yamazaki Hiromi."

The user may use a general user interface to select a link destination program. For example, the user may use a remote control key or a cross cursor.

When the user selects program "Piano Lesson" as the link destination as shown in FIG.56, link selection unit 3814 requests program list generation unit 3803 to generate the program list of the selected program. FIG.57 shows the program list of the link destination "Piano Lesson" generated by the program list generation unit 3803.

In the present embodiment, information obtained from the link information is added to the program list to be displayed whenever a program in the program list includes link information. However, the user may specify whether to display the information obtained from the link information. Alternatively, the information obtained from the link information may automatically be displayed in accordance with the viewing frequency.

In the present embodiment, the viewing history is made by extracting program attributes of viewed programs. However, the viewing history may be made by extracting program attributes of selected or reserved programs.

The above described program information retrieval apparatus may be achieved by a general computer and a program information retrieval process program, the program being stored in a storage medium.

### <Embodiment 10>

Embodiment 10 introduces the program information retrieval apparatus with a feature of identifying users.

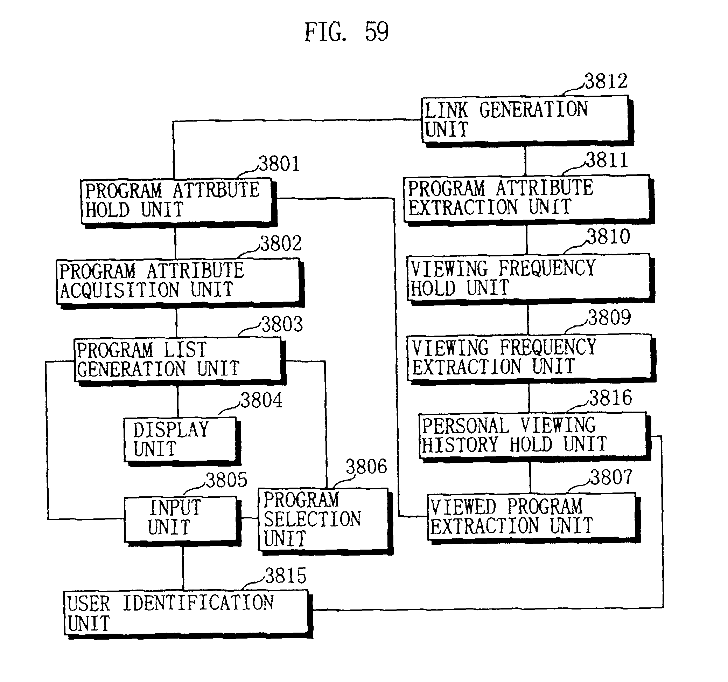

FIG.59 is a block diagram showing the construction of the program information retrieval apparatus in Embodiment 10.

The construction is similar to that of Embodiment 7. Only components unique to the present embodiment are described below.

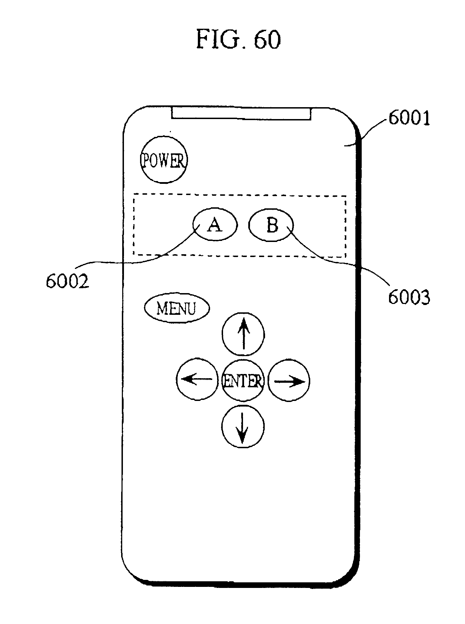

User identification unit 3815 identifies users when the input unit is used. FIG.60 shows an example of the input unit, remote controller 6001. In the drawing, key 6002 is dedicated to user A, and key 6003 is dedicated to user B. For example, user identification unit 3815 identifies user A when key 6002 is pushed, and identifies user B when key 6003 is pushed. The other keys of remote controller 6001 are used for program selections or for switching on the apparatus. These keys are not described here since they are the same as those of general TVs.

Personal viewing history hold unit 3816 generates a personal viewing history table for each user based on the viewing history and holds the generated table. For example, personal viewing history hold unit 3816 generates a personal viewing history table for each of users A and B.

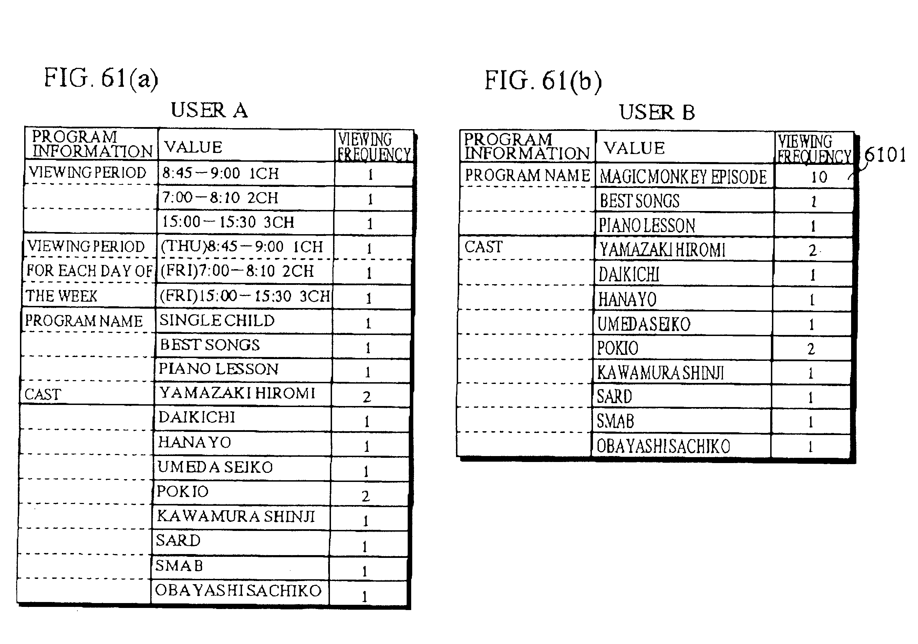

Viewing frequency extraction unit 3809 extracts the viewing frequency from the personal viewing history table of the current user. For example, FIG.61 shows the viewing frequency of users A and B.

Now, the operation of the present apparatus is described in detail.

The example of the operation described below is based on the following assumption: (a) Program attribute hold unit 3801 stores the program attributes shown in FIG.43. (b) FIG.61 shows the viewing frequency of users A and B.

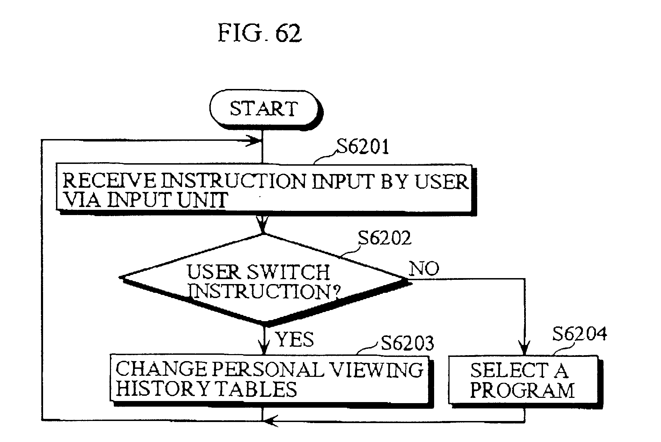

FIG.62 is a flow chart of the user switch process in Embodiment 10.

An instruction input by the user via the input unit 3805 is received (step S6201). For example, the user presses the key 6002.

It is judged whether the received instruction is a user switch instruction (step S6202). When it is judged as positive, control goes to step S6203; when it is judged as negative, control goes to step S6204.

User identification unit 3815 identifies the specified user and changes the currently used personal viewing history table to that of the specified user (step S6203). In the present example, it is changed to the personal viewing history table of user A.

A program is selected (step S6204).

When, after the personal viewing history table is changed as above, the user inputs "CH2" of broadcasting station "XYZ TV" and "1/17 7:00" representing January 17th, 7:00AM, the program list shown in FIG.49 is displayed as in Embodiment 7 (steps S6201, S6202, and S6204).

When the user A selects a program at this stage, no message is displayed since personal viewing history table for user A includes only viewing frequencies smaller than the predetermined value, "3," as shown in FIG.61, indicating that no program in the list has link information.

When, at this stage, the user B presses key 6003 to input user switch instruction, user identification unit 3815 identifies user B and changes the currently used personal viewing history table to that of user B (steps S6201, S6202, and S6203).

When, after the personal viewing history table is changed as above, the user B inputs "CH2" of broadcasting station "XYZ TV" and "1/17 7:00" representing January 17th, 7:00AM, the program list shown in FIG.49 is displayed as in Embodiment 7 (steps S6201, S6202, and S6204).

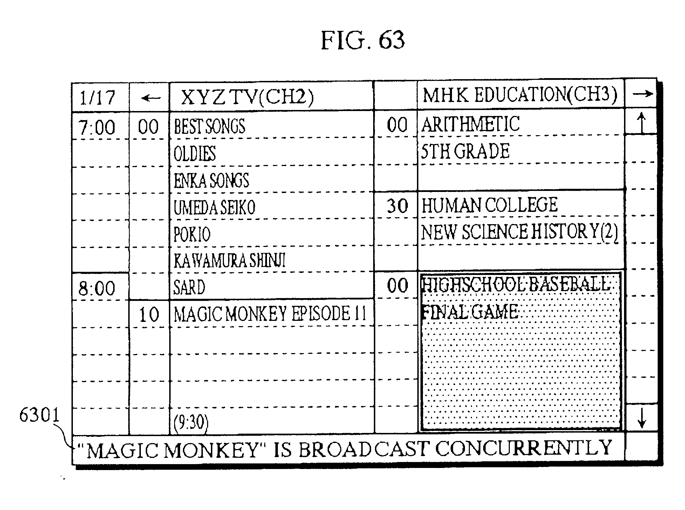

When the user B selects program "Highschool Baseball," a message 6301 "'Magic Monkey' is broadcast concurrently" is displayed as shown in FIG.63 since the viewing frequency "6101" of the program is greater than "3" as shown in FIG.61. FIG.63 shows a program list displayed as a result of the above process.

In the present embodiment, program lists are displayed based on Embodiment 7. However, program lists may be displayed based on Embodiment 8 or 9.

In the present embodiment, the viewing frequency table and link information are generated from the personal viewing history table each time the user changes. However, a personal viewing frequency table and personal link information may be generated beforehand.

In the present embodiment, a case of two users is used for explaining the user identification process. However, more than two users may be dealt with by the present apparatus.

In the present embodiment, the viewing history is made by extracting program attributes of viewed programs. However, the viewing history may be made by extracting program attributes of selected or reserved programs.

The above described program information retrieval apparatus may be achieved by a general computer and a program information retrieval process program, the program being stored in a storage medium.

### <Embodiment 11>

Embodiment 11 introduces the program information retrieval apparatus with a feature of identifying users by allowing the users to use their dedicated input units.

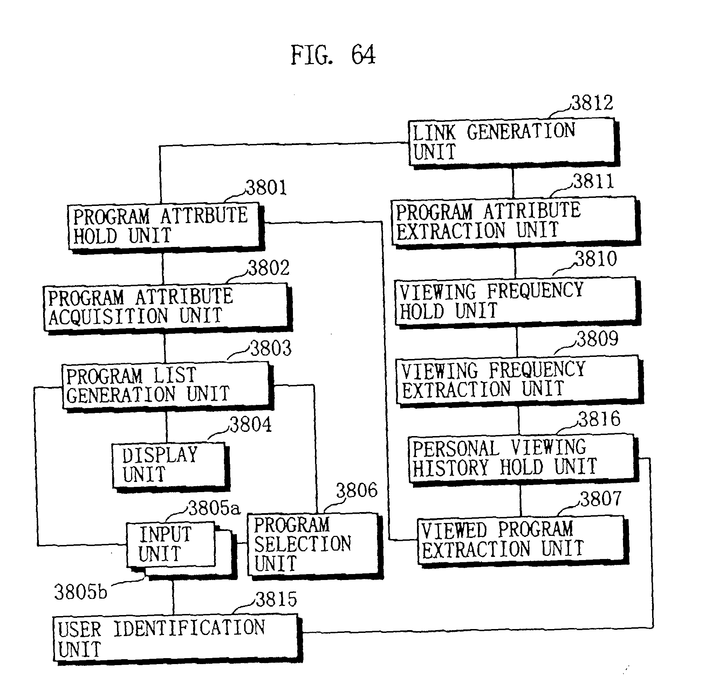

FIG.64 is a block diagram showing the construction of the program information retrieval apparatus in Embodiment 11.

The construction is similar to that of Embodiment 10. Only components unique to the present embodiment are described below.

Input unit 3805a is used by user A to search or selects program information. Input unit 3805b is used by user B to search or selects program information. Each of the input unit 3805a and 3805b outputs information that indicates a corresponding user. FIGs.65(a) and (b) show the input units. FIG.65(a) shows a remote controller 6501 dedicated to user A. FIG.65(b) shows a remote controller 6502 dedicated to user B. The keys on the remote controllers 6501 and 6502 are used for program selection or switching on the apparatus. These keys are not described here since they are the same as those of general TV remote controllers.

User identification unit 3815 identifies users when the remote controllers are operated. For example, user identification unit 3815 identifies user A when the remote controller 6501 is operated, and identifies user B when the remote controller 6502 is operated.

Now, the operation of the present apparatus is described in detail.

The example of the operation described below is based on the following assumption: (a) Program attribute hold unit 3801 stores the program attributes shown in FIG.43. (b) FIG.61 shows the viewing frequency of users A and B. (c) Users A and B have different link information, respectively.

FIG.66 is a flow chart of the user switch process in Embodiment 11.

Variables N and M are initialized (step S6601)'. For example, variables N and M are set to "0."

An instruction input by the user via the input unit 3805a or 3805b is received (step S6602). For example, user A operates the input unit 3805a to input "CH2" of broadcasting station "XYZ TV" and "1/17 7:00" representing January 17th, 7:00AM.

Variable N is set to the identification number of the input unit operated by the user (step S6603). In the present example, variable N is set to "1" which is the identification number of the input unit 3805a.

It is judged whether variable N is equal to variable M (step S6604). When it is judged as positive, control goes to step S6607; when it is judged as negative, control goes to step S6605. In the present example, it is judged as negative since variable N is "1" and variable N is "0," currently.

User identification unit 3815 changes the currently used personal viewing history table to that of the user who operates the input unit in step 6602 (steps S6605). In the present example, user identification unit 3815 changes the currently used personal viewing history table to that of user A.

Variable N is substituted into variable M (step S6606). In the present example, value "1" is substituted into variable M.

A program is selected (steps S6607). Control then returns to step S6602. In the present example, the program list shown in FIG.49 is displayed as in Embodiment 7 because user A has input "CH2" of broadcasting station "XYZ TV" and "1/17 7:00" representing January 17th, 7:00AM.

When the user A selects a program at this stage, no message is displayed since personal viewing history table for user A includes only viewing frequencies smaller than the predetermined value, "3," as shown in FIG.61, indicating that no program in the list has link information.

When, at this stage, the user B operates input unit 3805b to input "CH2" of broadcasting station "XYZ TV" and "1/17 7:00" representing January 17th, 7:00AM, user identification unit 3815 changes the currently used personal viewing history table to that of user B and the program list shown in FIG.49 is displayed as in Embodiment 7 (steps S6602-S6607).

When the user B selects program "Highschool Baseball," a message 6301 "'Magic Monkey' is broadcast concurrently" is displayed as shown in FIG.63 since the viewing frequency "6101" of the program is greater than "3" as shown in FIG.61. FIG.63 shows a program list displayed as a result of the above process.

In the present embodiment, program lists are displayed based on Embodiment 7. However, program lists may be displayed based on Embodiment 8 or 9.

In the present embodiment, the viewing frequency table and link information are generated from the personal viewing history table each time the user changes. However, a personal viewing frequency table and personal link information may be generated beforehand.

In the present embodiment, a case of two users is used for explaining the user identification process. However, more than two users may be dealt with by the present apparatus.

In the present embodiment, the viewing history is made by extracting program attributes of viewed programs. However, the viewing history may be made by extracting program attributes of selected or reserved programs.

The above described program information retrieval apparatus may be achieved by a general computer and a program information retrieval process program, the program being stored in a storage medium.

### <Embodiment 12>

Charging systems on a pay-by-view basis are generally adopted in commercial satellite broadcasts or cable TV broadcasts. In such charging systems, user viewing information is sent to broadcasting stations via general telephone lines. Apparatuses described in Embodiments 12 and 13 use the user viewing information sent to the broadcasting station.

Embodiment 12 introduces the program information retrieval system in which a broadcasting apparatus holds a viewing history, a reception apparatus receives the viewing history from the broadcasting apparatus and displays a message concerning concurrent programs.

FIG.67 is a block diagram showing the construction of the program information retrieval system in Embodiment 12.

The construction includes a part similar to that of the program information retrieval apparatus in Embodiment 7 shown in FIG.38. The same components are assigned the same reference signs. Only components unique to the present embodiment are described below.

The present system is composed of a broadcasting apparatus 6750 and a reception apparatus 6700.

The broadcasting apparatus 6750 is a broadcasting station being composed of a program attribute hold unit 6751, a viewed program extraction unit 3807, a viewing history hold unit 3808 and a viewing history transmission unit 6752.

Reception apparatus 6700 has the same construction as the program information retrieval apparatus of Embodiment 7 excluding viewed program extraction unit 3807 and viewing history hold unit 3808, with viewing history reception unit 6701 additionally included.

Program attribute hold unit 6751 holds program attributes for each program as the program attribute hold unit 3801.

Viewing history transmission unit 6752 transmits the viewing history stored in viewing history hold unit 3808 to viewing history reception unit 6701 periodically or by request.

Viewing history reception unit 6701 acquires the same viewing history as that stored in viewing history hold unit 3808 of Embodiment 7 from viewing history transmission unit 6752.

Program attribute hold unit 3801 holds program attributes and link information for each program.

Detailed description of the operation of the present system is omitted here since the present system operates the same as the program information retrieval apparatus in Embodiment 7.

The present embodiment is achieved by a program information retrieval system which includes a broadcasting apparatus including the viewed program extraction unit 3807 and the viewing history hold unit 3808 of Embodiment 7 and a reception apparatus including the other components of Embodiment 7. The program information retrieval system may include a broadcasting apparatus including the viewed program extraction unit 3807 and the viewing history hold unit 3808 of any of Embodiments 8-10 and a reception apparatus including the other components of the same embodiment.

In the present embodiment, viewing history hold unit 3808 stores all program attributes of programs viewed by the user. However, viewing history hold unit 3808 may store a part of the program attributes of each viewed program or minimum information to identify each viewed program. For example, the viewing history hold unit may store only program attributes for items "viewing period" and "CH" or may store only identifiers of the viewed programs, where the identifiers uniquely indicate respective programs. When such methods are used, viewing frequency extraction unit 3809 fetches all program attributes of the viewed programs from the program attribute hold unit 3801 by referring to the information held in the viewing history hold unit, then extracts the viewing frequency from the fetched program attributes.

The above described program information retrieval system may be achieved by a general computer and a program information retrieval process program, the program being stored in a storage medium.

### <Embodiment 13>

Embodiment 13 introduces the program information retrieval system including a broadcasting apparatus and a reception apparatus, the broadcasting apparatus holding a viewing history and generating link information, and the reception apparatus receiving the program attributes and link information from the broadcasting apparatus and displaying a message concerning concurrent programs.

FIG.68 is a block diagram showing the construction of the program information retrieval system in Embodiment 13.

The construction includes a part similar to that of the program information retrieval apparatus in Embodiment 7 shown in FIG.38. The same components are assigned the same reference signs. Only components unique to the present embodiment are described below.

The present system is composed of a broadcasting apparatus 6850 and a reception apparatus 6800.

The broadcasting apparatus 6850 is a broadcasting station being composed of a program attribute hold unit 6851, a viewed program extraction unit 3807, a viewing history hold unit 3808, a viewing frequency extraction unit 3809, a viewing frequency hold unit 3810, a program attribute extraction unit 3811, a link generation unit 3812, and a program attribute transmission unit 6852.

Reception apparatus 6800 is composed of a program attribute hold unit 3801, a program attribute acquisition unit 3802, a program list generation unit 3803, a display unit 3804, an input unit 3805, and a program selection unit 3806.

Program attribute hold unit 6851 holds program attributes for each program as the program attribute hold unit 3801.

Program attribute transmission unit 6852 transmits the program attributes stored in viewing history hold unit 3808 to viewing history reception unit 6701 periodically or by request.

Program attribute hold unit 3801 holds program attributes and link information for each program.

Detailed description of the operation of the present system is omitted here since the present system operates the same as the program information retrieval apparatus in Embodiment 7.

The present embodiment is achieved by a program information retrieval system which includes a broadcasting apparatus including the viewed program extraction unit 3807, the viewing history hold unit 3808, the viewing frequency hold unit 3810, the program attribute extraction unit 3811, and the link generation unit 3812, and a reception apparatus including the other components of the same embodiment. The program information retrieval system may include a broadcasting apparatus including the same components as described above of any of Embodiments 8-10 and a reception apparatus including the other components of the same embodiment.

It should be noted here that components indispensable to the reception apparatus are a display unit and an input unit. Other components may be included in either of the broadcasting apparatus and the reception apparatus. The reception apparatus including all the components is described in Embodiments 7-11. A case where the components are distributed to the broadcasting apparatus and the reception apparatus are described in Embodiments 12-13.

Accordingly, the distribution of the components other than the display unit and input unit is left to the discretion of the system designer. The system designer can determine the distribution taking into consideration the performance and processing speed of the system and economical efficiency.

The above described program information retrieval system may be achieved by a general computer and a program information retrieval process program, the program being stored in a storage medium.

### <Embodiment 14>

FIG.69 is a block diagram showing the construction of the program information retrieval apparatus of Embodiment 14.

The program information retrieval apparatus is composed of a program information acquisition unit 6901, a program information hold unit 6902, a selection candidate program reception unit 6903, an identifier hold unit 6904, a condition reception unit 6905, a condition hold unit 6906, a program information extraction unit 6907, a condition judgment unit 6908, an output unit 6909, a display unit 6910, a reception unit 6911, and a video recording unit 6912.

Program information acquisition unit 6901 continuously acquires latest program information through broadcasts, via a communication line, or from a recording medium. In the present embodiment, it is presumed that the unit 6901 acquires program information through via a communication line.

Program information hold unit 6902 stores the program information acquired by the program information acquisition unit 6901, updating the information by replacing it with latest program information.

Selection candidate program reception unit 6903 displays the program information stored in program information hold unit 6902 and receives a notification of a selection candidate program input by the user.

Identifier hold unit 6904 holds an identifier of the selection candidate program notification of which is received by the selection candidate program reception unit 6903.

Condition reception unit 6905 receives a selection condition input by the user, the selection condition being used for selecting a program.

Condition hold unit 6906 holds the selection condition received by the condition reception unit 6905.

Program information extraction unit 6907 extracts program information, as an object of judgment performed by the condition judgment unit 6908, from the program information hold unit 6902 each time the unit 6902 updates the program information.

Condition judgment unit 6908 judges whether the program information extracted by the program information extraction unit 6907 satisfies the selection condition stored in the condition hold unit 6906.

Output unit 6909 outputs at least one of the program information judged by the condition judgment unit 6908 to satisfy the selection condition, the program name related to the so-judged program information, and identification information used for identifying such program.

Display unit 6910 displays the program information or the program name output when the output unit 6909 outputs either of them.

Reception unit 6911 receives the program identified by the identification information output from the output unit 6909, or reserves the program for reception.

Video recording unit 6912 video-records the program identified by the identification information output from the output unit 6909, or reserves the program for video recording.

FIG.70 shows a part of the program information acquired by program information acquisition unit 6901. The program information contains information falling into items "program identifier," "channel," "broadcast start time," "broadcast end time," "program name," "genre," "content," "cast," and "serial number." Each program identifier (ID) uniquely indicates a program.

It is presumed that the program information shown in FIG.70 is obtained at 8:00 a.m. on July 25th. The "content" item includes information "Arix(?) vs Hoyos(?)" and "Unicorns (?) vs Rhinos(?)." This information indicates that the program presents two baseball games played on July 25th. The mark "()" included in this information is used to show the score of the team. In this drawing a mark "?" is inserted in each mark "()," indicating that the score has not been obtained. This is because these games have not started at 8:00 a.m. on July 25th.

FIG.71 shows a screen generated based on the program information shown in FIG.70.

FIGs.72(a) and 72(b) show selection condition input screens. It is possible for the user to specify detailed selection conditions with a pull-down menu provided from the screen shown in FIG.72(a).

FIG.73 is a flow chart of a process in which the selection candidate program reception unit 6903 and condition reception unit 6905 receives notification of the selection candidate program and selection condition input by the user.

The above process is described with reference to FIGs.70-73.

Selection candidate program reception unit 6903 displays a program information screen as shown in FIG.71 which is generated from the latest program information shown in FIG.70 (step S7301).

The user specifies a selection candidate program on the program information screen by pressing a reservation button on a remote controller (step S7302).

Condition reception unit 6905 displays a selection condition screen as shown in FIG.72(a) (step S7303).

The user place the cursor on "result" area for "Unicorns vs Rhinos" and presses the enter button operating the remote controller (step S7304).

A selection condition is displayed (step S7305). In the present example, a pull-down menu showing "Unicorns > Rhinos" and "Unicorns < Rhinos" as shown in FIG.72(b) is displayed, where "Unicorns > Rhinos" indicates that the user views the program only when the Unicorns has won the game, and "Unicorns < Rhinos" indicates that the user views the program only when the Rhinos has won the game.

The user selects a selection condition (step S7306). In the present example, the user selects "Unicorns > Rhinos" which indicates that the user views the program only when the Unicorns has won the game.

Note that after the user specifies a selection candidate program in step S7302, the identifier hold unit 6904 holds identifier "204-022" of the selection candidate program which is received by the selection candidate program reception unit 6903.

Also, after the user selects a selection condition in step S7306, the condition hold unit 6906 holds the selected condition, in the present example, "Unicorns > Rhinos."

FIG.74 shows a part of the program information acquired by program information acquisition unit 6901.

It is presumed that the program information shown in FIG.74 is obtained at 10:30 p.m. on July 25th. The "content" item includes information "Arix(7) vs Hoyos(2)" and "Unicorns (6) vs Rhinos(5)." This information indicates that the program presents two baseball games played on July 25th. The mark "()" included in this information is used to show the score of the team. It is presumed that these games are over by the time this program information is acquired.

FIG.75 is a flow chart of a process in which the program information extraction unit 6907 extracts program information and the condition judgment unit 6908 makes a judgment concerning the selection condition.

The above process is described with reference to FIGS.70, and 74-75.

It is judged whether program information or selection condition has been updated (step S7501). When it is judged as positive, control goes to step S7502; when it is judged as negative, control returns to the current step S7501. In the present example, the program information shown in FIG.70 is updated to the one shown in FIG.74 which is acquired at 10:30 p.m. on July 25. Also, "Professional Baseball Digest" is held as the selection candidate program and "Unicorns > Rhinos" as the selection condition.

A program is selected (step S7502). In the present example, program "Professional Baseball Digest" is selected.

It is judged whether the program has been specified as the selection candidate program (step S7503). When it is judged as positive, control goes to step S7504; when it is judged as negative, control goes to step S7506. In the present example, it is judged as positive.

It is judged whether a selection condition has been specified for the selection candidate program (step S7504). When it is judged as positive, control goes to step S7505; when it is judged as negative, control goes to step S7506. in the present example, it is judged as positive.

It is judged whether the specified selection condition is satisfied (step S7505). When it is judged as positive, control goes to step S7506; when it is judged as negative, control goes to step S7507. In the present example, it is judged as positive since program information "Unicorns (6) > Rhinos (5)" satisfies the selection condition "Unicorns > Rhinos," which is found through a certain calculation in which values are substituted into a formula representing the selection condition.

A program selection support process is performed (step S7506). That is, firstly, output unit 6909 outputs one of the program information judged by the condition judgment unit 6908 to satisfy the selection condition, the program name related to the so-judged program information, and identification information used for identifying such program. Then, each unit in charge displays at least one of the program information and the program name output from the output unit 6909, receives the program identified by the identification information output from the output unit 6909, reserves the program for reception, video-records the program identified by the identification information output from the output unit 6909, or reserves the program for video recording. In the present example, output unit 6909 outputs program information "Unicorns (6) vs Rhinos (5)" and program name "Professional Baseball Digest" to the display unit 6910, and program identifier "204-022" to the reception unit 6911 and video recording unit 6912. The display unit 6910 displays the program information and program name. The reception unit 6911 receives the program "Professional Baseball Digest" identified by identifier "204-022" or reserves the program for reception. The video recording unit 6912 video-records the program "Professional Baseball Digest" identified by identifier "204-022" or reserves the program for video recording.

It is judged whether the program has been checked for all the selection conditions (step S7507). When it is judged as positive, control goes to step S7508; when it is judged as negative, control returns to step S7505.

It is judged whether all the programs have been selected (step S7508). When it is judged as positive, control returns to step S7501; when it is judged as negative, control returns to step S7502.

In the present embodiment, the user specifies a selection candidate program and a selection condition. However, the specification of selection candidate program may not be necessary, but programs including program information satisfying the selection condition may be extracted from all programs available. In this case, step S7503 will not be required.

As apparent from the above description, the program information retrieval apparatus of the present embodiment supports the user in selecting a program by receiving a program selection condition from the user beforehand and judging whether the program selection condition is satisfied for every program each time program information is updated.

The above described program information retrieval apparatus may be achieved by a general computer and a program information retrieval process program, the program being stored in a storage medium.

### <Embodiment 15>

FIG.76 is a block diagram showing the construction of the program information retrieval apparatus of Embodiment 15.

The construction includes a part similar to that of the program information retrieval apparatus in Embodiment 14. The same components are assigned the same reference signs. Only components unique to the present embodiment are described below.

The present apparatus additionally includes a clock unit 7601 and a broadcast judgment unit 7602.

Program information extraction unit 6907, in addition to the existent functions, extracts the broadcast start time and the broadcast end time of selection candidate programs.

Clock unit 7601 holds the current time.

Broadcast judgment unit 7602 compares the times extracted by the program information extraction unit 6907 with the current time held by the clock unit 7601 when the output unit 6909 outputs information identifying the program. After this comparison, broadcast judgment unit 7602 judges that the identified program has not started to be broadcast when the broadcast start time is later than the current time; and the unit 7602 judges that the identified program is to be broadcast when the broadcast start time is earlier and the broadcast end time is later than the current time.

Reception unit 6911 receives information identifying the program from output unit 6909 and a judgment from the broadcast judgment unit 7602. Reception unit 6911 reserves the identified program for receiving when the broadcast judgment unit 7602 judges that the identified program has not started to be broadcast; the unit 6911 receives the program when the unit 7602 judges that the identified program is to be broadcast.

Video recording unit 6912 receives information identifying the program from output unit 6909 and a judgment from the broadcast judgment unit 7602. Video recording unit 6912 reserves the identified program for video recording when the broadcast judgment unit 7602 judges that the identified program has not started to be broadcast; the unit 6912 video-records the program when the unit 7602 judges that the identified program is to be broadcast.

The processes of extracting program information by program information extraction unit 6907 and judging the selection condition by condition judgment unit 6908 are not described here since they are the same as Embodiment 14, but only the processes unique to the present embodiment are described below.

FIG.77(a), FIG.77(b) and FIG.77(c) show a part of the program information acquired by the program information acquisition unit 6901.

FIG.77(a) shows program information obtained at 8:00 a.m. on July 25. The "content" field includes information "Unicorns(?) vs Rhinos(?)" which indicates that the program presents the baseball game played on July 25th. The mark "()" included in this information is used to show the score of the team. In this drawing a mark "?" is inserted in each mark "()," indicating that the score has not been obtained. This is because this game has not started at 8:00 a.m. on July 25th when the program information is obtained.

FIG.77(b) shows program information obtained at 8:00 p.m. on July 25. The "content" field includes information "Unicorns(3) vs Rhinos(5), bottom of 3rd inning" which indicates that the game is being played. The numeral inserted in each mark "()" indicates the number of runs scored by the team. It is presumed here that the game has not ended at 8:00 p.m. on July 25th when the program information is obtained.

Suppose here that the player "Purse" of the Unicorns homers to add three runs to the score at 9:00 p.m.

FIG.77(c) shows program information obtained immediately after Purse has homered at 9:00 p.m. The "content" field includes information "Unicorns(6) vs Rhinos(5), bottom of 8th inning, home run."

FIG.78 shows a screen generated based on the program information shown in FIG.77(a).

FIGs.79(a) and 79(b) show selection condition input screens. It is possible for the user to specify detailed selection conditions with a pull-down menu provided from the screen shown in FIG.79(a).

The processes of receiving notification of the selection candidate program and selection condition input by the user performed by the selection candidate program reception unit 6903 and condition reception unit 6905 are not described here since they are the same as Embodiment 14, but only the processes unique to the present embodiment are described below.

The above processes are described with reference to FIGS.73, 77(b), 78, 79(a), and 79(b).

Selection candidate program reception unit 6903 displays a program information screen as shown in FIG.78 which is generated from the latest program information shown in FIG.77(a) (step S7301).

The user specifies a selection candidate program on the program information screen by pressing a reservation button on a remote controller (step S7302).

Condition reception unit 6905 displays a selection condition screen as shown in FIG.79(a) (step S7303).

The user places the cursor on "anytime" area for "Unicorns vs Rhinos" and presses the enter button on the remote controller (step S7304).

A selection condition is displayed (step S7305). In the present example, a pull-down menu showing "Unicorns > Rhinos" and "Unicorns < Rhinos" as shown in FIG.79(b) is displayed.

The user selects a selection condition (step S7306). In the present example, the user selects "Unicorns > Rhinos" which indicates that the user receives the program if the Unicorns reverse the game even if another program is being received.

It is presumed here that the selection candidate program is "professional baseball," the selection condition is "anytime" and "Unicorns vs Rhinos," the program information shown in FIG.77(b) is held, and the program information shown in FIG.77(c) is obtained immediately after Purse has homered at 9:00 p.m.

FIG.80 is a flowchart of the processes performed by the reception unit 6911 and video recording unit 6912 in step S7506 shown in FIG.75.

The output unit 6909 outputs information identifying a program to the reception unit 6911 and video recording unit 6912. Immediately after this, the broadcast judgment unit 7602 judges whether the identified program has not started to be broadcast (step S8001). When it is judged as positive, control goes to step S8002; when it is judged as negative, control goes to step S8003. In the present example, it is judged as negative.

Reception unit 6911 and video recording unit 6912 receive information identifying the program from output unit 6909 and reserves the identified program for receiving and for video recording, respectively (step S8002).

The broadcast judgment unit 7602 judges whether the identified program is being broadcast (step S8003). When it is judged as positive, control goes to step S8004; when it is judged as negative, the process ends. In the present example, it is judged as positive.

Reception unit 6911 and video recording unit 6912 receive information identifying the program from output unit 6909. Reception unit 6911 receives the identified program and video recording unit 6912 video-records the identified program (step S8004). In the present example, the reception unit 6911 receives program identifier "204-010" and receives the program "professional baseball" even if another program is being received currently.

In the present embodiment, condition judgment unit 6908 judges whether program information satisfies selection condition each time program information is updated. However, this may not be performed when broadcast judgment unit 7602 judges that the identified program has not started to be broadcast. In this case, condition judgment unit 6908 will make the above judgment immediately before the broadcast start time which is extracted by the program information extraction unit 6907.

As apparent from the above description, the program information retrieval apparatus of the present embodiment supports the user in selecting a program by receiving a program selection condition from the user beforehand, judging whether the program selection condition is satisfied for every program each time program information is updated, judging whether programs satisfying the selection condition have not started to be broadcast or being broadcast, reserving programs before broadcast for receiving and video recording, and receiving and video-recording programs being broadcast. Note that it is possible to display program information or program names whether a program has not started to be broadcast or being broadcast, supporting the user in selecting a program.

In the present embodiment, an example is introduced where the score of a game is substituted in a formula representing a selection condition. However, the method of judging whether a selection condition is satisfied is not limited to this.

For example, key words such as "3rd inning" or "stock price" may be used. In this case, whether a selection condition is satisfied will be judged by checking, in real time or before the program starts to be broadcast, whether the program information includes such key words in the "content" field.

Alternately, character name such as "oshima Kazushige" may be used. In this case, whether a selection condition is satisfied will be judged by checking, in real time or before the program starts to be broadcast, whether the program information includes such character name.

The program information may include program attributes other than those disclosed in the present embodiment, or some program attributes may be deleted from the program information. For example, the program information may be achieved by closed captions which arc subtitle information interleaved in broadcast programs. Also, in the present embodiment, the program information includes information for one day. However, the program information may include information for a period longer than one day, such as one or two weeks.

The above described program information retrieval apparatus may be achieved by a general computer and a program information retrieval process program, the program being stored in a storage medium.

In Embodiments 14 and 15, the reception apparatus operated by the user performs all the processes. However, a broadcasting apparatus, such as a broadcasting station, as a supplier of program information may include a part of such processes. Components indispensable to the reception apparatus are a display unit and an input unit. Other components may be included in either of the broadcasting apparatus and the reception apparatus.

Accordingly, the distribution of the components other than the display unit and input unit is left to the discretion of the system designer. The system designer can determine the distribution taking into consideration the performance and processing speed of the system and economical efficiency.

### <Embodiment 16>

Embodiment 16 deals with a program information retrieval apparatus which gives priority to the programs broadcast in the same time zone as a certain program.

FIG.81(a) is a block diagram showing the construction of the program information retrieval apparatus in Embodiment 16.

The program information retrieval apparatus is composed of a program information acquisition unit 8101, a program information structuralization unit 8102, a program information hold unit 8103, a priority information input unit 8104, a priority information hold unit 8105, a program information relating unit 8106, a personal program information generation unit 8107, a personal program information hold unit 8108, a program information organization unit 8109, and a display unit 8110.

FIG.81(b) is a block diagram showing the construction of the program information organization unit 8109 in Embodiment 16.

The program information organization unit 8109 is composed of an extraction unit 8109a, a priority determination unit 8109b, and a personal program list generation unit 8109c.

The program information acquisition unit 8101 acquires the program information beforehand using a TV receiver, a terminal used by a subscriber to an information network connected via a telephone line, or an apparatus for reading a storage medium by receiving the program information through broadcasts interleaving the information, via a communication line, or from a recording medium.

The program information characterizes each program. The program information includes character sequences representing, for example,"program ID," "channel number," "broadcast start time," "broadcast end time," "program name," "genre," "content," and "cast." '

FIG.82(a) shows program information acquired by program information acquisition unit 8101.

Program information structuralization unit 8102 structuralizes the program information for each program.

FIG.82(b) shows the program information structuralized by the program information structuralization unit 8102.

Left side of list includes "item" names, and the right side shows information included in each corresponding item which is referred to as "content." For example, the program information includes content "0000001" 8202 as the "program ID" 8201. Also, item "NVOD" 8203 indicates whether the program is a Near Video On Demand (hereinafter called NVOD) program. Item "rerun" 8204 indicates whether the program is a rerun program. In case of the rerun program, the same program is broadcast a plurality of times. The theme of these items is affirmed by content "true" 8205 and denied by content "false" 8206.

The program ID is information for identifying a program. The NVOD is one of the services currently provided by digital cs broadcasting. The NVOD allows a plurality of channels to continuously broadcast a popular movie title with a certain time difference between these channels.

FIG.83 shows a relationship in NVOD between channels and the broadcast times of the same program.

Program information hold unit 8103, being achieved by a memory or a hard disk, stores program information. For example, program information hold unit 8103 stores the structuralized information as shown in FIG.83.

Priority information input unit 8104, being composed of a TV, an STB (Set Top Box), and a remote controller, is used by the user to input priority information. The remote controller is equipped with buttons, "up," "down," "left," and "right." The "up" and "down" buttons are used to select items. The "left" and "right" buttons are used to select contents.

Each piece of the priority information consists of a pair of a priority condition and a priority, where the priority condition reflects the taste for programs by the user, and the priority shows the level of the taste.

FIG.84 shows a priority information input screen displayed by the priority information input unit 8104. The drawing indicates that a reversed item "the priority is:" 8401 and the content "1" 8402 are selected. If the user continues to press the "right" button on this screen, the selected content will change to "2," "3," ...

FIG.85 shows priority information input through priority information input unit 8104.

Priority information hold unit 8105 holds priority information input through the priority information input unit 8104. For example, priority information hold unit 8105 holds the priority information 8501 shown in FIG.85 which corresponds to the content input from the input screen shown in FIG.84.

Program information relating unit 8106 generates information showing relationships between programs. Program information relating unit 8106 compares programs with each other in terms of the broadcast start time and end time to extract programs broadcast in the same time period. Program information relating unit 8106 also relates the programs to each other in terms of the same genre, the same title for NVOD, the same title for rerun. The generated information is stored in the program information hold unit 8103 as well as program information.

FIG.86 is a schematic representation of the relating performed by program information relating unit 8106. Boxes such as 8603 and 8601 represents separate pieces of program information.

For example, content 8602 of item "same time zone program" contained in program information 8601 shows a relationship between the programs that are broadcast in the same time zone. The relationship is represented by a bidirectional link between each two programs. In contrast, the relationships in terms of the same title for NVOD and the same title for rerun are represented by a list arranged in the order of broadcast time. In the drawing, each arrow shows a relationship between programs, each black circle represents a program ID.

Personal program information generation unit 8107 generates personal program information by judging whether each program information satisfies the priority condition stored in the priority information hold unit 8105, and assigning a priority to each piece of the program information satisfying the condition, relating the priority to the program ID. For example, personal program information generation unit 8107 judges that a program satisfies the condition if the program includes one or more characters that match the characters set as the priority condition.

FIG.87 shows a part of personal program information generated by the personal program information generation unit 8107.

Personal program information hold unit 8108 holds the personal program information generated by the personal program information generation unit 8107, such as the one shown in FIG.87.

Program information organization unit 8109 extracts program IDs of all programs that overlap each other, entirely or partially, in a certain broadcast time period by searching the program information stored in the program information hold unit 8103. Program information organization unit 8109 then extracts priorities corresponding to the extracted program IDs, gives priority to the program IDs in accordance with the extracted priorities, and organizes the programs with the program information stored in the program information hold unit 8103 in the order of the assigned priorities.

Extraction unit 8109a extracts program IDs of all programs that overlap an arbitrary program, entirely or partially, in the broadcast time period of the arbitrary program by referring to the "same time zone program" information stored in the program information hold unit 8103. Extraction unit 8109a also extracts the program ID of the arbitrary program. Extraction unit 8109a then extracts priorities corresponding to the extracted program IDs from personal program information hold unit 8108.

Priority determination unit 8109b gives priority to the program IDs extracted by the extraction unit 8109a in accordance with the extracted priorities.

Personal program list generation unit 8109c generates a personal program list by organizing the programs with the program information stored in the program information hold unit 8103 in the order of the assigned priorities.

Display unit 8110 displays a personal program list.

FIG.88 shows a part of a personal program list shown on the display unit 8110.

Three black stars 8801 indicate the priority level of the program. The number "2" 8802 indicates that the priority of the program is "2." The left arrow 8803 indicates that the user can view a program with a higher priority than the present program, the right arrow 8804 a program with a lower priority.

When the user pushes a numeral button on the remote controller on this screen, the program information for the program with the priority of the numeral is displayed; when the user pushes the "left" button, the program information for the program higher than the current program by one rank is displayed; and when the user pushes the "right" button, the program information for the program lower than the current program by one rank is displayed.

FIG.89 is a flow chart of the process for updating the personal program information in Embodiment 16.

The update process is described below with reference to FIG.89.

It is judged whether program information has been input (step S8901). When it is judged as positive, control goes to step S8903; when it is judged as negative, control goes to step S8902.

It is judged whether priority information has been input (step S8902). When it is judged as positive, control goes to step S8909; when it is judged as negative, control returns to step S8901.

The program information is acquired (step S8903). For example, program information shown in FIG.82 is acquired.

Program information structuralization unit 8102 structuralizes obtained program information in units of programs (step S8904). In the present example, the program information is structuralized as shown in FIG.83.

It is judged whether the structuralized program information is totally or partly new compared to the information stored in program information hold unit 8103 (step S8905), where whether it is totally new is judged by checking whether the same program ID is stored in the unit 8103, and whether it is partly new is judged by checking whether all the items of the program information include the same contents as another program information with the same program ID. When it is judged as positive, control goes to step S8906; when it is judged as negative, control returns to step S8901.

Program information hold unit 8103 stores the structuralized program information or updates the existent information with the structuralized information (step S8906).

Program information relating unit 8106 adds or updates the relationships between programs (step S8907). Note that a method of generating the relationships is described later.

Personal program information generation unit 8107 generates or updates personal program information based on the program information and relation ships between programs stored in program information hold unit 8103 and priority information stored in priority information hold unit 8105 (step S8908). Note that a method of generating the personal program information is described later.

The priority information is acquired (step S8909). For example, priority information shown in FIG.85 is acquired.

It is judged whether the acquired priority information is totally or partly new compared to the information stored in priority information hold unit 8105 (step S8910), where whether it is totally new is judged by checking whether the same priority information is stored in the same priority level, and whether it is partly new is judged by checking whether all the items of the priority information include the same contents as another priority information in the same priority level.

Priority information hold unit 8105 stores the acquired priority information or updates the existent information with the acquired priority information (step S8911).

Control then goes to step S8908, and personal program information generation unit 8107 generates or updates personal program information based on the program information and relation ships between programs stored in program information hold unit 8103 and priority information stored in priority information hold unit 8105.

FIG.90 is a flow chart of generating relationships between programs.

The above process is described below with reference to FIG.90.

Program information relating unit 8106 relates programs broadcast in the same time zone to each other by comparing the programs in terms of the start time and end time (step S9001).

Program information relating unit 8106 relates programs in the same genre to each other (step S9002).

It is judged whether the program is a NVOD program (step S9003). When it is judged as positive, control goes to step S9004; when it is judged as negative, control goes to step S9005.

Program information relating unit 8106 relates NVOD programs of the same title to each other (step S9004).

It is judged whether the program is a rerun program (step S9005). When it is judged as positive, control goes to step S9006; when it is judged as negative, the process ends.

Program information relating unit 8106 relates rerun programs of the same title to each other (step S9006).

FIG.91 is a flow chart of generating personal program information.

The above process is described below with reference to FIG.91.

It is judged whether there is a program to be processed (step S9101). When it is judged as positive, control goes to step S9102: when it is judged as negative, the process ends.

Program information of one program is extracted (step S9102). For example, program information as shown in FIG.83 is extracted.

"1" is substituted as the initial value into variable X representing the priority level (step S9103).

It is judged whether there is a priority condition to be processed for the priority level indicated by variable X (step S9104). When it is judged as positive, control goes to step S9105; when it is judged as negative, control goes to step S9108.

A priority condition to be processed is selected among those for the priority level indicated by variable X (step S9105). For example, the priority levels shown in FIG.85 are extracted in order.

It is judged whether the program information extracted in step S9102 satisfies the priority condition extracted in step S9105 (step S9106). In the present example, it is judged that the program information shown in FIG.83 satisfies the priority condition 8502 extracted with variable X=2.

Personal program information hold unit 8108 stores, as the personal program information, the program ID and the priority level corresponding to the priority condition (step S9107). In the present example, personal program information hold unit 8108 stores program ID 302 "0000001" shown in FIG.83 and priority level "2" corresponding to priority condition 8502.

"1" is added to variable X (step S9108).

It is judged whether all the priority levels have been processed (step S9109). When it is judged as positive, control returns to step S9101; when it is judged as negative, the process ends. For example, it is judged as positive when variable X is greater than the priority level 8504 "N" shown in FIG.85.

FIG.92 is a flow chart of generating and displaying a personal program list.

The above process is described below with reference to FIG.92.

When a program is selected based on an input by the user, settings of the apparatus, and the current time, information of relationships between programs in the same time zone including the selected program is extracted from the program information hold unit 8103 (step S9201).

Personal program information including the program IDs and priority levels of the selected program and other programs in the same time zone is extracted from the personal program information hold unit 8108 based on the information extracted in step S9201 (step S9202).

It is judged whether a plurality of the same priority levels are included in the extracted priority levels (step S9203). When it is judged as positive, control goes to step S9204; when it is judged as negative, control goes to step S9210.

It is judged whether the programs are rerun programs by referring to the item "rerun" in the program information for each program (step S9204). When it is judged as positive, control goes to step S9205; when it is judged as negative, control goes to step S9207.

It is judged whether the program is rerun after the present broadcast by referring to information of relationships between rerun programs of the same title (step S9205). When it is judged as positive, control goes to step S9206; when it is judged as negative, control goes to step S9207.

The priority levels of the programs which are rerun after the present broadcasts are assigned lower priorities than the programs which are not rerun after the present broadcasts (step S9206).

It is judged whether the programs are NVOD programs by referring to the item "NVOD" in the program information for each program (step S9207). When it is judged as positive, control goes to step S9208; when it is judged as negative, control returns to step S9203.

It is judged whether the program is broadcast after the present broadcast by referring to information of relationships between NVOD programs of the same title (step S9208). When it is judged as positive, control goes to step S9209; when it is judged as negative, control returns to step S9203.

The priority levels of the NVOD programs which are broadcast after the present broadcasts are assigned lower priorities than the non-NVOD programs and NVOD programs which are not broadcast after the present broadcasts (step S9209).

The priorities of the program IDs are determined. A personal program list is generated from the program information based on the determined priorities. The generated personal program list is displayed (step S9210).

As apparent from the above description, the program information retrieval apparatus of the present embodiment generates personal program information based on priority information input by the user and acquired program information, and organizes program information in accordance with the priorities for the selected program. The present apparatus then displays the generated personal program information.

The above described program information retrieval apparatus may be achieved by a general computer and a program information retrieval process program, the program being stored in a storage medium.

### <Embodiment 17>

Embodiment 17 deals with a program information retrieval apparatus which assigns priorities to the programs broadcast in the same time zone including a selected time.

The construction includes a part similar to that of the program information retrieval apparatus in Embodiment 16. The same components are assigned the same reference signs. Only components unique to the present embodiment are described below.

Extraction unit 8109a extracts program IDs of all programs which contain an arbitrary time in their broadcast times from the program information hold unit 8103 by referring to the program information stored in this unit 8103. Extraction unit 8109a extracts the priority levels corresponding to the extracted program IDs from the personal program information hold unit. 8108.

Processes of updating personal program information, generating information of relationships, and generating personal program information are not described here since they are the same as Embodiment 16.

FIG.93 is a flow chart of generating and displaying a personal program list.

The above process is described below with reference to FIG.93.

A time is selected based on an input by the user, settings of the present apparatus, and the current time (step S9301).

Extraction unit 8109a searches the program information hold unit 8103 for programs which contain the selected time in their broadcast times by referring to the program information concerning the broadcast time (step S9302).

The program IDs of the detected programs are extracted from the program information stored in the program information hold unit 8103 (step S9303).

The priority levels of the extracted program IDs are extracted from the personal program information hold unit 8108 (step S9304).

The same steps S9203 to 9210 as Embodiment 16 follow the step S9304.

FIG.94 shows a part of a personal program list displayed on display unit 8110 in Embodiment 17.

The time 9401 in the drawing indicates a selected time.

In the present embodiment, personal program information is generated based on a selected time. However, personal program information may be generated and stored at regular intervals.

As apparent from the above description, the program information retrieval apparatus of the present embodiment generates personal program information based on priority information input by the user and acquired program information, and organizes program information in accordance with the priorities at a selected time or at regular intervals. The present apparatus then displays the generated personal program information.

The above described program information retrieval apparatus may be achieved by a general computer and a program information retrieval process program, the program being stored in a storage medium.

### <Embodiment 18>

Embodiment 18 deals with a program information retrieval apparatus which assigns priorities to the programs broadcast in the same time unit including a selected time.

The construction includes a part similar to that of the program information retrieval apparatus in Embodiment 16. The same components are assigned the same reference signs. Only components unique to the present embodiment are described below.

Extraction unit 8109a extracts program IDs of all programs which contain, entirely or partially, an arbitrary time unit in their broadcast times from the program information hold unit 8103 by referring to the program information stored in this unit 8103. Extraction unit 8109a extracts the priority levels corresponding to the extracted program IDs from the personal program information hold unit 8108.

Processes of updating personal program information, generating information of relationships, and generating personal program information are not described here since they are the same as Embodiment 16.

FIG.95 is a flow chart of generating and displaying a personal program list.

The above process is described below with reference to FIG.95.

A time is selected based on an input by the user, settings of the present apparatus, and the current time (step S9501).

Extraction unit 8109a searches the program information hold unit 8103 for programs which contain, entirely or partially, an arbitrary time unit in their broadcast times by referring to the program information concerning the broadcast time (step S9502).

The same steps S9303 to 9304 as Embodiment 17 follow the step S9502.

The same steps S9203 to 9210 as Embodiment 16 follow the step S9304.

FIG.96 shows a part of a personal program list displayed on display unit 8110 in Embodiment 18.

The time 9601 in the drawing indicates a selected time.

In the present embodiment, personal program information is generated based on a selected time. However, personal program information may be generated and stored at regular intervals of a certain time unit. In this case, the time unit may, for example, one hour, 30 minutes, or 10 minutes.

As apparent from the above description, the program information retrieval apparatus of the present embodiment generates personal program information based on priority information input by the user and acquired program information, and organizes program information in accordance with the priorities at a selected time or at regular intervals of a certain time unit. The present apparatus then displays the generated personal program information.

The above described program information retrieval apparatus may be achieved by a general computer and a program information retrieval process program, the program being stored in a storage medium.

### <Embodiment 19>

Embodiment 19 deals with a program information retrieval apparatus which assigns priorities to the programs broadcast in around the same time zone including the broadcast start time of a selected program.

The construction includes a part similar to that of the program information retrieval apparatus in Embodiment 16. The same components are assigned the same reference signs. Only components unique to the present embodiment are described below.

Extraction unit 8109a extracts program IDs of all programs whose broad cast start times fall into a certain time range including the broad cast start time of an arbitrary program from the program information hold unit 8103 by referring to the program information stored in this unit 8103. Extraction unit 8109a extracts the priority levels corresponding to the extracted program IDs from the personal program information hold unit 8108.

Processes of updating personal program information, generating information of relationships, and generating personal program information are not described here since they are the same as Embodiment 16.

FIG.97 is a flow chart of generating and displaying a personal program list.

The above process is described below with reference to FIG.97.

A program is selected based on an input by the user, settings of the present apparatus, and the current time (step S9701).

Extraction unit 8109a searches the program information hold unit 8103 for programs whose broad cast start times fall into a certain time range including the broad cast start time of the selected program by referring to the program information concerning the broadcast time (step S9702).

The same steps S9303 to 9304 as Embodiment 17 follow the step S9702.

The same steps S9203 to 9210 as Embodiment 16 follow the step 59304.

FIG.88 shows a part of a personal program list displayed on display unit 8110 in Embodiment 19, as in Embodiment 16.

In the present embodiment, personal program information is generated based on a selected program. However, personal program information may be generated beforehand for all the programs.

As apparent from the above description, the program information retrieval apparatus of the present embodiment generates personal program information based on priority information input by the user and acquired program information, and organizes program information of a selected program and programs whose broad cast start times fall into a certain time range including the broad cast start time of the selected program. The present apparatus then displays the generated personal program information.

The above described program information retrieval apparatus may be achieved by a general computer and a program information retrieval process program, the program being stored in a storage medium.

### <Embodiment 20>

Embodiment 20 deals with a program information retrieval apparatus which assigns priorities to the programs broadcast in around the same time zone including the broadcast end time of a selected program.

The construction includes a part similar to that of the program information retrieval apparatus in Embodiment 16. The same components are assigned the same reference signs. Only components unique to the present embodiment are described below.

Extraction unit 8109a extracts program IDs of all programs whose broad cast start times fall into a certain time range including the broad cast end time of an arbitrary program from the program information hold unit 8103 by referring to the program information stored in this unit 8103. Extraction unit 8109a extracts the priority levels corresponding to the extracted program IDs from the personal program information hold unit 8108.

Processes of updating personal program information, generating information of relationships, and generating personal program information are not described here since they are the same as Embodiment 16.

FIG.98 is a flow chart of generating and displaying a personal program list.

The above process is described below with reference to FIG.98.

A program is selected based on an input by the user, settings of the present apparatus, and the current time (step S9801).

Extraction unit 8109a searches the program information hold unit 8103 for programs whose broad cast start times fall into a certain time range including the broad cast end time of the selected program by referring to the program information concerning the broadcast time (step S9802).

The same steps S9303 to 9304 as Embodiment 17 follow the step S9802.

The same steps S9203 to 9210 as Embodiment 16 follow the step S9304.

FIG.99 shows a part of a personal program list displayed on display unit 8110 in Embodiment 20.

In the drawing, the "down" arrow 9901 indicates that personal program information of the programs that start at around the time the present program ends is available.

The information of these programs is displayed when the user presses the "down" button of a remote controller, as in Embodiment 16.

In the present embodiment, personal program information is generated based on a selected program. However, personal program information may be generated beforehand for all the programs.

As apparent from the above description, the program information retrieval apparatus of the present embodiment generates personal program information based on priority information input by the -user and acquired program information, and organizes program information of a selected program and programs whose broad cast start times fall into a certain time range including the broad cast end time of the selected program. The present apparatus then displays the generated personal program information.

FIG.100 shows an outline of the personal program information which is previously generated in Embodiment 19 or 20. In the drawing, each arrow indicates a relationship between programs, each black circle represents a program ID. The two program IDs at the edges of an arrow are the same program IDs. "Next candidate" indicates a program whose priority is lower than the present program by one rank in Embodiment 19. "Next program" indicates a program whose priority is highest in the programs which are broadcast at around the time the present program ends in Embodiment 20.

Also, the personal program information includes "start time" and "end time." When the personal program information hold unit 8108 stores personal program information including "start time" and "end time" with the above arrangement, the extraction unit 8109a can directly extract priority levels corresponding to the program IDs from the unit 8108, not from the program information hold unit 8103.

FIG.101 shows a part of a personal program list which is generated beforehand and displayed on display unit 8110 in Embodiment 20.

In the drawing, the areas 10101 and 10102 indicates time periods which do not contain programs to be selected.

In each of the above embodiments, program information acquisition unit 8101 may be deleted when program information is not stored beforehand in the program information hold unit 8103.

In each of the above embodiments, program information structuralization unit 8102 may be deleted when previously structuralized program information is acquired. Note that the program information structuralization unit 8102 may be merely deleted since the deletion of the structuralization in units of programs does not affect each of the above described embodiments.

In each of the above embodiments, the priority information input unit 8104 may be deleted when priority information is not stored beforehand in the priority information hold unit 8105.

In each of the above embodiments, program information relating unit 8106 may be deleted. This is because the information of relationships between programs is generated from only the program information and deletion of the information does not affect each embodiment.

The personal program information hold unit 8108 and the program information hold unit 8103 may be combined into one unit. This appears to be natural when the apparatus is used by only one user. However, two separate units for each information is effective when a plurality of users use the present apparatus. The personal program information hold unit 8108 may be deleted when the personal program information is generated as necessary based on the program information and priority information.

It is possible to reserve programs for viewing or video recording in accordance with the priorities assigned by the program information organization unit 8109, as well as displaying personal program list.

The above described program information retrieval apparatus may be achieved by a general computer and a program information retrieval process program, the program being stored in a storage medium.

In Embodiments 16-20, the reception apparatus operated by the user performs all the processes. However, a broadcasting apparatus, such as a broadcasting station, as a supplier of program information may include a part of such processes. Components indispensable to the reception apparatus are a display unit and an input unit. Other components may be included in either of the broadcasting apparatus and the reception apparatus.

Accordingly, the distribution of the components other than the display unit and input unit is left to the discretion of the system designer. The system designer can determine the distribution taking into consideration the performance and processing speed of the system and economical efficiency.

Recording media in which data such as a program of the method of the present invention or the program information is recorded to be supplied include the computer-readable optical recording medium, magnetic recording medium, and semiconductor storage device such as the CD-ROM, CD-RAM, DVD, DVD-ROM, MO, floppy disk, hard disk, magnetic tape, memory card, ROM, etc.

FIG.102 shows a 3.5-inch floppy disk 10201.

FIG.103 shows a disk reading apparatus 10301 and a computer 10302. The disk reading apparatus 10301 includes a disk insertion units 10303.

For example, data such as a program of the method of the present invention or the program information is recorded in the 3.5-inch floppy disk 10201. The 3.5-inch floppy disk 10201 storing the data is supplied to the user. The user inserts the floppy disk into the disk insertion unit 10303. The disk reading apparatus 10301 reads the data from the floppy disk. The read data is stored in a memory in the computer 10302 and used by the computer.

The present invention has been fully described by way of examples with reference to the accompanying drawings, it is to be noted that various changes and modifications will be apparent to those skilled in the art. Therefore, unless such changes and modifications depart from the scope of the present invention, they should be construed as being included therein.

## Claims

**1.** A program information retrieval apparatus for receiving, from a broadcasting apparatus, broadcast data which includes a plurality of pieces of program information respectively related to a plurality of broadcast programs, retrieving program information from the received broadcast data, and displaying the retrieved program information on a display apparatus, wherein
each piece of program information includes a plurality of attributes, a program identifier, and link information, the program identifier identifying a present piece of program information including the program identifier, the plurality of attributes characterizing a broadcast program and being classified into a plurality of items, the link information links the present piece of program information to other pieces of program information which include same attributes as the present piece of program information, linking for each of the same attributes, the program information retrieval apparatus comprising:
a reception means for receiving the broadcast data;
a program information storage means for storing program information included in the received broadcast data;
a control means for displaying the program information in units of broadcast programs on the display apparatus; and
an attribute receiving means for receiving an attribute specified by the user, wherein
the control means retrieves program information which includes the received attribute using the link information and displays the retrieved program information on the display apparatus for each broadcast program.

**2.** The program information retrieval apparatus of Claim 1, wherein
each piece of the link information includes one attribute and program identifiers of all pieces of program information that include the attribute, wherein
the control means includes:
a first display control means for displaying the program information in units of broadcast programs on the display apparatus;
a retrieval means for retrieving program identifiers related to the attribute received by the attribute receiving means from the link information and retrieving pieces of program information identified by the retrieved program identifiers;
a second display control means for displaying the retrieved pieces of program information in units of broadcast programs on the display apparatus.

**3.** The program information retrieval apparatus of Claim 2., wherein
each piece of the link information further includes external-data identifiers which identify all pieces of external data including the attributes included in the link information, the attributes being related to the pieces of external data, wherein
the retrieval means retrieves external-data identifiers related to the attribute received by the attribute receiving means from the link information stored in the program information storage means, and
the second display control means displays the retrieved external-data identifiers on the display apparatus.

**4.** The program information retrieval apparatus of Claim 3, wherein
the attribute receiving means further receives an external-data identifier specified by the user, wherein
the program information retrieval apparatus further comprises:
an external data acquisition means for acquiring external data using the external-data identifier received by the attribute receiving means; and
a third display control means for displaying the acquired external data on the display apparatus.

**5.** The program information retrieval apparatus of Claim 4, wherein
the external-data identifier is an URL of Internet, and
the external data acquisition means accesses a homepage using the URL and reads contents of the homepage.

**6.** A computer-readable recording medium storing program information, the computer-readable recording medium being used by a program information retrieval apparatus which retrieves the program information from the computer-readable recording medium in units of broadcast programs and displays the retrieved program information, each piece of the program information including:
a program identifier which identifies a present piece of program information including the program identifier, the present piece of program information being related to a broadcast program;
a plurality of attributes which characterize the broadcast program and being classified into a plurality of items; and
link information which links the present piece of program information to other pieces of program information which include same attributes as the present piece of program information for each of the same attributes.

**7.** The computer-readable recording medium of Claim 6, wherein
each piece of the link information includes:
one or more link attributes which are included, in common, in the present piece of program information and one or more pieces of program information linked to the present piece of program information; and
one or more link identifiers which are program identifiers of the pieces of program information linked to the present piece of program information.

**8.** The computer-readable recording medium of Claim 7, wherein
each piece of the link information further includes:
one or more external-data identifiers which identify external data related to the present piece of program information in terms of the link attributes.

**9.** The computer-readable recording medium of Claim 8, wherein
the external-data identifiers are URLs of Internet.

**10.** The computer-readable recording medium of Claim 6, wherein
the plurality of attributes are classified into:
a type code item showing a type of the broadcast program;
a program name item showing a title of the broadcast program;
a broadcasting station item showing a name of a broadcasting station which broadcast the broadcast program;
a broadcast time item showing a broadcast start time and a broadcast end time the broadcast program;
a content item showing an outline of the broadcast program; and
a cast item showing one or more characters of the broadcast program.

**11.** The computer-readable recording medium of Claim 10, wherein
the plurality of attributes are in addition classified into:
a program accompaniment information item showing a charging and viewing limitations.

**12.** A broadcasting apparatus for transmitting broadcast data, which includes a plurality of pieces of program information respectively related to a plurality of broadcast programs, to one or more program information retrieval apparatuses which each retrieve a piece of program information from the transmitted broadcast data and display the retrieved program information on a display apparatus, the broadcasting apparatus comprising:
a program information storage means for storing a plurality pieces of program information each of which includes a program identifier which identifies a present piece of program information including the program identifier, and storing a plurality of attributes which characterize the broadcast program and being classified into a plurality of items;
a link information adding means for detecting each attribute that is included in a plurality of pieces of program information in common by referring to the plurality of pieces of program information stored in the program information storage means, generating a piece of link information for each piece of program information which, including one or more detected attributes, links the present piece of program information to other pieces of program information which include same attributes as the present piece of program information, and adding the generated piece of link information to each piece of program information including one or more detected attributes; and
a transmission means for transmitting, to the program information retrieval apparatuses, the broadcast data including the program information to which the link information has been added by the link information adding means.

**13.** The broadcasting apparatus of Claim 12, wherein
the link information adding means extracts each attribute from each piece of program information, retrieves, for each extracted attribute, program identifiers of all pieces of program information that include any of the extracted attributes, generates link information each piece of which includes an attribute and one or more program identifiers of program information that includes the attribute, and adds the generated link information to program information having the retrieved program identifiers.

**14.** A program information retrieval method for receiving, from a broadcasting apparatus, broadcast data which includes a plurality of pieces of program information respectively related to a plurality of broadcast programs, retrieving program information from the received broadcast data, and displaying the retrieved program information on a display apparatus, wherein
each piece of program information includes a plurality of attributes, a program identifier, and link information, the program identifier identifying a present piece of program information including the program identifier, the plurality of attributes characterizing a broadcast program and being classified into a plurality of items, the link information links the present piece of program information to other pieces of program information which include same attributes as the present piece of program information, linking for each of the same attributes, the program information retrieval method comprising:
a reception step for receiving the broadcast data;
a program information storage step for storing program information included in the received broadcast data into a storage means;
a first display control step for displaying the program information in units of broadcast programs on the display apparatus;
an attribute receiving step for receiving an attribute specified by the user;
a retrieval step for retrieving program identifiers related to the attribute received by the attribute receiving means from the link information and retrieving pieces of program information identified by the retrieved program identifiers; and
a second display control means for displaying the retrieved pieces of program information in units of broadcast programs on the display apparatus.

**15.** A computer-readable recording medium storing a program information retrieval program for allowing a computer to execute a method for receiving, from a broadcasting apparatus, broadcast data which includes a plurality of pieces of program information respectively related to a plurality of broadcast programs, retrieving program information from the received broadcast data, and displaying the retrieved program information on a display apparatus, wherein
each piece of program information includes a plurality of attributes, a program identifier, and link information, the program identifier identifying a present piece of program information including the program identifier, the plurality of attributes characterizing a broadcast program and being classified into a plurality of items, the link information links the present piece of program information to other pieces of program information which include same attributes as the present piece of program information, linking for each of the same attributes, the program information retrieval program comprising:
a reception step for receiving the broadcast data;
a program information storage step for storing program information included in the received broadcast data into a storage means;
a first display control step for displaying the program information in units of broadcast programs on the display apparatus;
an attribute receiving step for receiving an attribute specified by the user;
a retrieval step for retrieving program identifiers related to the attribute received by the attribute receiving means from the link information and retrieving pieces of program information identified by the retrieved program identifiers; and
a second display control means for displaying the retrieved pieces of program information in units of broadcast programs on the display apparatus.

**16.** A program information retrieval apparatus for retrieving program information characterizing programs in units of programs and displaying the retrieved program information in units of programs, wherein each piece of program information is related to a program, the program information retrieval apparatus comprising:
a program information hold means for holding the program information;
a link information management means for generating link information by referring to the program information and managing the generated link information, each piece of the link information relating one program to one or more other programs;
a display means for displaying the program information and the link information in units of programs; and
a retrieval means for retrieving program information of a program selected by a user based on the link information displayed on the display means, and displaying the retrieved program information on the display means.

**17.** The program information retrieval apparatus of Claim 16, wherein
the link information management means includes:
a link information generating means for generating link information by referring to the program information, each piece of the link information relating one program to one or more other programs;
a link information hold means for holding the link information generated by the link information generating means; and
a link information detection means for detecting certain pieces of link information among the link information held by the link information hold means, wherein
the display means displays the program information retrieved by the retrieval means and displays the certain pieces of link information detected by the link information detection means.

**18.** The program information retrieval apparatus of Claim 17, wherein
each piece of the program information held by the program information hold means includes a plurality of program attribute group which are each composed of a plurality of program attribute values classified into a plurality of program attribute items, wherein
the link information generating means generates, for each program attribute value, link information each piece of which relates a program attribute group to one or more other program attribute groups in accordance with a predetermined rule.

**19.** The program information retrieval apparatus of Claim 18 further comprising:
an acquisition means for acquiring program information via one of broadcasts interleaving the program information, a communication line, and a recording medium;
a program information update means for updating the program information stored in the program information hold means by comparing program attribute groups newly acquired by the acquisition means with program attribute groups acquired by the acquisition means immediately before, wherein
the link information management means updates the link information in accordance with the program information updated by the program information update means.

**20.** The program information retrieval apparatus of Claim 19, wherein
the link information management means further includes:
a link information extract means for extracting one or more pieces of link information related to program attribute values changed when the program informationis updated by the program information update means; and
a link information update means for updating the pieces of link information extracted by the link information extract means in accordance with the program information updated by the program information update means, and storing the updated pieces of link information in the link information hold means.

**21.** The program information retrieval apparatus of Claim 18 further comprising:
an ex-broadcast extract means for extracting program attribute groups of programs that have been broadcast from the program information hold means; and
an ex-broadcast hold means for holding the program attribute groups extracted by the ex-broadcast extract means.

**22.** The program information retrieval apparatus of Claim 21, wherein
each program attribute group held by the program information hold means includes a preservation attribute which indicates whether the present program attribute group should be preserved, wherein
the ex-broadcast hold means includes:
a prohibition means for prohibiting a program attribute group when its preservation attribute indicates that the present program attribute group should not be preserved.

**23.** The program information retrieval apparatus of Claim 18 further comprising:
a retrieval history hold means for holding a retrieval history of the retrieval means; and
a retrieval condition selection means for selecting one or more program attribute values based on the retrieval history held by the retrieval history hold means, wherein
the link information detection means detects one or more pieces of link information related tothe program attribute values selected by the retrieval condition selection means.

**24.** A program information retrieval method for retrieving program information characterizing programs in units of programs from a program information hold apparatus and displaying the retrieved program information in units of programs on a display apparatus, wherein each piece of program information is related to a program, the program information retrieval method comprising:
a link information management step for generating link information by referring to the program information and managing the generated link information, each piece of the link information relating one program to one or more other programs;
a display control step for displaying the program information and the link information in units of programs on the display apparatus; and
a retrieval step for retrieving program information of a program selected by a user based on the link information displayed on the display apparatus, and displaying the retrieved program information on the display apparatus.

**25.** The program information retrieval method of Claim 24, wherein
the link information management step includes:
a link information generating step for generating link information by referring to the program information, each piece of the link information relating one program to one or more other programs;
a link information hold step for storing the link information generated in the link information generating step into a link information hold apparatus; and
a link information detection step for detecting certain pieces of link information among the link information stored in the link information hold apparatus, wherein
In the retrieval step, the display apparatus displays the program information retrieved in the retrieval step and displays the certain pieces of link information detected in the link information detection step.

**26.** The program information retrieval method of Claim 25, wherein
each piece of the program information stored in the program information hold apparatus includes a plurality of program attribute group which are each composed of a plurality of program attribute values classified into a plurality of program attribute items, wherein
the link information generating step generates, for each program attribute value, link information each piece of which relates a program attribute group to one or more other program attribute groups in accordance with a predetermined rule.

**27.** A computer-readable recording medium storing a program information retrieval program for allowing a computer to execute a method for retrieving program information characterizing programs in units of programs and displaying the retrieved program information in units of programs, wherein each piece of program information is related to a program, the program information retrieval program comprising:
a link information management step for generating link information by referring to the program information and managing the generated link information, each piece of the link information relating one program to one or more other programs;
a display control step for displaying the program information and the link information in units of programs on the display apparatus; and
a retrieval step for retrieving program information of a program selected by a user based on the link information displayed on the display apparatus, and displaying the retrieved program information on the display apparatus.

**28.** The computer-readable recording medium of Claim 27, wherein
the link information management step includes:
a link information generating step for generating link information by referring to the program information, each piece of the link information relating one program to one or more other programs;
a link information hold step for storing the link information generated in the link information generating step into a link information hold apparatus; and
a link information detection step for detecting certain pieces of link information among the link information stored in the link information hold apparatus, wherein
In the retrieval step, the display apparatus displays the program information retrieved in the retrieval step and displays the certain pieces of link information detected in the link information detection step.

**29.** The computer-readable recording medium of Claim 28, wherein
each piece of the program information stored in the program information hold apparatus includes a plurality of program attribute group which are each composed of a plurality of program attribute values classified into a plurality of program attribute items, wherein
the link information generating step generates, for each program attribute value, link information each piece of which relates a program attribute group to one or more other program attribute groups in accordance with a predetermined rule.

**30.** A program information retrieval apparatus for retrieving program information characterizing programs in units of programs and displaying the retrieved program information in units of programs, wherein each piece of program information is related to a program, the program information retrieval apparatus comprising:
a display means for displaying the program information;
a program information hold means for holding a plurality of pieces of program information for a predetermined amount of information of programs;
a viewing history hold means for holding a viewing history of programs; and
a display control means for displaying the plurality of pieces of program information on the display means in accordance with the viewing history held by the viewing history hold means.

**31.** The program information retrieval apparatus of Claim 30, wherein
each of the plurality of pieces of program information held by the program information hold means is composed of a plurality of program attributes including a program name, wherein
the viewing history hold means calculates a viewing frequency for each program attribute of programs having been viewed by a user, and holds the calculated viewing frequency for each program attribute.

**32.** The program information retrieval apparatus of Claim 31, wherein
the display control means displays the plurality of pieces of program information to which program attributes that have viewing frequencies higher than a predetermined value are added.

**33.** The program information retrieval apparatus of Claim 32 further comprising:
a user identification means for identifying users, wherein
the retrieval history hold means calculates and holds a viewing frequency for each user.

**34.** The program information retrieval apparatus of Claim 33 further comprising:
a plurality of input means for receiving instructions from a plurality of users which respectively correspond to the plurality of input means, wherein
the user identification means identifies each user by detecting an input means used by a user.

**35.** The program information retrieval apparatus of Claim 31, wherein
the display control means displays, first, program attributes that have viewing frequencies higher than a predetermined value.

**36.** The program information retrieval apparatus of Claim 35 further comprising:
a user identification means for identifying users, wherein
the retrieval history hold means calculates and holds a viewing frequency for each user.

**37.** The program information retrieval apparatus of Claim 36 further comprising:
a plurality of input means for receiving instructions from a plurality of users which respectively correspond to the plurality of input means, wherein
the user identification means identifies each user by detecting an input means used by a user.

**38.** The program information retrieval apparatus of Claim 31, wherein
the display control means displays, first, program attributes that have one of the highest viewing frequency and one of a certain viewing frequencies following the highest viewing frequency.

**39.** The program information retrieval apparatus of Claim 38 further comprising:
a user identification means for identifying users, wherein
the retrieval history hold means calculates and holds a viewing frequency for each user.

**40.** The program information retrieval apparatus of Claim 39 further comprising:
a plurality of input means for receiving instructions from a plurality of users which respectively correspond to the plurality of input means, wherein
the user identification means identifies each user by detecting an input means used by a user.

**41.** The program information retrieval apparatus of Claim 31, wherein
the display control means displays the plurality of pieces of program information in which program names of programs having a program attribute having viewing frequencies higher than a predetermined value are added to each piece of program information having the same program attribute.

**42.** The program information retrieval apparatus of Claim 41 further comprising:
a user identification means for identifying users, wherein
the retrieval history hold means calculates and holds a viewing frequency for each user.

**43.** The program information retrieval apparatus of Claim 42 further comprising:
a plurality of input means for receiving instructions from a plurality of users which respectively correspond to the plurality of input means, wherein
the user identification means identifies each user by detecting an input means used by a user.

**44.** The program information retrieval apparatus of Claim 31, wherein
the display control means generates link information which links programs having a program attribute having viewing frequencies higher than a predetermined value to each piece of program information having the same program attribute, adds the generated link information to each piece of program information having the same program attribute, displays displays the plurality of pieces of program information including the generated link information, and, when receiving a specification of a program from a user, displays program information of programs linked to the specified program.

**45.** The program information retrieval apparatus of Claim 44 further comprising:
a user identification means for identifying users, wherein
the retrieval history hold means calculates and holds a viewing frequency for each user.

**46.** The program information retrieval apparatus of Claim 45 further comprising:
a plurality of input means for receiving instructions from a plurality of users which respectively correspond to the plurality of input means, wherein
the user identification means identifies each user by detecting an input means used by a user.

**47.** A program information retrieval system comprised of a broadcasting apparatus for transmitting viewing history information and a reception apparatus for receiving the viewing history information, retrieving program information in units of programs based on the received viewing history information, and displaying the retrieved program information, wherein the program information characterizes each program, and each piece of program information is related to a program,
the broadcasting apparatus comprising:
a viewing history hold means for holding the viewing history information which includes viewing histories for each program; and
a viewing history transmission means for transmitting the viewing history information,
the reception apparatus comprising:
a viewing history reception means for receiving the viewing history information;
a display means for displaying the program information;
a program information hold means for holding a plurality of pieces of program information for a predetermined amount of information of programs; and
a display control means for displaying, on the display means, program information retrieved from the program information hold means in accordance with the retrieval history held by the retrieval history hold means.

**48.** A program information retrieval apparatus for receiving viewing history information from a broadcasting apparatus, retrieving program information in units of programs based on the received viewing history information, and displaying the retrieved program information, wherein the program information characterizes each program, and each piece of program information is related to a program,
the program information retrieval apparatus comprising:
a viewing history reception means for receiving the viewing history information;
a display means for displaying the program information;
a program information hold means for holding a plurality of pieces of program information for a predetermined amount of information of programs; and
a display control means for displaying, on the display means, program information retrieved from the program information hold means in accordance with the retrieval history held by the retrieval history hold means.

**49.** A program information retrieval system comprised of a broadcasting apparatus for transmitting program information in units of programs and a reception apparatus for receiving the program information, retrieving program information from the received program information, and displaying the retrieved program information, wherein the program information characterizes each program, and each piece of program information is related to a program,
the broadcasting apparatus comprising:
a program information hold means for holding a plurality of pieces of program information for a predetermined amount of information of programs;
a viewing history hold means for holding the viewing history information which includes viewing histories for each program;
a link information adding means for generating link information which links each piece of the program information held by the program information hold means to other pieces pf the program information based on the viewing history held by the viewing history hold means, and adding the generated link information to each piece of the program information; and
a transmission means for transmitting the program information including the link information generated by the link information adding means,
the reception apparatus comprising:
a reception means for receiving the program information transmitted by the transmission means;
a display means for displaying the program information; and
a display control means for displaying, on the display means, program information retrieved from the program information hold means in accordance with the link information included in the program information received by the reception means.

**50.** A broadcasting apparatus for transmitting program information information in units of programs, wherein each piece of program information is related to a program, the program information retrieval method comprising:
a program information acquisition step for acquiring a plurality of pieces of program information for a predetermined amount of information of programs;
a viewing history acquisition step for acquiring a viewing history of programs; and
a display control step for displaying the plurality of pieces of program information on the display apparatus in accordance with the viewing history acquired in the viewing history acquisition step.

**52.** The program information retrieval method of Claim 51, wherein
each of the plurality of pieces of program information acquired in the program information acquisition step is composed of a plurality of program attributes including a program name, wherein
In the viewing history acquisition step, a viewing frequency for each program attribute of programs having been viewed by a user is calculated and the calculated viewing frequency for each program attribute is acquired.

**53.** A computer-readable recording medium storing a program information retrieval program for allowing a computer to execute a method for retrieving program information characterizing programs in units of programs and displaying on a display apparatus the retrieved program information in units of programs, wherein each piece of program information is related to a program, the program information retrieval program comprising:
a program information acquisition step for acquiring a plurality of pieces of program information for a predetermined amount of information of programs;
a viewing history acquisition step for acquiring a viewing history of programs; and
a display control step for displaying the plurality of pieces of program information on the display apparatus in accordance with the viewing history acquired in the viewing history acquisition step.

**54.** The computer-readable recording medium of Claim 53, wherein
each of the plurality of pieces of program information acquired in the program information acquisition step is composed of a plurality of program attributes including a program name, wherein
In the viewing history acquisition step, a viewing frequency for each program attribute of programs having been viewed by a user is calculated and the calculated viewing frequency for each program attribute is acquired.

**55.** A program information retrieval apparatus for continuously acquiring program information characterizing programs in units of programs and supporting a program selection, the program information retrieval apparatus comprising:
a program information acquisition means for continuously acquiring latest program information;
a program information hold means for holding the program information acquired by the program information acquisition means and updating the program information with latest program information each time the program information acquisition means acquires latest program information;
a condition reception means for receiving a selection condition input by a user, the selection condition being used for selecting programs;
a condition hold means for holding the selection condition received by the condition reception means;
a candidate program information extract means for extracting candidate program information from the program information held by the program information hold means each time the program information is updated, the candidate program information being an object of judgment with the selection condition;
a condition judgment means for judging whether the candidate program information extracted by the candidate program information extract means satisfies the selection condition; and
an output means for outputting at least one of: candidate program information judged to satisfy the selection condition by the condition judgment means; program names corresponding to the candidate program information judged to satisfy the selection condition; and information identifying programs related to the candidate program information judged to satisfy the selection condition.

**56.** The program information retrieval apparatus of Claim 55, wherein
the candidate program information extracted by the candidate program information extract means includes numeral values,
the selection condition received by the condition reception means is a formula, and
the condition judgment means judges whether the candidate program information satisfies the selection condition by substituting the numeral values into the formula and performing a calculation using the formula.

**57.** The program information retrieval apparatus of Claim 56 further comprising:
a display means for displaying the candidate program information and the program names output by the output means.

**58.** The program information retrieval apparatus of Claim 56, wherein
the program information held by the program information hold means includes broadcast start times of each program,
the candidate program information extract means further extracts broadcast start times of programs related to the candidate program information,
the program information retrieval apparatus further comprises:
a clock means for holding a current time;
a broadcast judgment means for compares each broadcast start time extracted by the candidate program information extract means with the current time held by the clock means when the output means outputs the information identifying the programs related to the condition-satisfying candidate program information, and judging that each program identified by the information has not started to be broadcast when its broadcast start time is later than the current time;
a reservation means for acquiring information identifying each program judged not to have started to be broadcast by the broadcast judgment means, and reserving each program identified by the information for either of receiving and video recording.

**59.** The program information retrieval apparatus of Claim 58, wherein
the candidate program information extract means further extracts broadcast end times of programs related to the candidate program information,
the broadcast judgment means further compares each broadcast end time extracted by the candidate program information extract means with the current time held by the clock means when the output means outputs the information identifying the programs related to the condition-satisfying candidate program information, and judges that each program identified by the information is being broadcast when its broadcast start time is earlier and its broadcast end time is later than the current time,
the program information retrieval apparatus further comprises:
a reception/recording means for acquiring information identifying each program judged to be being broadcast by the broadcast judgment means, and either of receiving and video-recording each program identified by the information.

**60.** The program information retrieval apparatus of Claim 56, wherein
the program information held by the program information hold means includes broadcast start times of each program,
the candidate program information extract means further extracts broadcast start times of programs related to the candidate program information,
the program information retrieval apparatus further comprises:
a clock means for holding a current time; and
a broadcast judgment means for compares each broadcast start time extracted by the candidate program information extract means with the current time held by the clock means when the output means outputs the information identifying the programs related to the condition-satisfying candidate program information, and judging that each program identified by the information has not started to be broadcast when its broadcast start time is later than the current time, wherein
the condition judgment means judges whether the candidate program information extracted by the candidate program information extract means satisfies the selection condition immediately before broadcast start times of programs related to the candidate program information based on the latest program information when the broadcast judgment means judges that the programs have not started to be broadcast.

**61.** The program information retrieval apparatus of Claim 55, wherein
each piece of the candidate program information extracted by the candidate program information extract means includes a program content field,
the selection condition received by the condition reception means is a key word, and
the condition judgment means judges that each piece of the candidate program information satisfies the selection condition when its program content field includes the key word.

**62.** The program information retrieval apparatus of Claim 61 further comprising:
a display means for displaying the candidate program information and the program names output by the output means.

**63.** The program information retrieval apparatus of Claim 61, wherein
the program information held by the program information hold means includes broadcast start times of each program,
the candidate program information extract means further extracts broadcast start times of programs related to the candidate program information,
the program information retrieval apparatus further comprises:
a clock means for holding a current time;
a broadcast judgment means for compares each broadcast start time extracted by the candidate program information extract means with the current time held by the clock means when the output means outputs the information identifying the programs related to the condition-satisfying candidate program information, and judging that each program identified by the information has not started to be broadcast when its broadcast start time is later than the current time;
a reservation means for acquiring information identifying each program judged not to have started to be broadcast by the broadcast judgment means, arid reserving each program identified by the information for either of receiving and video recording.

**64.** The program information retrieval apparatus of Claim 63, wherein
the candidate program information extract means further extracts broadcast end times of programs related to the candidate program information,
the broadcast judgment means further compares each broadcast end time extracted by the candidate program information extract means with the current time held by the clock means when the output means outputs the information identifying the programs related to the condition-satisfying candidate program information, and judges that each program identified by the information is being broadcast when its broadcast start time is earlier and its broadcast end time is later than the current time,
the program information retrieval apparatus further comprises:
a reception/recording means for acquiring information identifying each program judged to be being broadcast by the broadcast judgment means, and either of receiving and video-recording each program identified by the information.

**65.** The program information retrieval apparatus of Claim 61, wherein
the program information held by the program information hold means includes broadcast start times of each program,
the candidate program information extract means further extracts broadcast start times of programs related to the candidate program information,
the program information retrieval apparatus further comprises:
a clock means for holding a current time; and
a broadcast judgment means for compares each broadcast start time extracted by the candidate program information extract means with the current time held by the clock means when the output means outputs the information identifying the programs related to the condition-satisfying candidate program information, and judging that each program identified by the information has not started to be broadcast when its broadcast start time is later than the current time, wherein
the condition judgment means judges whether the candidate program information extracted by the candidate program information extract means satisfies the selection condition immediately before broadcast start times of programs related to the candidate program information based on the latest program information when the broadcast judgment means judges that the programs have not started to be broadcast.

**66.** The program information retrieval apparatus of Claim 55, wherein
each piece of the candidate program information extracted by the candidate program information extract means includes one or more character names,
the selection condition received by the condition reception means is a character name, and
the condition judgment means judges that each piece of the candidate program information satisfies the selection condition when it includes the character name being the selection condition.

**67.** The program information retrieval apparatus of Claim 66 further comprising:
a display means for displaying the candidate program information and the program names output by the output means.

**68.** The program information retrieval apparatus of Claim 66, wherein
the program information held by the program information hold means includes broadcast start times of each program,
the candidate program information extract means further extracts broadcast start times of programs related to the candidate program information,
the program information retrieval apparatus further comprises:
a clock means for holding a current time;
a broadcast judgment means for compares each broadcast start time extracted by the candidate program information extract means with the current time held by the clock means when the output means outputs the information identifying the programs related to the condition-satisfying candidate program information, and judging that each program identified by the information has not started to be broadcast when its broadcast start time is later than the current time;
a reservation means for acquiring information identifying each program judged not to have started to be broadcast by the broadcast judgment means, and reserving each program identified by the information for either of receiving and video recording.

**69.** The program information retrieval apparatus of Claim 68, wherein
the candidate program information extract means further extracts broadcast end times of programs related to the candidate program information,
the broadcast judgment means further compares each broadcast end time extracted by the candidate program information extract means with the current time held by the clock means when the output means outputs the information identifying the programs related to the condition-satisfying candidate program information, and judges that each program identified by the information is being broadcast when its broadcast start time is earlier and its broadcast end time is later than the current time,
the program information retrieval apparatus further comprises:
a reception/recording means for acquiring information identifying each program judged to be being broadcast by the broadcast judgment means, and either of receiving and video-recording each program identified by the information.

**70.** The program information retrieval apparatus of Claim 66, wherein
the program information held by the program information hold means includes broadcast start times of each program,
the candidate program information extract means further extracts broadcast start times of programs related to the candidate program information,
the program information retrieval apparatus further comprises:
a clock means for holding a current time; and
a broadcast judgment means for compares each broadcast start time extracted by the candidate program information extract means with the current time held by the clock means when the output means outputs the information identifying the programs related to the condition-satisfying candidate program information, and judging that each program identified by the information has not started to be broadcast when its broadcast start time is later than the current time, wherein
the condition judgment means judges whether the candidate program information extracted by the candidate program information extract means satisfies the selection condition immediately before broadcast start times of programs related to the candidate program information based on the latest program information when the broadcast judgment means judges that the programs have not started to be broadcast.

**71.** The program information retrieval apparatus of Claim 55 further comprising:
a candidate program receiving means for displaying the program information held by the program information hold means and receiving a specification of a candidate program input by the user; and
a program identifier hold means for holding a program identifier identifying the candidate program, wherein
the candidate program information extract means extracts candidate program information of the candidate program from the program information held by the program information hold means each time the program information is updated.

**72.** A program information retrieval method for continuously acquiring program information characterizing programs in units of programs and supporting a program selection, the program information retrieval method comprising:
a program information acquisition step for continuously acquiring latest program information;
a program information hold step for storing the program information acquired by the program information acquisition means in a storage means and updating the program information with latest program information each time latest program information is acquired in the program information acquisition step;
a condition reception step for receiving a selection condition input by a user, the selection condition being used for selecting programs;
a condition hold step for storing the selection condition received in the condition reception step in a storage means;
a candidate program information extract step for extracting candidate program information from the program information stored in the program information hold step each time the program information is updated, the candidate program information being an object of judgment with the selection condition;
a condition judgment step for judging whether the candidate program information extracted in the candidate program information extract step satisfies the selection condition; and
an output step for outputting at least one of: candidate program information judged to satisfy the selection condition in the condition judgment step; program names corresponding to the candidate program information judged to satisfy the selection condition; and information identifying programs related to the candidate program information judged to satisfy the selection condition.

**73.** A computer-readable recording medium storing a program information retrieval program for allowing a computer to execute a method for continuously acquiring program information characterizing programs in units of programs and supporting a program selection, the program information retrieval medium comprising:
a program information acquisition step for continuously acquiring latest program information;
a program information hold step for storing the program information acquired by the program information acquisition means in a storage means and updating the program information with latest program information each time latest program information is acquired in the program information acquisition step;
a condition reception step for receiving a selection condition input by a user, the selection condition being used for selecting programs;
a condition hold step for storing the selection condition received in the condition reception step in a storage means;
a candidate program information extract step for extracting candidate program information from the program information stored in the program information hold step each time the program information is updated, the candidate program information being an object of judgment with the selection condition;
a condition judgment step for judging whether the candidate program information extracted in the candidate program information extract step satisfies the selection condition; and
an output step for outputting at least one of: candidate program information judged to satisfy the selection condition in the condition judgment step; program names corresponding to the candidate program information judged to satisfy the selection condition; and information identifying programs related to the candidate program information judged to satisfy the selection condition.

**74.** A program information retrieval apparatus for generating personal program information for each user from program information each piece of which includes program identification information, a program broadcast time, and program content information, the program information retrieval apparatus comprising:
a program information hold means for holding the program information of a plurality of programs;
a priority information hold means for holding priority information for each user, each piece of the priority information being composed of a priority condition reflecting taste of a user and a priority level;
a priority level assigning means for assigning a priority level to each piece of the program information held by the program information hold means that satisfies a priority condition included in a same piece of the priority information, and relating each piece of the priority-level-assigned program information to its program identification information; and
a personal program information generating means for generating personal program information for each user by extracting program identification information of programs whose broadcast times overlap each other totally or partially, extracting priority levels related to the extracted program identification information, assigning a priority to each piece of the extracted program identification information in accordance with the extracted priority levels, and arranging the program information of the plurality of programs held by the program information hold means.

**75.** The program information retrieval apparatus of Claim 74, wherein
the priority condition is a certain character sequence,
each piece of the program information includes a character sequence representing a content of a corresponding program, and
the priority level assigning means judges that a piece of the program information satisfies the priority condition when the character sequence overlaps the certain character sequence totally or partially.

**76.** The program information retrieval apparatus of Claim 75, wherein
the personal program information generating means includes:
an extracting means for extracting program identification information of programs whose broadcast times overlap each other totally or partially, and extracting priority levels related to the extracted program identification information;
an assigning means for assigning a priority to each piece of the extracted program identification information in accordance with the extracted priority levels; and
an arranging means for arranging the program information of the plurality of programs held by the program information hold means.

**77.** The program information retrieval apparatus of Claim 76 further comprising:
a display means for displaying the personal program information generated by the personal program information generating means.

**78.** The program information retrieval apparatus of Claim 75, wherein
the personal program information generating means includes:
an extracting means for extracting program identification information of programs whose broadcast times includes an arbitrary time, and extracting priority levels related to the extracted program identification information;
an assigning means for assigning a priority to each piece of the extracted program identification information in accordance with the extracted priority levels; and
an arranging means for arranging the program information of the plurality of programs held by the program information hold means.

**79.** The program information retrieval apparatus of Claim 78 further comprising:
a display means for displaying the personal program information generated by the personal program information generating means.

**80.** The program information retrieval apparatus of Claim 75, wherein
the personal program information generating means includes:
an extracting means for extracting program identification information of programs whose broadcast times includes an arbitrary time unit totally or partially, and extracting priority levels related to the extracted program identification information;
an assigning means for assigning a priority to each piece of the extracted program identification information in accordance with the extracted priority levels; and
an arranging means for arranging the program information of the plurality of programs held by the program information hold means.

**81.** The program information retrieval apparatus of Claim 80 further comprising:
a display means for displaying the personal program information generated by the personal program information generating means.

**82.** The program information retrieval apparatus of Claim 75, wherein
each broadcast time includes a broadcast start time, and
the personal program information generating means includes:
an extracting means for extracting program identification information of programs whose broad cast start times fall into a predetermined time range including a broad cast start time of an arbitrary program, and extracting priority levels related to the extracted program identification information;
an assigning means for assigning a priority to each piece of the extracted program identification information in accordance with the extracted priority levels; and
an arranging means for arranging the program information of the plurality of programs held by the program information hold means.

**83.** The program information retrieval apparatus of Claim 82 further comprising:
a display means for displaying the personal program information generated by the personal program information generating means.

**84.** The program information retrieval apparatus of Claim 75, wherein
each broadcast time includes a broadcast start time and a broadcast end time, and
the personal program information generating means includes:
an extracting means for extracting program identification information of programs whose broad cast end times fall into a predetermined time range including a broad cast start time of an arbitrary program, and extracting priority levels related to the extracted program identification information;
an assigning means for assigning a priority to each piece of the extracted program identification information in accordance with the extracted priority levels; and
an arranging means for arranging the program information of the plurality of programs held by the program information hold means.

**85.** The program information retrieval apparatus of Claim 84 further comprising:
a display means for displaying the personal program information generated by the personal program information generating means.

**86.** The program information retrieval apparatus of Claim 75, wherein
each piece of the program information includes rerun information which indicates whether a corresponding program is a rerun program, and
the personal program information generating means assigns lower priorities to rerun programs than other programs.

**87.** The program information retrieval apparatus of Claim 75, wherein
each piece of the program information includes continuous broadcast information which indicates whether a corresponding program is a continuously broadcast program, and
the personal program information generating means assigns lower priorities to continuously broadcast programs than other programs.

**88.** A program information retrieval method for generating personal program information for each user from program information each piece of which includes program identification information, a program broadcast time, and program content information, the program information retrieval method comprising:
a program information acquisition step for acquiring the program information of a plurality of programs;
a priority information acquisition step for acquiring priority information for each user, each piece of the priority information being composed of a priority condition reflecting taste of a user and a priority level;
a priority level assigning step for assigning a priority level to each piece of the program information acquired in the program information acquisition step that satisfies a priority condition included in a same piece of the priority information, and relating each piece of the priority-level-assigned program information to its program identification information; and
a personal program information generating step for generating personal program information for each user by extracting program identification information of programs whose broadcast times overlap each other totally or partially, extracting priority levels related to the extracted program identification information, assigning a priority to each piece of the extracted program identification information in accordance with the extracted priority levels, and arranging the program information of the plurality of programs acquired in the program information acquisition step.

**89**. A computer-readable recording medium storing a program information retrieval program for allowing a computer to execute a method for generating personal program information for each user from program information each piece of which includes program identification information, a program broadcast time, and program content information, the program information retrieval medium comprising:
a program information acquisition step for acquiring the program information of a plurality of programs;
a priority information acquisition step for acquiring priority information for each user, each piece of the priority information being composed of a priority condition reflecting taste of a user and a priority level;
a priority level assigning step for assigning a priority level to each piece of the program information acquired in the program information acquisition step that satisfies a priority condition included in a same piece of the priority information, and relating each piece of the priority-level-assigned program information to its program identification information; and
a personal program information generating step for generating personal program information for each user by extracting program identification information of programs whose broadcast times overlap each other totally or partially, extracting priority levels related to the extracted program identification information, assigning a priority to each piece of the extracted program identification information in accordance with the extracted priority levels, and arranging the program information of the plurality of programs acquired in the program information acquisition step.
